(19) Europäisches Patentamt
European Patent Office
Office européen des brevets

(11) **EP 4 756 595 A1**

(12) **EUROPEAN PATENT APPLICATION**
published in accordance with Art. 153(4) EPC

(43) Date of publication:
**10.06.2026 Bulletin 2026/24**

(21) Application number: **24909754.4**

(22) Date of filing: **01.08.2024**

(51) International Patent Classification (IPC):
***G06F 3/0488*** (2022.01)

(52) Cooperative Patent Classification (CPC):
**G06F 3/0485; G06F 3/0488**

(86) International application number:
**PCT/CN2024/109301**

(87) International publication number:
**WO 2025/138800 (03.07.2025 Gazette 2025/27)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **29.12.2023 CN 202311873935**

(71) Applicant: **Honor Device Co., Ltd.
Shenzhen, Guangdong 518040 (CN)**

(72) Inventor: **LI, Siwen
Shenzhen, Guangdong 518040 (CN)**

(74) Representative: **MERH-IP Matias Erny Reichl
Hoffmann
Patentanwälte PartG mbB
Paul-Heyse-Straße 29
80336 München (DE)**

(54) **SCROLLING DISPLAY METHOD, DEVICE, CHIP SYSTEM, AND STORAGE MEDIUM**

(57)    Embodiments of this application provide a scrolling display method, a device, a chip system, and a storage medium, and relate to the field of communication technologies. In this application, when a finger of a user slides up and down in a gallery, a RecyclerView may scroll in a same direction as a single-finger slide direction. When a top or a bottom of the RecyclerView is reached through scrolling, an electronic device moves the entire RecyclerView in a direction opposite to the single-finger slide direction, and fills the RecyclerView with content again. In this way, the electronic device only needs to fill the RecyclerView with the content after a movement, and does not need to perform size measurement and position calculation on each ItemView of the RecyclerView again. Therefore, a data processing procedure is optimized, data processing time during image scrolling in a gallery is shortened, and a frame drop problem during slide-up/down in the gallery is resolved.

FIG. 13A

FIG. 13B

TO FIG. 13C

A current scenario is a slide-up, and y2=2200<2400.
Move the custom RecyclerView downward by one row, that is, D2=400, and refresh an index and content of each item.

← Actual AP →

| | | | |
|---|---|---|---|
| | 151 | 152 | 153 |
| | 154 | 155 | 156 |
| | 157 | 158 | 159 |
| | 160 | 161 | 162 |
| | 163 | 164 | 165 | X
| | 166 | 167 | 168 |
| | 169 | 170 | 171 |
| | 172 | 173 | 174 |
| | 175 | 176 | 177 |
| | 178 | 179 | 180 |
| | 181 | 182 | 183 |

Y

FIG. 13C

LP2=305<LPmax=835, that is, a last row of the custom RecyclerView is not a final row, position correction is not needed, and D3=0.

LP1=251

← Actual AP →

| | | | |
|---|---|---|---|
| | 151 | 152 | 153 |
| | 154 | 155 | 156 |
| | 157 | 158 | 159 |
| | 160 | 161 | 162 |
| | 163 | 164 | 165 | X
| | 166 | 167 | 168 |
| | 169 | 170 | 171 |
| | 172 | 173 | 174 |
| | 175 | 176 | 177 |
| | 178 | 179 | 180 |
| | 181 | 182 | 183 |

Not visible to users

Y

LP2=305

FIG. 13D

Final movement distance dy+D1+D3=−300, and Refresh content displayed on the screen.

← Actual AP →

| | | | |
|---|---|---|---|
| | 151 | 152 | 153 |
| | 154 | 155 | 156 |
| | 157 | 158 | 159 |
| | 160 | 161 | 162 |
| | 163 | 164 | 165 | X
| | 166 | 167 | 168 |
| | 169 | 170 | 171 |
| | 172 | 173 | 174 |
| | 175 | 176 | 177 |
| | 178 | 179 | 180 |
| | 181 | 182 | 183 |

Y

FIG. 13E

## Description

This application claims priority to Chinese Patent Application No. 202311873935.6, filed with the China National Intellectual Property Administration on December 19, 2023 and entitled "SCROLLING DISPLAY METHOD, DEVICE, CHIP SYSTEM, AND STORAGE MEDIUM", which is incorporated herein by reference in its entirety.

## TECHNICAL FIELD

This application relates to the field of terminal technologies, and in particular, to a scrolling display method, a device, a chip system, and a storage medium.

## BACKGROUND

With rapid development of a terminal technology, storage space of a mobile phone is increasingly large. A user may shoot a large quantity of photos and videos with the mobile phone, and store the photos and the videos in a gallery of the mobile phone. When there are many photos and videos in the gallery, a screen of the mobile phone may not be able to present all the photos and videos at the same time.

A related technology provides a recycler view (RecyclerView)-based image scrolling solution. When the user slides up and down in the gallery, a RecyclerView scrolls up and down accordingly. When a top or a bottom of the RecyclerView is reached through scrolling, size measurement and position calculation need to be performed again on each item view in the RecyclerView. The entire process is time-consuming, resulting in frame drops during image scrolling.

## SUMMARY

This application provides a scrolling display method, a device, a chip system, and a storage medium, to resolve a frame drop problem during image scrolling in a gallery.

To achieve the foregoing objective, the following technical solutions are used in this application.

According to a first aspect, an embodiment of this application provides a scrolling display method. The method is applied to an electronic device having a display screen. The method includes:

displaying, within the display screen, first content that is based on a RecyclerView, where a size of the RecyclerView is greater than a size of the display screen, a distance between a bottom edge of the display screen and a bottom edge of the RecyclerView is a first distance, and edges of the RecyclerView are located outside the display screen; receiving, from a user, a first operation of sliding on the display screen by a second distance along a first direction, where the first direction is a direction from the bottom edge of the display screen to a top edge of the display screen, and the second distance is greater than the first distance; and moving the RecyclerView by a third distance along a second direction in response to the first operation, and displaying, within the display screen, second content that is based on the RecyclerView, where the second direction is opposite to the first direction, and the third distance is greater than or equal to a difference between the second distance and the first distance.

In the foregoing solution, when a finger of the user slides up on the display screen by the second distance, if the RecyclerView is moved in a single-finger slide direction by the second distance, because the second distance is greater than the distance between the bottom edge of the display screen and the bottom edge of the RecyclerView, the bottom edge of the RecyclerView is moved into the display screen. The RecyclerView scrolls in a direction opposite to the single-finger slide direction, so that a blank display region between the bottom edge of the RecyclerView and the bottom edge of the display screen can be avoided. In this process, a size and a position of each item view in the RecyclerView do not need to be re-measured. Therefore, data processing time is shortened, and a frame drop problem is resolved.

In a possible implementation, the RecyclerView is a custom RecyclerView. The custom RecyclerView includes a plurality of item views (ItemViews) in a grid form, each ItemView corresponds to one image view (ImageView), and each ImageView is used to display one image. The custom RecyclerView may be considered as a container for displaying an image. In an example, when the user performs a scale operation in a gallery interface, the custom RecyclerView is scaled up or down accordingly. In another example, when a single finger of the user slides up and down, a custom RecyclerView control may control the custom RecyclerView to scroll in a same direction as the single-finger slide direction. When a top or a bottom of the custom RecyclerView is reached through scrolling, the custom RecyclerView control moves the entire custom RecyclerView in the direction opposite to the single-finger slide direction, and fills the custom RecyclerView with content again.

For example, the custom RecyclerView relates to two sizes.

One is an original size, that is, an initialized size, of the custom RecyclerView. No matter a quantity of columns of images included in a display region of the custom RecyclerView, the original size of the custom RecyclerView remains unchanged. For example, when the size of the display screen is 1200 pixels in width*2800 pixels in height, the original size of the custom RecyclerView is 8400 pixels in width*20000 pixels in height, and an original size of each ItemView in the custom RecyclerView is 400 pixels in width*400 pixels in height.

The other is an actual display size of the custom RecyclerView. When the display region of the custom RecyclerView includes a different quantity of columns, a different quantity of columns of ItemViews are displayed on the display screen. Therefore, the original size of the custom RecyclerView needs to be multiplied by a scale factor (the scale factor is less than or equal to 1.0), to obtain a reduced display size, and then the scaled-down custom RecyclerView is sent to the display screen for display. For example, a current level is N, a minimum level is M, and the original size of the custom RecyclerView is (x, y). In this case, a display size of the custom RecyclerView at the current level is (x*M/N, y*M/N), where x represents an original width of the custom RecyclerView, y represents an original height of the custom RecyclerView, and M/N represents the scale factor.

In a possible implementation, the custom RecyclerView has two indexes: One is an actual layout position index representing a position of a grid in the custom RecyclerView, and the other is an actual adapter position index representing a serial number of an image displayed in the grid of the custom RecyclerView. Unlike native logic of an Android system in which a value of a layout position index cannot be customized, the custom RecyclerView may change the actual layout position index value and the actual adapter position index value based on a scale factor, a scale center, a scrolling operation, and the like. During scaling, an actual adapter position index of an ItemView corresponding to a two-finger center remains unchanged, but an actual adapter position index of another ItemView may be renumbered. Consequently, actual adapter position indexes of the entire custom RecyclerView are not necessarily consecutive.

In a possible implementation, the RecyclerView may include M rows and N columns of ItemViews, each ItemView includes one ImageView, and each ImageView is used to display one image or one table. Correspondingly, the first content is a first grid interface, the second content is a second grid interface, and quantities of columns of images in the first grid interface and the second grid interface are the same. Alternatively, the first content is a first list, the second content is a second list, and quantities of table columns of the first list and the second list are the same.

In a possible implementation, the ItemView of the recycler view is used to display an image in an album. Before the moving the RecyclerView by the third distance along the second direction, the method may further include: determining the third distance based on the bottom edge of the RecyclerView, the bottom edge of the display screen, the second distance, and a side length of the item view in the RecyclerView.

In a possible implementation, before the RecyclerView is moved in response to the first operation, and after the RecyclerView is moved in response to the first operation, a last row of images of the RecyclerView may not include a last image in the album. An example in which the first content is the first grid interface is used. Before the displaying, within the display screen, the second content that is based on the RecyclerView, the method may further include: subtracting a first value from an actual adapter position AP index value corresponding to each item view in the RecyclerView. The AP value represents a serial number of the image displayed in the item view. The first value is determined based on the bottom edge of the recycler view, the bottom edge of the display screen, the second distance, the side length of the item view in the RecyclerView, and a quantity of columns of the first grid interface.

In the foregoing solution, the electronic device first moves the custom RecyclerView downward, and then adds a first difference to the actual adapter position index corresponding to the ItemView of the custom RecyclerView, so that the user visually sees that a position of each image on the display screen remains unchanged.

In a possible implementation, the distance between the bottom edge of the display screen and the bottom edge of the RecyclerView is a fourth distance, and the edges of the RecyclerView are located outside the display screen. The method may further include: receiving, from the user, a second operation of sliding on the display screen by a fifth distance along the first direction, where the fifth distance is greater than the fourth distance; and moving the RecyclerView by a sixth distance along the first direction in response to the second operation, and displaying, within the display screen, third content that is based on the RecyclerView, where the sixth distance is equal to the difference between the second distance and the first distance, and the distance between the bottom edge of the display screen and the bottom edge of the RecyclerView is 0. Before the RecyclerView is moved in response to the second operation, and after the RecyclerView is moved in response to the second operation, the last row of images of the RecyclerView may include the last image in the album.

In the foregoing solution, the last row of the custom RecyclerView is a last row of the album. When the finger of the user slides up on the display screen by the fifth distance, if the bottom edge of the RecyclerView is moved into the display screen, the RecyclerView may be enabled to scroll down to align the bottom edge of the RecyclerView with the bottom edge of the display screen, ensuring that last few images in the album can be fully displayed.

In a possible implementation, the distance between the bottom edge of the display screen and the bottom edge of the RecyclerView is a seventh distance, and the edges of the RecyclerView are located outside the display screen. The method may further include: receiving, from the user, a third operation of sliding on the display screen by an eighth distance along the first direction, where the eighth distance is greater than the seventh distance; and moving the RecyclerView by a ninth distance along the first direction in response to the third operation, and displaying, within the display screen, fourth content that is based on the RecyclerView, where the ninth distance is less than a difference between the eighth distance and the seventh distance, and the distance between the bottom edge of the display screen and the bottom edge of the RecyclerView is 0. Before the RecyclerView is moved in response to the third operation, the last row of images of the RecyclerView may not include the last image in the album. After the RecyclerView is moved in response to the third operation, the last row of images of the RecyclerView may include the last image in the album.

For example, before the moving the RecyclerView by the sixth distance along the first direction, the method may further include: determining the sixth distance based on an LP value of a last item view of the RecyclerView, an LP value of a last image in the album, the side length of the item view in the RecyclerView, and a quantity of columns of the RecyclerView. The LP value represents a position of the item view in the RecyclerView.

In the foregoing solution, the last row of the custom RecyclerView is last few rows (not including the last row) of the album. When the finger of the user slides up quickly on the display screen, if the bottom edge of the RecyclerView is moved into the display screen, the RecyclerView may be enabled to scroll down to align the bottom edge of the RecyclerView with the bottom edge of the display screen. In addition, the last row of images of the RecyclerView is refreshed to the last few images in the album.

In a possible implementation, a distance between the top edge of the display screen and a top edge of the RecyclerView is a 10th distance, and the edges of the RecyclerView are located outside the display screen. The method may further include: receiving, from the user, a fourth operation of sliding on the display screen by an 11th distance along the second direction, where the 11th distance is greater than the 10th distance; and moving the RecyclerView by a 12th distance along the first direction in response to the fourth operation, and displaying, within the display screen, fifth content that is based on the RecyclerView, where the 12th distance is greater than or equal to a difference between the 11th distance and the 10th distance. Before the RecyclerView is moved in response to the fourth operation, and after the RecyclerView is moved in response to the fourth operation, a first row of images of the RecyclerView may not include a first image in the album.

Before the moving the RecyclerView by the 12th distance along the first direction, the method may further include: determining the 12th distance based on the top edge of the RecyclerView, the top edge of the display screen, the 11th distance, and the side length of the item view in the RecyclerView.

In the foregoing solution, when the finger of the user slides down on the display screen, if the RecyclerView is moved in the single-finger slide direction, the top edge of the RecyclerView may be moved into the display screen. The RecyclerView scrolls in the direction opposite to the single-finger slide direction, so that a blank display region between the top edge of the RecyclerView and the top edge of the display screen can be avoided. In this process, the size and the position of each item view in the RecyclerView do not need to be re-measured. Therefore, the data processing time is shortened, and the frame drop problem is resolved.

In a possible implementation, the fifth content is a third grid interface. Before the displaying, within the display screen, the second content that is based on the RecyclerView, the method may further include: subtracting a second value from the actual adapter position AP index value corresponding to each item view in the RecyclerView. The AP value represents the serial number of the image displayed in the item view. The second value is determined based on the top edge of the RecyclerView, the top edge of the display screen, the 11th distance, the side length of the item view in the RecyclerView, and a quantity of columns of the third grid interface.

In the foregoing solution, the electronic device first moves the custom RecyclerView upward, and then subtracts a second difference from the actual adapter position index corresponding to the ItemView of the custom RecyclerView, so that the user visually sees that the position of each image on the display screen remains unchanged.

In a possible implementation, a distance between the top edge of the display screen and a top edge of the RecyclerView is a 13th distance, and the edges of the RecyclerView are located outside the display screen. The method may further include: receiving, from the user, a fifth operation of sliding on the display screen by a 14th distance along the second direction, where the 14th distance is greater than the 13th distance; and moving the RecyclerView by a 15th distance along the second direction in response to the fifth operation, and displaying, within the display screen, sixth content that is based on the RecyclerView, where the 15th distance is less than a difference between the 14th distance and the 13th distance, and the distance between the top edge of the display screen and the top edge of the RecyclerView is 0. Before the RecyclerView is moved in response to the fifth operation, and after the RecyclerView is moved in response to the fifth operation, a first row of images of the RecyclerView may include a first image in the album.

In the foregoing solution, the first row of the custom RecyclerView is the first row of the album. When the finger of the user slides down on the display screen, if the top edge of the RecyclerView is moved into the display screen, the RecyclerView may be enabled to scroll up to align the top edge of the RecyclerView with the top edge of the display screen, ensuring that the first row of images of the album can be fully displayed.

In a possible implementation, a distance between the top edge of the display screen and a top edge of the RecyclerView is a 16th distance, and the edges of the RecyclerView are located outside the display screen. The method may further include: receiving, from the user, a sixth operation of sliding on the display screen by a 17th distance along the second direction, where the 17th distance is greater than the 16th distance; and moving the RecyclerView by an 18th distance along the second direction in response to the sixth operation, and displaying, within the display screen, seventh content that is based on the RecyclerView, where the 18th distance is less than a difference between the 17th distance and the 16th distance, and the distance between the top edge of the display screen and the top edge of the RecyclerView is 0. Before the RecyclerView is moved in response to the sixth operation, the first row of images of the RecyclerView may not include the first image in the album. After the RecyclerView is moved in response to the sixth operation, the first row of images of the RecyclerView may include the first image in the album.

For example, before the moving the RecyclerView by the 18th distance along the second direction, the method may further include: determining the 18th distance based on an actual layout position LP value of a first item view of the RecyclerView, an LP value of the first image in the album, the side length of the item view in the RecyclerView, and a quantity of columns of the RecyclerView. The LP value represents a position of the item view in the RecyclerView.

In the foregoing solution, the first row of the custom RecyclerView is first few rows (not including the first row) of the album. When the finger of the user slides down quickly on the display screen, if the top edge of the RecyclerView is moved into the display screen, the RecyclerView may be enabled to scroll up to align the top edge of the RecyclerView with the top edge of the display screen. In addition, the first row of images of the RecyclerView is refreshed to the first row of images of the album.

In a possible implementation, the custom RecyclerView may determine values of the actual layout position index value LP1 of the first ItemView and a minimum value LPmin=0 of the actual layout position index, to determine whether the actual layout position index value LP1 points to the first image in the album. If LP1>LPmin, it may be determined that the actual layout position index value LP1 does not point to the first image in the album, the first row of the album has yet not been reached through sliding, and a top ItemView of the custom RecyclerView may be further updated with more images with smaller actual AP values. Therefore, a top of the custom RecyclerView does not need to be aligned with a top of the display screen.

In a possible implementation, a distance between a left edge of the display screen and a left edge of the recycler view is a 19th distance, and the edges of the recycler view are located outside the display screen. The method may further include: receiving, from the user, a seventh operation of sliding on the display screen by a 20th distance along a third direction, where the third direction is a direction from the left edge of the display screen to a right edge of the display screen, and the 20th distance is greater than the 19th distance; and moving the RecyclerView by a 21st distance along a fourth direction in response to the seventh operation, and displaying, within the display screen, eighth content that is based on the RecyclerView, where the fourth direction is opposite to the third direction, and the 21st distance is greater than or equal to a difference between the 20th distance and the 19th distance.

In a possible implementation, a distance between a left edge of the display screen and a left edge of the recycler view is a 22nd distance, and the edges of the recycler view are located outside the display screen. The method may further include: receiving, from the user, a seventh operation of sliding on the display screen by a 23rd distance along a fourth direction, where the 23rd distance is greater than the 22nd distance; and moving the RecyclerView by a 24th distance along a third direction in response to the eighth operation, and displaying, within the display screen, ninth content that is based on the RecyclerView, where the 24th distance is greater than or equal to a difference between the 23rd distance and the 22nd distance.

In a possible implementation, when a single-finger slide operation is a single-finger slide-down operation, if the actual layout position index of the first item view does not point to the first image in the album, a movement distance of the custom RecyclerView may be calculated by using the following relational expression:

$$\min\left(\left\lceil \frac{y1-Y1}{m} \right\rceil * m, \left(\left\lceil \frac{LP1}{g\max} \right\rceil - \left\lceil \frac{LP\min}{g\max} \right\rceil \right) * m\right),$$

where $\left\lceil \dfrac{y1-Y1}{m} \right\rceil * m$ represents an estimated quantity of rows to be moved. $\left(\left\lceil \dfrac{LP1}{g\max} \right\rceil - \left\lceil \dfrac{LP\min}{g\max} \right\rceil \right) * m$ represents a quantity of actual movable rows, that is, a maximum quantity of rows of ItemViews that are allowed to be added at the top of the custom RecyclerView.

min() is a function for taking a minimum value, y1 represents top edge coordinates of the custom RecyclerView after movement along the second direction, Y1 represents top edge coordinates of the display screen, m represents a width or a height of a single item view in the custom RecyclerView, LP1 is an actual layout position index of a first image in the custom RecyclerView, LPmin is an actual layout position index of the first image in the album, and gmax represents a maximum level of the custom RecyclerView.

In a possible implementation, when a single-finger slide operation is a single-finger slide-up operation, if the actual layout position index of the first item view does not point to the last image in the album, a movement distance of the custom RecyclerView may be calculated by using the following relational expression:

$$\min\left(\left\lceil\frac{Y2-y2}{m}\right\rceil*m,\left(\left\lceil\frac{LP\,\max}{g\,\max}\right\rceil-\left\lceil\frac{LP2}{g\,\max}\right\rceil\right)*m\right).$$

$\left\lceil\dfrac{Y2-y2}{m}\right\rceil*m$ represents an estimated quantity of rows to be moved. $\left(\left\lceil\dfrac{LP\,\max}{g\,\max}\right\rceil-\left\lceil\dfrac{LP2}{g\,\max}\right\rceil\right)*m$ repre-

sents a quantity of actual movable rows, that is, a maximum quantity of rows of ItemViews that are allowed to be added at the bottom of the custom RecyclerView.

min() is a function for taking a minimum value, y2 represents bottom edge coordinates of the custom Recycler-View after movement along the first direction, Y2 represents bottom edge coordinates of the display screen, m represents a width or a height of a single item view in the RecyclerView, LP2 is an actual layout position index of a last image in the RecyclerView, LPmax is an actual layout position index of the last image in the album, and gmax represents a maximum level of the RecyclerView.

In a possible implementation, when the custom RecyclerView is scaled or scrolls up and down, the actual layout position index of the custom RecyclerView may change. When an actual LP of an ItemView (the first ItemView) at a top-left corner of the custom RecyclerView is equal to 0, it indicates that the first row of the album is already reached, and slide-up is no longer possible. When an actual LP of an ItemView (the last ItemView) at a bottom-right corner of the custom RecyclerView is equal to a maximum value LPmax of the actual layout position index, it indicates that the last row of the album is already reached, and slide-down is no longer possible.

For example, LPmax may be obtained by using any one of the following relational expressions:

$$LPmax = \left\lfloor\frac{p}{g}\right\rfloor*gmax\,;$$

and

$$LPmax = \left\lceil\frac{p}{g}\right\rceil*gmax\,.$$

LPmax represents the maximum value of the actual layout position index, p represents a total quantity of images in the album, g represents the current level of the custom RecyclerView (that is, a quantity of columns of ItemViews displayed on the display screen), and gmax represents a maximum level of the custom RecyclerView (that is, a total quantity of columns of ItemViews).

According to a second aspect, this application provides an apparatus. The apparatus includes a unit configured to perform the method in the first aspect. The apparatus may correspondingly perform the scrolling display method described in the first aspect. For related descriptions of the unit in the apparatus, refer to the descriptions in the first aspect. For brevity, details are not described herein again.

The method in the first aspect may be implemented by hardware, or may be implemented by hardware executing corresponding software. The hardware or the software includes one or more modules or units corresponding to the foregoing function, for example, a processing module or unit and a display module or unit.

According to a third aspect, this application provides an electronic device. The electronic device includes one or more processors and a memory. The memory is coupled to the one or more processors. The memory is configured to store computer program code. The computer program code includes computer instructions. The one or more processors invoke the computer instructions to enable the electronic device to perform the scrolling display method as described in any one of the first aspect and the possible implementations of the first aspect.

According to a fourth aspect, this application provides a computer-readable storage medium. The computer-readable storage medium includes computer instructions. When the computer instructions are run on an electronic device, the electronic device is enabled to perform the scrolling display method provided in any one of the first aspect and the possible implementations of the first aspect.

According to a fifth aspect, this application provides a computer program product. When the computer program product is run on a computer, the computer is enabled to perform the scrolling display method provided in any one of the first aspect and the possible implementations of the first aspect.

According to a sixth aspect, this application provides a chip system. The chip system is used in an electronic device. The chip system includes one or more processors. The one or more processors are configured to invoke computer instructions to enable the electronic device to perform the scrolling display method provided in any one of the first aspect and the possible implementations of the first aspect.

It may be understood that for beneficial effects that can be achieved by the apparatus according to the second aspect, the electronic device according to the third aspect, the computer-readable storage medium according to the fourth aspect, the computer program product according to the fifth aspect, and the chip system according to the sixth aspect provided above, refer to the beneficial effects in any one of the first aspect and the possible implementations of the first aspect. Details are not described herein again.

**BRIEF DESCRIPTION OF DRAWINGS**

FIG. 1 is a diagram of a software architecture of an electronic device according to an embodiment of this application;
FIG. 2 is a flowchart of a native RecyclerView-based image scrolling solution according to an embodiment of this application;
FIG. 3 is a diagram of an interface corresponding to a native RecyclerView-based image scrolling solution according to an embodiment of this application;
FIG. 4 is a diagram of a software architecture of an improved electronic device according to an embodiment of this application;
FIG. 5 is a diagram of a relationship between a custom RecyclerView, an ItemView, and an ImageView according to an embodiment of this application;
FIG. 6 is a diagram of performing a scale-down operation on a custom RecyclerView according to an embodiment of this application;
FIG. 7 is a diagram of actual layout position indexes and actual adapter position indexes in a scrolling scenario according to an embodiment of this application;
FIG. 8A, FIG. 8B, FIG. 8C, FIG. 8D, FIG. 8E, and FIG. 8F are diagrams of an application scenario of a custom RecyclerView-based gallery according to an embodiment of this application;
FIG. 9A, FIG. 9B, FIG. 9C, FIG. 9D, FIG. 9E, and FIG. 9F are diagrams of an application scenario of another custom RecyclerView-based gallery according to an embodiment of this application;
FIG. 10 is a diagram of an application scenario of another custom RecyclerView-based gallery according to an embodiment of this application;
FIG. 11 is a diagram of an application scenario of another custom RecyclerView-based gallery according to an embodiment of this application;
FIG. 12A, FIG. 12B, FIG. 12C, FIG. 12D, and FIG. 12E are diagrams of a custom RecyclerView-based image scrolling solution according to an embodiment of this application;
FIG. 13A, FIG. 13B, FIG. 13C, FIG. 13D, and FIG. 13E are diagrams of a custom RecyclerView-based image scrolling solution according to an embodiment of this application;
FIG. 14A, FIG. 14B, FIG. 14C, FIG. 14D, FIG. 14E, and FIG. 14F are diagrams of a custom RecyclerView-based image scrolling solution according to an embodiment of this application;
FIG. 15A, FIG. 15B, FIG. 15C, FIG. 15D, FIG. 15E, and FIG. 15F are diagrams of a custom RecyclerView-based image scrolling solution according to an embodiment of this application;
FIG. 16A, FIG. 16B, FIG. 16C, FIG. 16D, FIG. 16E, and FIG. 16F are diagrams of a custom RecyclerView-based image scrolling solution according to an embodiment of this application;
FIG. 17A, FIG. 17B, FIG. 17C, FIG. 17D, FIG. 17E, and FIG. 17F are diagrams of a custom RecyclerView-based image scrolling solution according to an embodiment of this application;
FIG. 18A, FIG. 18B, FIG. 18C, FIG. 18D, FIG. 18E, and FIG. 18F are diagrams of a custom RecyclerView-based image scrolling solution according to an embodiment of this application;
FIG. 19A, FIG. 19B, FIG. 19C, FIG. 19D, FIG. 19E, and FIG. 19F are diagrams of a custom RecyclerView-based image scrolling solution according to an embodiment of this application;
FIG. 20A, FIG. 20B, FIG. 20C, FIG. 20D, FIG. 20E, and FIG. 20F are flowcharts of a custom RecyclerView-based image scrolling method according to an embodiment of this application; and
FIG. 21 is a diagram of a hardware structure of an electronic device according to an embodiment of this application.

**DESCRIPTION OF EMBODIMENTS**

To make the objective, technical solutions, and advantages of embodiments of this application clearer, the technical solutions in embodiments of this application are clearly and completely described below with reference to accompanying drawings in embodiments of this application. Apparently, the described embodiments are a part rather than all of embodiments of this application.

Currently, a gallery application of a mobile phone may create a plurality of albums, such as Camera, Videos, Photos, Web disk, Selfies, Live photos, Long exposures, Slow motions, Screenshots, GIFs, and Favorites. Generally, a screen size of the mobile phone is limited. When there are many photos and videos in an album, the mobile phone may not be able to present all images in the album on a screen at the same time. In this case, a finger of a user may slide up and down on the screen, so that the mobile phone displays the images in the album in a scrolling manner on the screen.

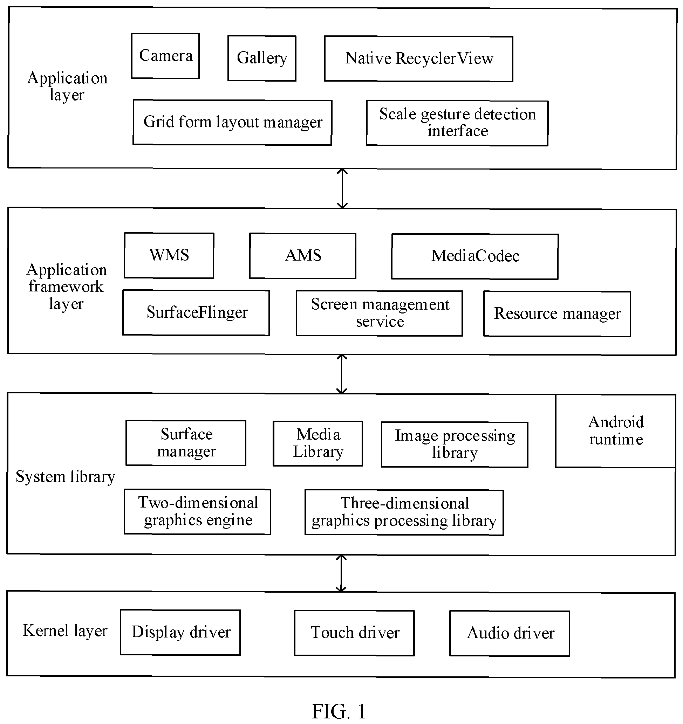

The following provides a native recycler view (RecyclerView)-based image scrolling solution with reference to FIG. 1 to FIG. 3.

For example, FIG. 1 is a diagram of a software architecture of an electronic device.

As shown in FIG. 1, the electronic device may use a layered architecture, so that software is divided into several layers, and each layer has a clear role and task. The layers communicate with each other through a software interface. In some embodiments, a software structure is sequentially divided into the following software layers from top to bottom: an application (application, APP) layer, an application framework (framework, FWK) layer, a system library, and a kernel layer. The software architecture is run on a hardware layer, and the hardware layer may include a screen, a sensor, and the like.

The application layer may include a series of application packages, such as a camera application, a gallery application, a grid form layout manager, a native RecyclerView, and a scale gesture detection interface (ScaleGesture-Detector). These applications may be native applications of an Android system. The camera application may invoke a camera to shoot photos and videos, and store the shot photos and videos in the gallery application. The gallery application not only can manage the photos and the videos, but also can manage screenshots, shared images, and the like. The native RecyclerView is responsible for calculating a movement distance and a movement direction based on received slide data, and transferring a scrolling event to the grid form layout manager. The grid form layout manager is responsible for creating one or more rows of new ItemViews at a top or a bottom of the native RecyclerView when the top or the bottom of the native RecyclerView is reached through scrolling, and performing size measurement, content filling, and position calculation again on each ItemView starting from a first row to a last row of the native RecyclerView. The ScaleGestureDetector is responsible for processing a scale operation. In an example, the ScaleGestureDetector may be a native interface of the native RecyclerView. When these application packages are run, each service module provided by the application framework layer may be accessed through an application programming interface (application programming interface, API), to execute a corresponding smart service.

It should be noted that in native logic of the Android system, the native RecyclerView has two indexes: One is a layout position (layout position, LP) index, which is an index established from the perspective of a layout manager (LayoutManager) and represents a position of a grid (grid) in the native RecyclerView. The other is an adapter position (real adapter position, AP) index representing a serial number of an image displayed in the grid of the native RecyclerView. In the native logic of the Android system, a value of the layout position index cannot be customized, and the adapter position index remains consecutively numbered.

The application framework layer provides the API and a programming framework for the application. The application framework layer includes some predefined functions. For example, the application framework layer may include a window manager (window manager service, WMS), an activity manager (activity manager service, AMS), a video codec (for example, MediaCodec), a SurfaceFlinger, a screen management service, and a resource manager.

The system library may include a plurality of functional modules such as a surface manager (surface manager), a media library (media library), a two-dimensional (2D) graphics engine (for example, SGL), and a three-dimensional (3D) graphics processing library (for example, OpenGL ES). Android runtime (Android Runtime) in the system library includes a kernel library and a virtual machine. The Android runtime is responsible for scheduling and managing the Android system. The kernel library includes two parts: One part is a function that needs to be invoked by a Java language, and the other part is a kernel library of Android. The application layer and the application framework layer are run on the virtual machine.

The kernel layer is a layer between hardware and software, and is a bottom part of the Android system. The kernel layer may include various driver (driver) interfaces, such as a display driver, an audio driver, and a touch driver.

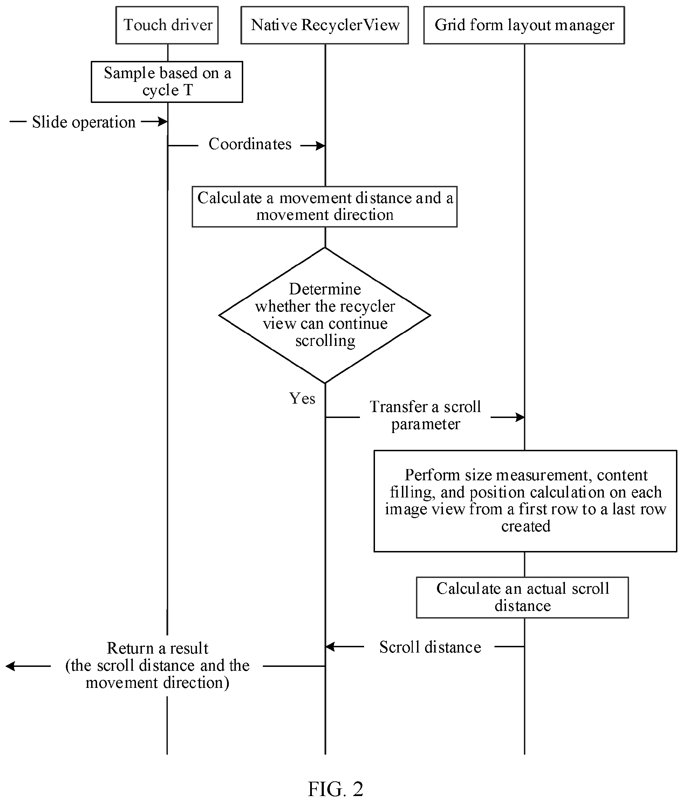

For example, FIG. 2 is a flowchart of the native RecyclerView-based image scrolling solution.

As shown in FIG. 2, the touch driver may sample a touch operation based on a cycle T. An example in which the touch driver performs sampling for 240 times per second is used. The cycle T=1/240=4.16 ms. In other words, the touch driver samples touch data every 4.16 ms. The touch driver may determine a touch position based on a voltage change acquired in each cycle. The touch position is also referred to as a touch point, a touch position, or the like. When a finger of a user slides on a touchscreen, the touchscreen may transfer acquired coordinates of the touch position to the native RecyclerView. The native RecyclerView calculates a movement distance and a movement direction based on the coordinates. Then, the native RecyclerView determines, based on the movement distance and the movement direction, whether a top edge and a bottom edge of the native RecyclerView are located within the screen, that is, determines whether the native RecyclerView has scrolled to a top or a bottom of the screen. If the native RecyclerView has scrolled to the top or the bottom of the screen, and cannot continue scrolling, the native RecyclerView notifies the gallery application that the native RecyclerView cannot continue scrolling. If the native RecyclerView has not scrolled to the top or the bottom yet, the native RecyclerView sends a scroll parameter such as a scroll distance and the movement direction to the grid form layout manager. The grid form layout manager creates a new row of item views at the top (corresponding to scrolling down) or the bottom (corresponding to scrolling up) of the native RecyclerView, and performs size measurement, content filling, and position calculation again on each item view starting from the first row to the last row of the native RecyclerView. Then, the grid form layout manager calculates an actual scroll distance of the native RecyclerView, and returns the actual scroll distance to a recycler view control. The recycler view control returns the scroll distance, the movement direction, and the like to the gallery application.

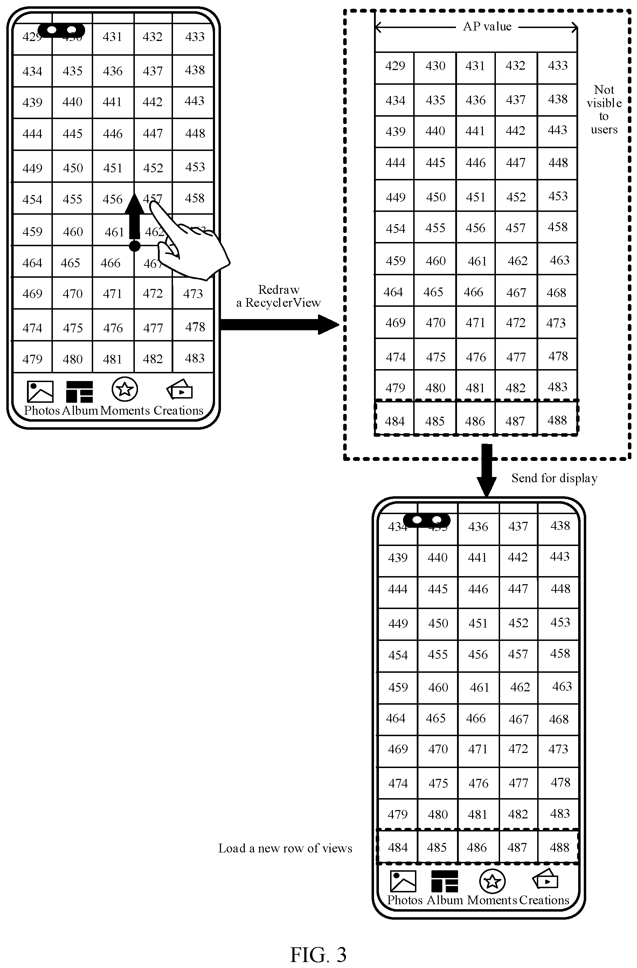

For example, FIG. 3 is a diagram of an interface corresponding to the native RecyclerView-based image scrolling solution.

As shown in FIG. 3, AP values of ItemViews in the last row of the native RecyclerView at an initial moment are sequentially 479, 480, 481, 482, and 483. The user may perform a single-finger slide-up operation on the touchscreen. The native RecyclerView slides up. Provided that the bottom edge of the native RecyclerView slides into the screen, that is, a position is vacated at the bottom of the native RecyclerView, a new row of views needs to be loaded. AP values of the new row of views are sequentially 484, 485, 486, 487, and 488. To load the new row of views, the electronic device needs to perform position and size measurement again on each ItemView starting from the first row of the native RecyclerView, and set a corresponding ImageView for each ItemView, that is, fill each grid with an image. As shown by the dashed box in FIG. 3, a redrawn RecyclerView has five rows and 12 columns of ItemViews, 60 in total. A position of each of the 60 ItemViews needs to be remeasured, and an AP value of an ImageView corresponding to each ItemView needs to be reset. The entire process is time-consuming. Experimental data shows that the native RecyclerView-based image scrolling solution consumes hundreds of milliseconds, which is prone to a frame drop.

Based on the characteristic that in a slide-up/down scenario, a position and a size of each ItemView basically remain unchanged, and an alignment manner of each ItemView also remains unchanged, this application provides a custom RecyclerView-based image scrolling solution. In the solution of this application, a size of a custom RecyclerView is greater than a size of the screen. At the initial moment, edges of the custom RecyclerView are located outside the screen. When a single finger of the user slides up and down in a gallery, the custom RecyclerView scrolls in a same direction as a single-finger slide direction. When a top or a bottom of the custom RecyclerView moves into the screen, the electronic device moves the entire custom RecyclerView in a direction opposite to the single-finger slide direction, and fills the custom RecyclerView with content again. In this way, with a position and a size of each ItemView in the custom RecyclerView maintained, the electronic device only needs to update an AP value of an ImageView corresponding to each ItemView, that is, fill the moved custom RecyclerView with content, and does not need to perform size measurement and position calculation again on each ItemView of the custom RecyclerView. Experimental data shows that in an example in which a screen refresh rate is 120 Hz, time consumption of the custom RecyclerView-based image scrolling solution may be shortened from hundreds of milliseconds to 8.3 milliseconds. According to the solution, a data processing procedure is optimized, data processing time during image scrolling in the gallery is shortened, and a frame drop problem existing in the native RecyclerView-based image scrolling solution is resolved.

The electronic device is also referred to as a terminal (terminal) or user equipment (user equipment, UE). For example, the electronic device may be a personal computer (personal computer, PC), a mobile phone (mobile phone), a smart screen, a smart television, a tablet computer (Pad), a wearable device, a computer with wireless transmitting and receiving functions, a virtual reality (virtual reality, VR) device, an augmented reality (augmented reality, AR) device, a wireless terminal in industrial control (industrial control), a wireless terminal in self-driving (self-driving), a wireless terminal in a remote medical surgery (remote medical surgery), a wireless terminal in a smart grid (smart grid), a wireless terminal in transportation safety (transportation safety), a wireless terminal in a smart city (smart city), a wireless terminal in a smart home (smart home), or the like; or may be another device or apparatus with a gallery function.

For an album page, the electronic device presets a plurality of levels. The "level" may be understood as a quantity of columns of images displayed on the screen. The electronic device presets a level 3, a level 5, a level 15, and a level 21 for the album page. The level 3 is a minimum level of the album page, and the level 21 is a maximum level of the album page. When a level is the level 3, the quantity of columns of images displayed on the screen is correspondingly three. When the level is the level 5, the quantity of columns of images displayed on the screen is correspondingly five. When the level is the level 15, the quantity of columns of images displayed on the screen is correspondingly 15. When the level is the level 21, the quantity of columns of images displayed on the screen is correspondingly 21.

The user may change the quantity of columns of images on the album page displayed on the screen through a two-finger scale operation. In an example, the user may trigger, by reducing a distance between two fingers, the electronic device to increase the quantity of columns of images on the album page displayed on the screen. In another example, the user may trigger, by increasing a distance between two fingers, the electronic device to reduce the quantity of columns of images on the album page displayed on the screen. If the user sets the level 21 for the album page through a scale operation, before receiving a next two-finger operation, the electronic device keeps displaying 21 columns of images. In still another example, the electronic device supports "cross-level scaling" of the album page. After the user presses the screen with the two fingers and before the two fingers leave the screen, when the user increases or reduces the distance between the two fingers on the screen, the electronic device may switch from a current level to a next level and then to a non-adjacent level of the current level, that is, switching between a plurality of levels may be performed through one gesture. An example in which the quantity of columns of images displayed on the screen is five before the user presses the screen with the two fingers is used. After the user presses the screen with the two fingers, the distance between the two fingers is reduced. Before the two fingers leave the screen, as the distance between the two fingers is reduced, the quantity of columns of images displayed on the screen may be switched from five columns to 15 columns. After switching to 15 columns, as the distance between the two fingers is reduced, the quantity of columns of images displayed on the screen may be switched from 15 columns to 21 columns.

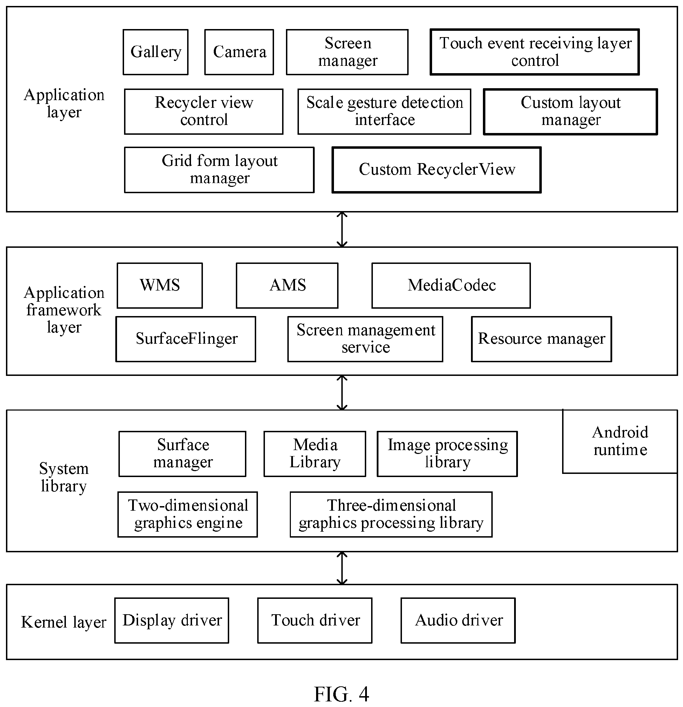

For example, FIG. 4 is a diagram of a software architecture of an improved electronic device.

Different from the diagram of the software architecture shown in FIG. 1, in the diagram of the software architecture shown in FIG. 4, a touch event receiving layer (ReceiveTouchView) control, a custom layout manager, and a custom RecyclerView are added to the application layer.

The ReceiveTouchView control is used to receive a two-finger operation of the user in a scaling scenario. A size of the ReceiveTouchView is the same as the size of the screen, and two fingers are not repositioned, so that a function problem and an extensibility problem of the native RecyclerView directly receiving a click event are resolved.

The custom layout manager may be used as a bridge between the grid form layout manager and the custom RecyclerView, and plays a role of returning data. Specifically, the grid form layout manager is a native manager of the Android system, and is used to manage a position and a size of an ItemView component in the custom RecyclerView. However, the grid form layout manager does not have a capability of executing a custom RecyclerView-based image scrolling method provided in this application. Therefore, the grid form layout manager needs to return a movement distance of a single-finger operation of the user to the custom RecyclerView. However, the grid form layout manager does not have a function of directly returning data to the custom layout manager, and therefore, the custom layout manager may transparently transmit data between the grid form layout manager and a custom RecyclerView control.

The custom RecyclerView includes a plurality of item views (Item Views) in a grid form, each ItemView corresponds to one image view (ImageView), and each ImageView is used to display one image. The custom Recycler-View may be considered as a container for displaying an image. In an example, when the user performs a scale operation in a gallery interface, the custom RecyclerView is scaled up or down accordingly. In another example, when a single finger of the user slides up and down, the custom RecyclerView control may control the custom RecyclerView to scroll in a same direction as a single-finger slide direction. When a top or a bottom of the custom RecyclerView is reached through scrolling, the custom RecyclerView control moves the entire custom RecyclerView in the direction opposite to the single-finger slide direction, and fills the custom RecyclerView with content again.

It should be noted that although the Android system is used as an example for description in embodiments of this application, a basic principle thereof is also applicable to an electronic device based on an operating system such as iOS or Windows.

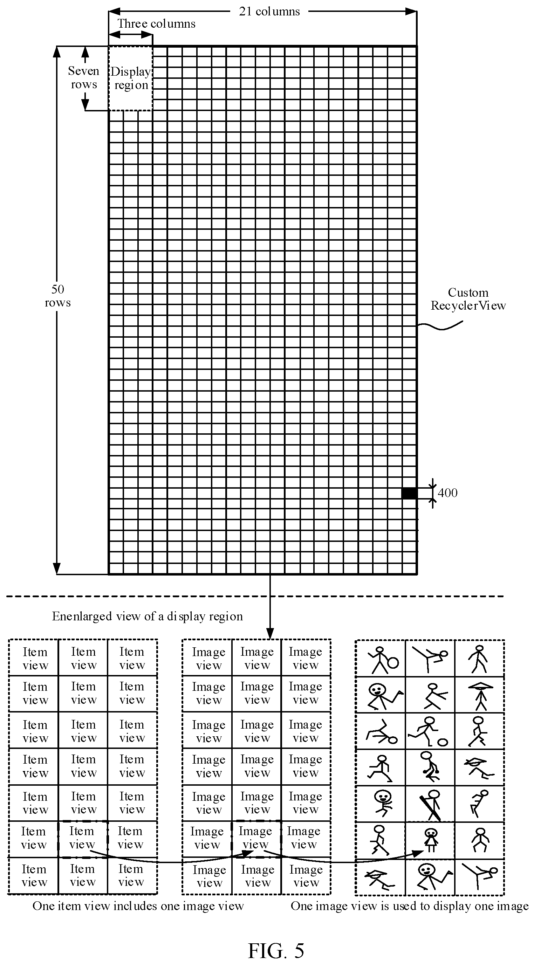

For example, FIG. 5 is a diagram of a relationship between a custom RecyclerView, an ItemView, and an Imageview.

After a mobile phone receives a click operation on a gallery icon, the mobile phone starts to run a gallery application and initializes a custom RecyclerView. As shown in FIG. 5, the custom RecyclerView may include 21 columns*50 rows=1050 ItemViews, and a width and a height of each ItemView are both 400 pixels. A calculation manner for a quantity of columns and a quantity of rows of the custom RecyclerView and a side length of each ItemView is as follows: An example in which a size of a screen is 1200*2800 pixels and a level 3, a level 5, a level 15, and a level 21 are preset is used. The mobile phone may divide a width of 1200 pixels of the screen by the minimum level 3, to obtain the side length of 400 pixels of each ItemView in the custom RecyclerView. Then, the mobile phone may multiply the minimum level 3 by the side length of 400 pixels of each ItemView in the custom RecyclerView, and then divide a result by the maximum level 21, to obtain a side length of 57 pixels of each ItemView on the screen at a maximum level (level 21) through calculation. Then, the mobile phone may divide a height of 2800 pixels of the screen by the side length of 57 pixels of each ItemView on the screen at the maximum level (level 21), and then add 1 to obtain the quantity of rows of 50 of the custom RecyclerView. It should be noted that at the level 21, the mobile phone may divide the height of the screen by the side length of 57 pixels of each ItemView on the screen at the maximum level (level 21), to determine that a maximum of 49 rows of pixels are displayed, and the custom RecyclerView includes at least one more row than the screen. In this way, the size of the custom RecyclerView sent to the screen for display is greater than the size of the screen, avoiding blank space on the screen and ensuring that the custom RecyclerView scrolls up and down.

As shown in FIG. 5, at the level 3, a display region of the custom RecyclerView on the screen is 3 rows*7 columns of ItemViews. Each ItemView includes one ImageView, and each ImageView is used to display one image. An image displayed by an ImageView may be a thumbnail of a photo, or may be a thumbnail of a frame of a video. When an image displayed by an ImageView is a thumbnail of a photo, the user clicks the thumbnail, and the mobile phone may display the photo in full screen. When an image displayed by an ImageView is a thumbnail of a frame of a video, the user clicks the thumbnail, and the mobile phone may play the video in full screen.

It should be noted that FIG. 5 is described by using an example in which the width and the height of the ItemView are equal, and this application is not limited thereto. In another example, the width and the height of the ItemView are not equal.

In addition, a relative positional relationship between the display region and the custom RecyclerView in FIG. 5 is merely an example for description. During actual implementation, the user may change, through a slide-up/down operation and a scale operation, a relative positional relationship between the screen and the custom RecyclerView and a size of the display region seen by the user. For example, when the user performs a slide-up operation on the screen, the custom RecyclerView slides up relative to the screen, to display, on the screen, a photo shot later. When the user performs a slide-down operation on the screen, the custom RecyclerView slides down relative to the screen, to display, on the screen, a photo shot earlier. For another example, when the user reduces the distance between the two fingers, the display region of the custom RecyclerView is enlarged, so that after the enlarged display region is sent to the screen for display, a larger quantity of images having smaller sizes are displayed on the screen. When the user increases the distance between the two fingers, the display region of the custom RecyclerView is reduced, so that after the reduced display region is sent to the screen for display, a smaller quantity of images having larger sizes are displayed on the screen.

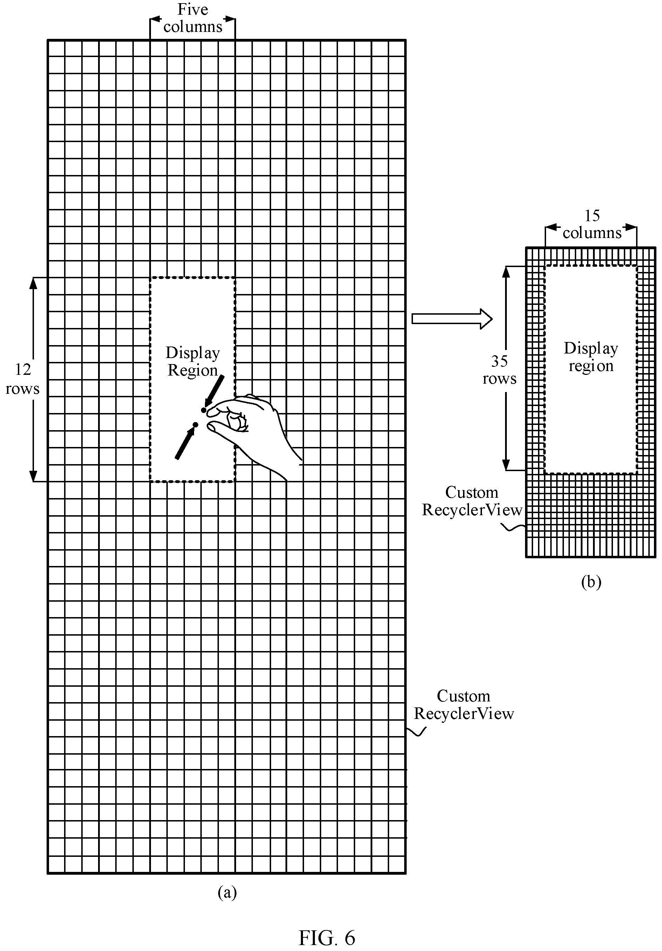

For example, FIG. 6 is a diagram of performing a scale-down operation on the custom RecyclerView.

The custom RecyclerView includes 21 columns*50 rows=1050 ItemViews. As shown in (a) in FIG. 6, at an initial moment, the display region corresponding to the screen includes 5 columns*12 rows=60 ItemViews. When the user wants to view a larger quantity of photos, the user may press the screen with two fingers and gradually reduce a distance between the two fingers. As shown in (b) in FIG. 6, in response to an operation of reducing the distance between the two fingers by the user, the custom RecyclerView is scaled down. In this case, 15 columns and 35 rows of ItemViews, 525 in total, are displayed in the display region corresponding to the screen.

In another example, the user may increase the distance between the two fingers to trigger the mobile phone to scale up the custom RecyclerView, to reduce the quantity of ItemViews displayed on the screen, and increase a size of an image corresponding to each ItemView.

The custom RecyclerView in this application relates to two sizes.

One is an original size, that is, an initialized size, of the custom RecyclerView. No matter a quantity of columns of images included in the display region of the custom RecyclerView, the original size of the custom RecyclerView remains unchanged. For example, when the size of the screen is 1200 pixels in width*2800 pixels in height, and a minimum quantity of columns displayed on the screen is three, an original size of each ItemView in the custom RecyclerView is 400 pixels in width*400 pixels in height. Because a maximum quantity of columns of the custom RecyclerView is 21, and the quantity of rows is 50 in the case of 21 columns, the original size of the custom RecyclerView is 8400 pixels in width*20000 pixels in height.

The other is an actual display size of the custom RecyclerView. When the display region of the custom RecyclerView includes a different quantity of columns, a different quantity of columns of ItemViews are displayed on the screen. Therefore, the original size of the custom RecyclerView needs to be multiplied by a scale factor (the scale factor is less than or equal to 1.0), to obtain a reduced display size, and then the scaled-down custom RecyclerView is sent to the screen for display. For example, a current level is N, a minimum level is M, and the original size of the custom RecyclerView is $(x, y)$. In this case, a display size of the custom RecyclerView at the current level is $(x*M/N, y*M/N)$, where $x$ represents an original width of the custom RecyclerView, $y$ represents an original height of the custom RecyclerView, and $M/N$ represents the scale factor.

In embodiments of this application, the electronic device may change an actual layout position index value based on a scale factor, a scale center, a scrolling operation, and the like. In a custom RecyclerView, actual layout position indexes are numbered consecutively from an ItemView in a first row and a first column to an ItemView in a last row and a last column. In addition, during scaling, an actual adapter position index of an ItemView corresponding to a two-finger center remains unchanged, but an actual adapter position index of another ItemView may be renumbered. Consequently, actual adapter position indexes of the entire custom RecyclerView are not necessarily consecutive. In other words, in a scaling scenario, an actual adapter position indexes and a layout position index may not be equal.

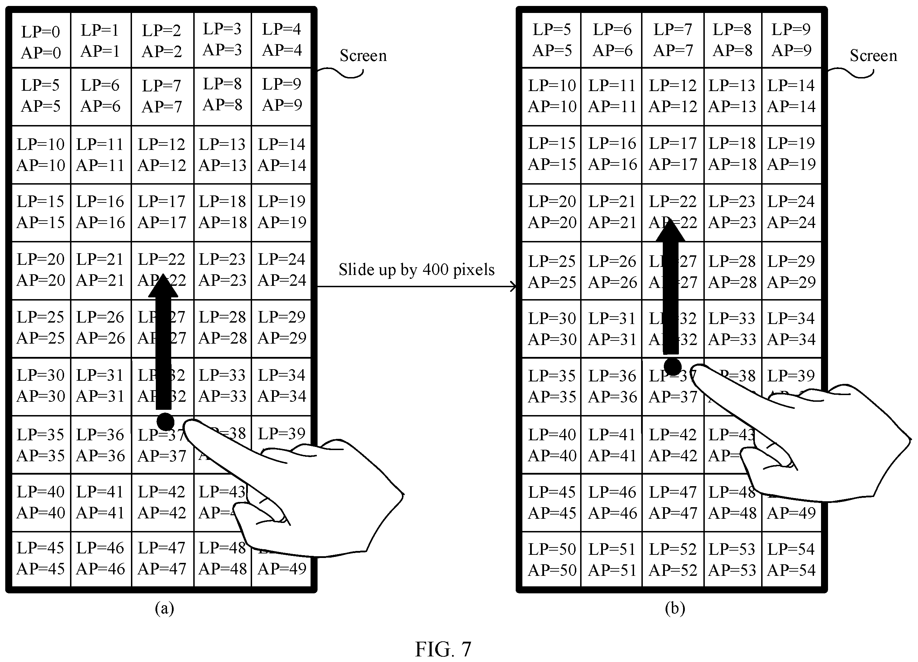

For example, FIG. 7 is a diagram of actual layout position indexes and actual adapter position indexes in a scrolling scenario.

It is assumed that the custom RecyclerView has five columns (that is, a maximum quantity of columns) of ItemViews, and a width and a height of each ItemView are both equal to the width of the screen divided by 5 (that is, a minimum quantity of columns). In FIG. 7, a level of the custom RecyclerView at an initial moment is a level 5, one grid represents one ItemView, and one ItemView includes one ImageView. Each ItemView in the custom RecyclerView is encoded by using an actual layout position index, and each ImageView is encoded by using an actual adapter position index. Because grids of each column of ItemViews are displayed within the screen when the custom RecyclerView is at a minimum level, an actual layout position index and an actual adapter position index corresponding to one block are the same. As shown in (a) in FIG. 7, a grid in a first row and a first column at a top-left corner of the screen correspond to an actual layout position index LP=0 and an actual adapter position index AP=0. When the finger of the user slides up and down on the screen, an actual LP and an actual AP of each grid are synchronously updated. As shown in (b) in FIG. 7, when the user triggers, through a single-finger slide-up operation, the custom RecyclerView to slide up by 400 pixels, the grid in the first row and the first column at the top-left corner of the screen is updated to an LP=5 and an actual AP=5.

When the custom RecyclerView is scaled or scrolls up and down, the actual layout position index of the custom RecyclerView may change. When an actual LP of an ItemView (a first ItemView) at a top-left corner of the custom RecyclerView is equal to 0, it indicates that a first row of an album is already reached, and slide-up is no longer possible. When an actual LP of an ItemView (a last ItemView) at a bottom-right corner of the custom RecyclerView is equal to a maximum value LPmax of the actual layout position index, it indicates that a last row of the album is already reached, and slide-down is no longer possible.

In an example, an example in which a first row of ItemViews is not reserved is used an example. LPmax may be obtained by using the following relational expression (1):

$$LPmax = \left\lfloor \frac{p}{g} \right\rfloor *gmax \quad (1)$$

In another example, an example in which a first row of ItemViews is reserved is used an example. LPmax may be obtained by using the following relational expression (2):

$$LPmax = \left\lceil \frac{p}{g} \right\rceil *gmax \quad (2)$$

LPmax represents a maximum value of the actual layout position index, p represents a total quantity of images in the album, g represents the current level of the custom RecyclerView (that is, a quantity of columns of ItemViews displayed on the screen), and gmax represents a maximum level of the custom RecyclerView (that is, a total quantity of columns of ItemViews).

It should be understood that an actual layout position index and an actual adapter position index value of one ItemView are in correspondence. Therefore, an actual adapter position index value and an actual layout position index corresponding to any image in the album may be obtained with reference to the foregoing relational expression (1) or relational expression (2). Details are not described herein again.

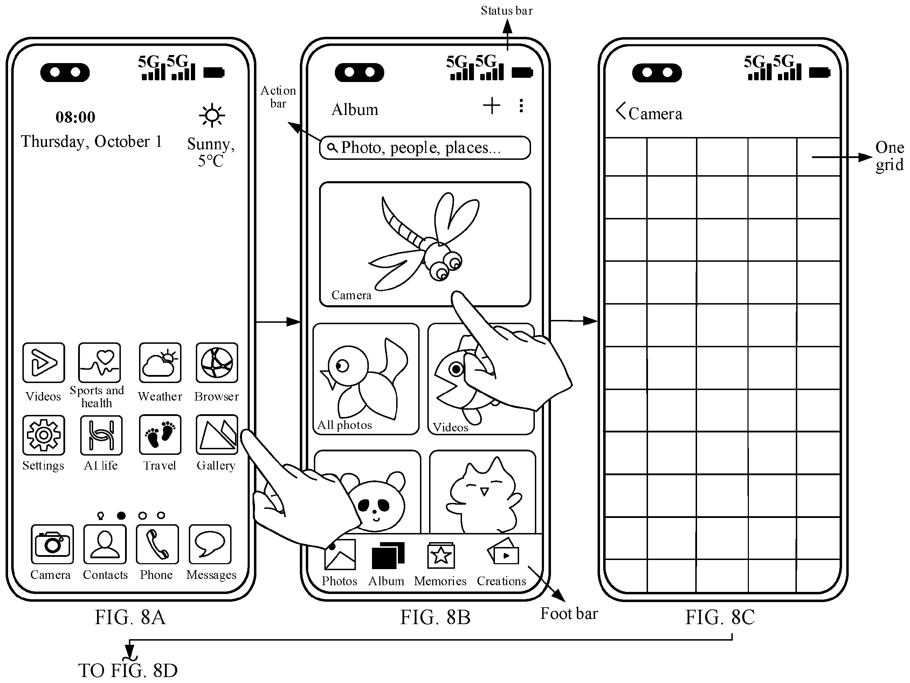

The following describes an application scenario of a custom RecyclerView-based gallery by using an example with reference to FIG. 8A to FIG. 11.

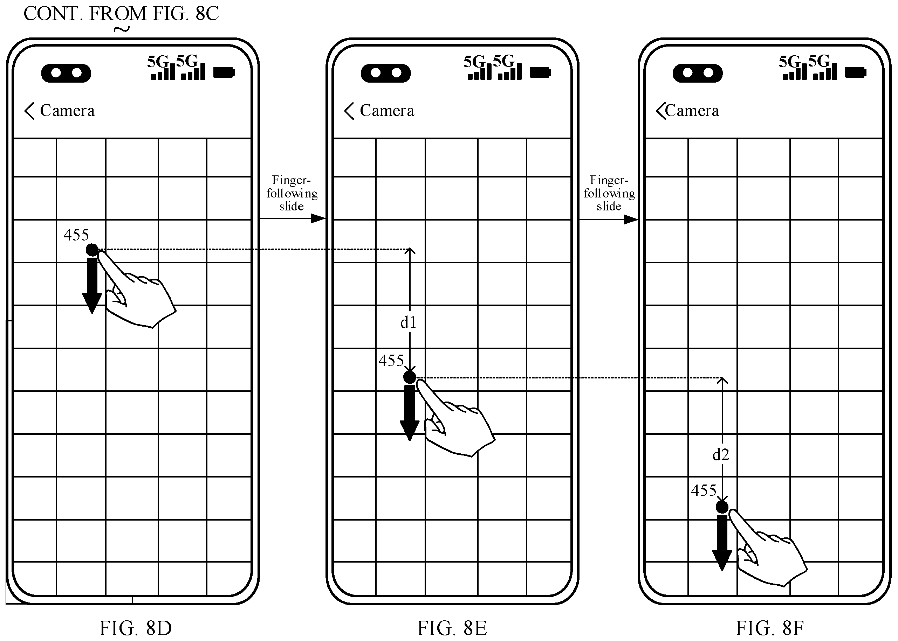

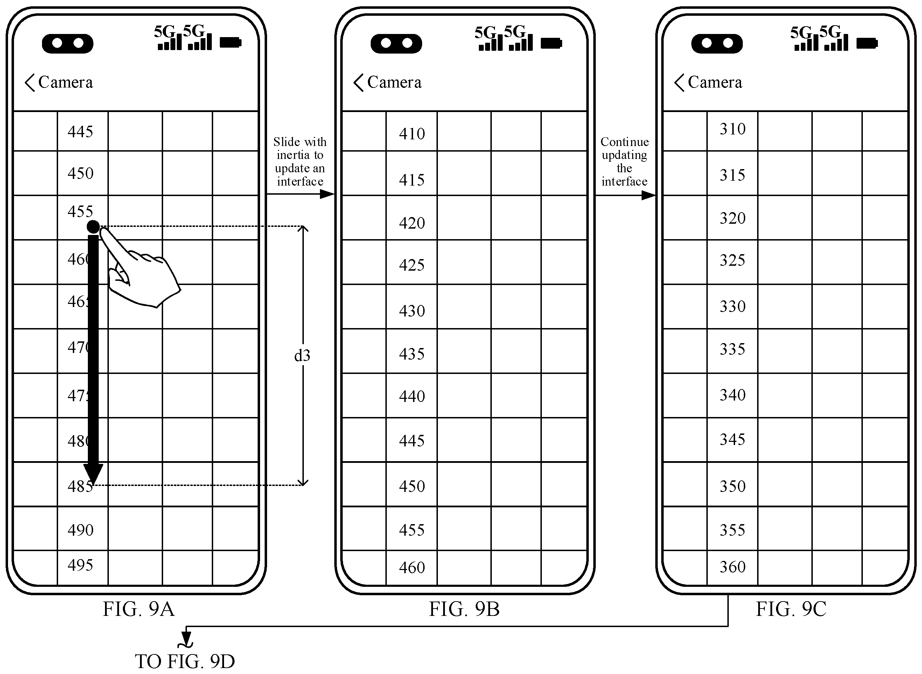

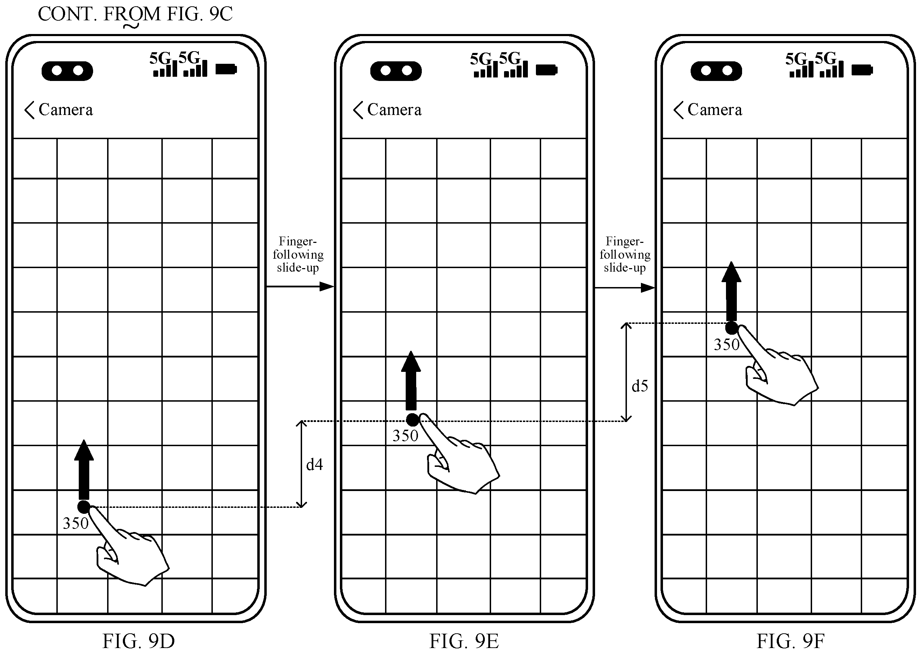

For example, FIG. 8A, FIG. 8B, FIG. 8C, FIG. 8D, FIG. 8E, FIG. 8F, FIG. 9A, FIG. 9B, FIG. 9C, FIG. 9D, FIG. 9E, and FIG. 9F are diagrams of a scenario of displaying an image in a scrolling manner based on the custom RecyclerView.

As shown in FIG. 8A, the mobile phone displays icons of applications such as Gallery on a desktop. When the user wants to view an image, the user may click an icon of Gallery. In response to a click operation of the user on the icon of Gallery, the mobile phone displays an album interface shown in FIG. 8B. The album interface includes a plurality of regions: A status bar (status bar) provides a power identifier and a signal strength identifier, an action bar (action bar) provides photos and a search box, a foot bar (foot bar) provides Photos, Album, Memories, and Creations, and another region other than these regions provide album cards such as Camera, All photos, and Videos. The album card is also referred to as a photo album card, and each album card is an entry of an album.

The user may select one of the album cards. For example, as shown in FIG. 8B, the user may click a "Camera" card. In response to a click operation of the user on the "Camera" card, the mobile phone displays a camera album interface shown in FIG. 8C. The camera album interface is generated based on the custom RecyclerView. The camera album interface presents, in a grid form, a plurality of photos and videos shot by the user in advance by using the camera application. It should be noted that for more clear understanding, FIG. 8C is described by using an example in which one grid represents one image. In an example, the camera album interface shown in FIG. 8C presents a plurality of images shot recently. In another example, the camera album interface shown in FIG. 8C is an interface that is finally presented when the user opens a camera album last time.

An example in which the camera album interface shown in FIG. 8C presents the plurality of images shot recently is used. The user may trigger, through a single-finger slide-down operation, the mobile phone to update the camera album interface, to display images shot earlier.

In an example, the single-finger slide-down operation of the user in the camera album interface is a finger-following slide operation. A characteristic of the finger-following slide operation is that a single-finger slide speed is slow, and the single finger remains on the screen for long time. As shown in FIG. 8D, the user may touch and hold an image 455 with a single finger, and slide down by a distance d1. In response to the slide operation of the user, as shown in FIG. 8E, the camera album interface performs finger-following slide-down by the distance d1. Then, without releasing the single finger, the user may continue to hold the image 455 and slide down by a distance d2. In response to the slide operation of the user, as shown in FIG. 8F, the camera album interface performs finger-following slide-down by the distance d2. Usually, a slide distance of the finger-following slide operation is equal to a scrolling-down distance of the camera album interface. A longer slide distance of the finger-following slide operation indicates more content displayed in the camera album interface in the scrolling manner.

In another example, the single-finger slide-down operation of the user in the camera album interface is an inertial slide operation. A characteristic of the inertial slide operation is that a single-finger slide speed is high, and the single finger leaves the screen after sliding quickly by a distance. One inertial slide operation may trigger the mobile phone to display a large quantity of images in the scrolling manner. As shown in FIG. 9A, the user may touch and hold an image 455 with a single finger and quickly slide down by a distance d3 (the distance d3 is greater than the distance d1 and the distance d2), and then the finger of the user leaves the screen. In response to the inertial slide operation of the user, the mobile phone plays animation effects of an inertial scrolling interface, for example, first displays a camera album interface shown in FIG. 9B, and then displays a camera album interface shown in FIG. 9C. Usually, a slide distance of the inertial slide operation is less than a scrolling-down distance of the camera album interface. After the inertial slide operation ends, the camera album interface still continues to scroll down by a distance like inertia exists.

As described in the foregoing embodiment, the user may trigger, through a slide-down operation, the mobile phone to update the camera album interface. During actual implementation, the user may alternatively trigger, through a slide-up operation, the mobile phone to update the camera album interface. For example, as shown in FIG. 9D, the user may touch and hold an image 375 with a single finger, and slide up by a distance d4. In response to the slide operation of the user, as shown in FIG. 9E, the camera album interface performs finger-following slide-up by the distance d4. Then, without releasing the single finger, the user may continue to hold the image 350 and slide up by a distance d5. In response to the slide operation of the user, as shown in FIG. 9F, the camera album interface performs finger-following slide-up by the distance d5.

It should be noted that FIG. 8A, FIG. 8B, FIG. 8C, FIG. 8D, FIG. 8E, FIG. 8F, FIG. 9A, FIG. 9B, FIG. 9C, FIG. 9D, FIG. 9E, and FIG. 9F are described by using an example in which the camera album interface includes five columns of images, and this application is not limited thereto. In an example, the user may further perform a scale operation in the camera album interface, to adjust a quantity of columns of images on the camera interface and change an actual display size of the custom RecyclerView, thereby changing a size of each image in the camera album interface.

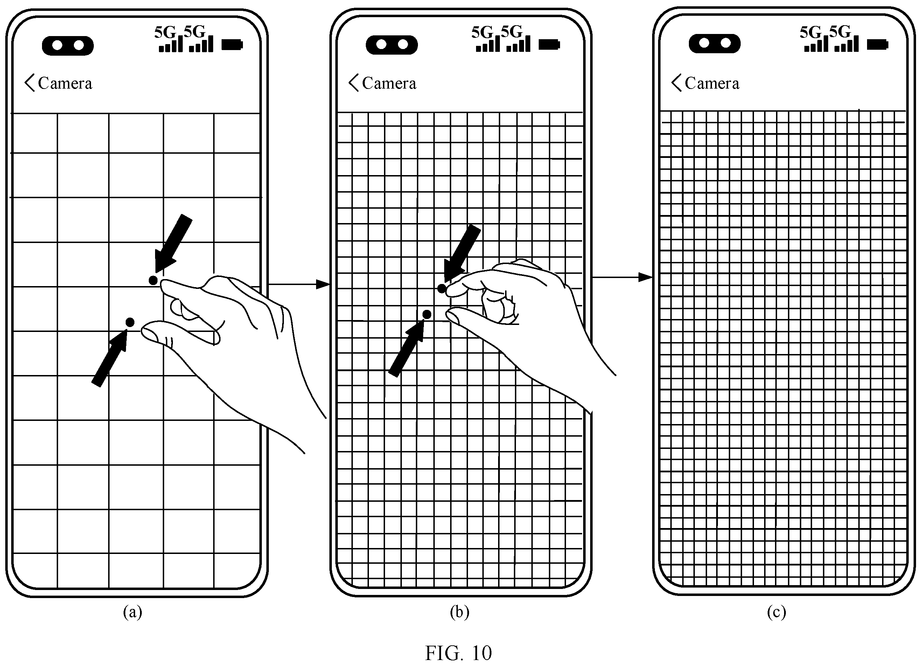

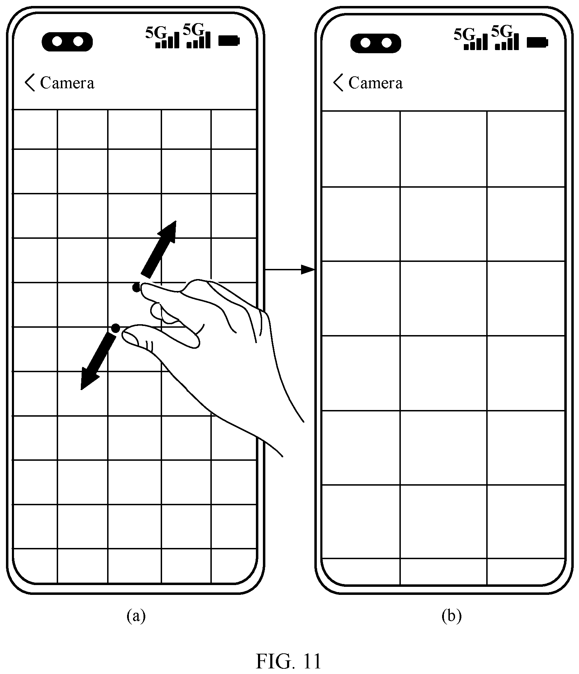

For example, FIG. 10 and FIG. 11 are diagrams of a scenario of scaling and displaying an image in a gallery.

In an example, as shown in (a) in FIG. 10, at an initial moment, a camera album interface includes five columns of images. The user touch and hold a position near an image with two fingers, and gradually reduces a distance between the two fingers. In response to the operation of reducing the distance between the two fingers by the user, the mobile phone displays a camera album interface shown in (b) in FIG. 10. In this case, the camera album interface includes 15 columns of images. When the two fingers remain on the screen, the user continues to reduce the distance between the two fingers. In response to the operation of reducing the distance between the two fingers by the user, the mobile phone displays a camera album interface shown in (c) in FIG. 10. In this case, the camera album interface includes 21 columns of images.

In another example, as shown in (a) in FIG. 11, at an initial moment, a camera album interface includes five columns of images. The user touch and hold a position near an image with two fingers, and gradually increases a distance between the two fingers. In response to the operation of increasing the distance between the two fingers by the user, the mobile phone displays a camera album interface shown in (b) in FIG. 11. In this case, the camera album interface includes three columns of images.

With reference to the descriptions of FIG. 4 to FIG. 11 in the foregoing embodiments, the original size of the custom RecyclerView is greater than the size of the screen. The user may directly trigger, through the slide-up/down operation, the image to scroll up and down. Alternatively, the user may change the quantity of columns of images on the screen through the scale operation, and then trigger, through the slide-up/down operation, the image to scroll up and down.

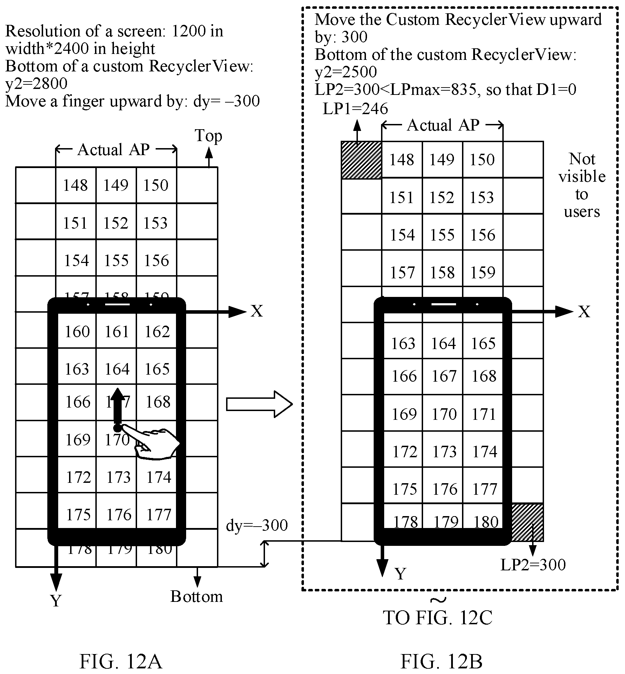

The following describes, with reference to FIG. 12A to FIG. 19F by using eight examples, the custom Recycler-View-based image scrolling solution provided in this application by using an example in which the electronic device is a mobile phone.

It should be noted that to more clearly present a scrolling process of the image in the album, in the following eight examples, the size of the screen is 1200 pixels in width*2400 pixels in height. The custom RecyclerView includes five rows and 11 columns of grids, 55 in total. The custom RecyclerView includes two levels: the level 3 and the level 5. The size of the custom RecyclerView is 2000 pixels in width*4400 pixels in height. For a manner for calculating the size of the custom RecyclerView, refer to the descriptions of the manner for calculating the size of the custom RecyclerView in FIG. 5 in the foregoing embodiments, and details are not described herein again.

In addition, middle three columns of numbers in FIG. 12A to FIG. 19F represent actual adapter position index coordinates of the ItemViews. An example in which the album includes 501 photos is used. When an actual AP is equal to 0, the AP is used to point to a first photo in the album; or when an actual AP is equal to 500, the actual AP is used to point to a last photo in the album. The mobile phone may determine that a minimum value LPmin=0 of the actual layout position index. The mobile phone substitutes g=3, p=501, and gmax=5 into the foregoing relational expression (1), to obtain a maximum value LPmax=835 of the actual layout position index when the custom RecyclerView is at the level 3. LPmax represents the maximum value of the actual layout position index, p represents a total quantity of images in the album, g represents the current level of the custom RecyclerView, and gmax represents a maximum level of the custom Recycler-View.

It should be understood that during actual implementation, a resolution of the custom RecyclerView, the level of the custom RecyclerView, the quantity of rows and the quantity of columns of the custom RecyclerView, the actual adapter position index value, the actual layout position index value, and the like may all be adjusted based on an actual requirement such as a resolution of the screen and a user operation. For example, refer to FIG. 5. An initialized resolution of the custom RecyclerView may be 8400 pixels in width*2000 pixels in height, the minimum level of the custom RecyclerView is three columns, a middle level is five columns, and the maximum level is 21 columns. When the custom RecyclerView is at different levels, display resolutions of the custom RecyclerView are different.

For ease of describing a relative position relationship between the screen and the custom RecyclerView, in FIG. 12A to FIG. 19F, the size of a touch event receiving layer is equal to the size of the screen, and a top-left corner of the touch event receiving layer coincides with the top-left corner of the screen. A coordinate system is established by using the top-left corner of the screen (equivalent to the top-left corner of the touch event layer) as an origin, with an X axis running horizontally to the right and a Y axis running vertically downward. It should be understood that during actual implementation, a coordinate system may alternatively be established in another manner. For example, a coordinate system is established by using the top-left corner of the custom RecyclerView as an origin, with an X axis running horizontally to the right and a Y axis running vertically downward. Alternatively, a coordinate system is established by using a bottom-right corner of the touch event layer as an origin, with an X axis running horizontally to the right and a Y axis running vertically upward. A specific establishment manner for the coordinate system is not limited in this application.

**Example 1**

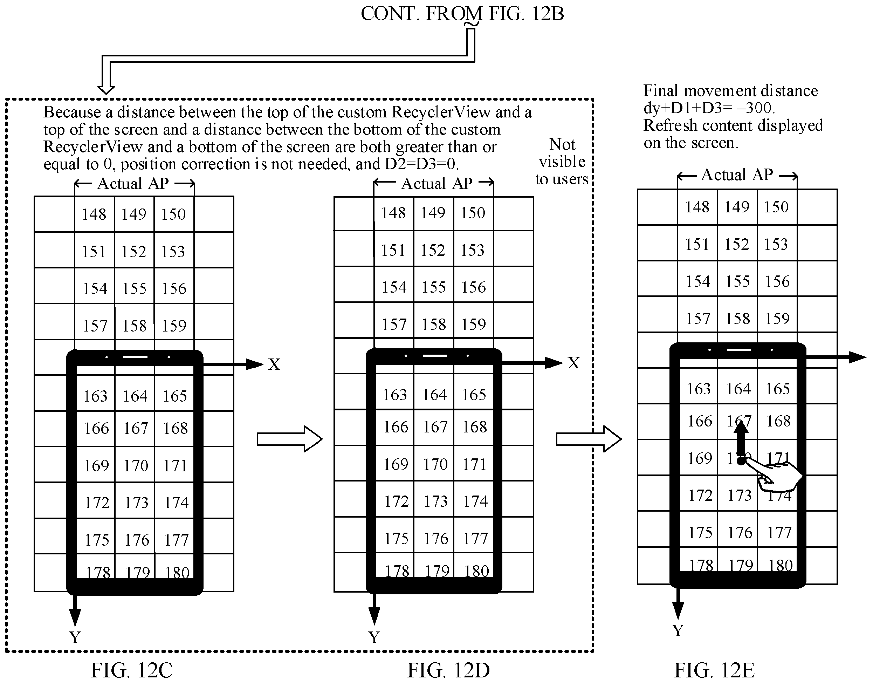

FIG. 12A, FIG. 12B, FIG. 12C, FIG. 12D, and FIG. 12E are diagrams of a scenario in which a single finger of a user slides up (which is also referred to as a first direction, and is a direction from a bottom edge of a display screen to a top edge of the display screen) relative to a screen, a custom RecyclerView slides up, but a bottom of the custom RecyclerView has not slid into the screen yet.

As shown in FIG. 12A, at an initial moment, the mobile phone displays a custom RecyclerView-based grid interface. A Y-axis coordinate of a top of the custom RecyclerView is as y1=-1600 pixels, and a Y-axis coordinate of the bottom of the custom RecyclerView is y2=2800 pixels. In other words, edges of the custom RecyclerView are located outside the display screen. The user may touch and hold a region corresponding to an actual adapter position index 170 with a single finger, and slide up by a distance of 300 pixels. In an $N^{th}$ reporting cycle, the mobile phone detects a slide-up by the distance of 300 pixels, that is, dy=-300 pixels. In response to the single-finger slide-up operation of the user, as shown in FIG. 12B, the mobile phone moves the custom RecyclerView upward by 300 pixels. In this case, the Y-axis coordinate of the top of the custom RecyclerView is updated to y1=-1600-300=-1900 pixels, and the Y-axis coordinate of the bottom of the custom RecyclerView is updated to y2=2800-300=2500 pixels.

Then, the mobile phone sequentially performs the following three determining steps.

First determining step

The mobile phone obtains an actual layout position index value of the custom RecyclerView. As shown in FIG. 12B, a first actual layout position index value in a first row and a first column of the custom RecyclerView is LP1=246, and a last actual layout position index value in a last row and a last column of the custom RecyclerView is LP2=300. LP1 and LP2 may be obtained through calculation based on an actual AP value of the custom RecyclerView and the foregoing relational expression (1). Details are not described herein again. Because the current scenario is a single-finger slide-up scenario, and the custom RecyclerView slides up with the single finger, the mobile phone only needs to determine values of the actual LP2=300 and an actual LPmax=835, to determine whether the last row of the custom RecyclerView is a last row of an album. When the last row of the custom RecyclerView is the last row of the album, it indicates that a bottom ItemView of the custom RecyclerView cannot be updated with more images with larger actual AP values. When the custom RecyclerView is moved upward, if the bottom of the custom RecyclerView is moved into the screen, to avoid a blank region between the bottom of the custom RecyclerView and a bottom of the screen, the mobile phone needs to correct a position of the custom RecyclerView, that is, perform first position correction on the custom RecyclerView, to align the bottom of the custom RecyclerView with the bottom of the screen.

Because LP2<LPmax, the mobile phone may determine that the last row of the custom RecyclerView is not the last row of the album, and the custom RecyclerView does not carry a last image in the album. If the finger of the user continues to slide up, an image corresponding to each ItemView in the custom RecyclerView may still be updated, so that the user can see another image that is not displayed in the album and that has a larger actual LP value. Therefore, the mobile phone does not need to perform first position correction on the custom RecyclerView, and D1=0.

Second determining step

The mobile phone compares values of the Y-axis coordinate y2=2500 pixels of the bottom of the RecyclerView and a Y-axis coordinate Y2=2400 pixels of the bottom of the screen. Because y2>Y2, the bottom of the custom RecyclerView is located outside the screen, and the bottom of the custom RecyclerView has not slid into the screen yet. Therefore, as shown in FIG. 12C, the mobile phone does not need to move the custom RecyclerView downward to load a new image, that is, a position of the custom RecyclerView remains unchanged, and D2=0.

Third determining step

If the mobile phone moves the custom RecyclerView downward in the second determining step, the mobile phone further needs to refresh the image corresponding to each ItemView in the custom RecyclerView, so that the user visually sees that a position of the image on the screen remains unchanged. Consequently, a last row of a refreshed custom RecyclerView may be the last row of the album. Refer to the descriptions of the first determining step. To avoid the blank region between the bottom of the custom RecyclerView and the bottom of the screen, second position correction needs to be performed on the custom RecyclerView. However, in the second determining step, the custom RecyclerView is not moved downward, the position of the custom RecyclerView remains unchanged, and the last row of the custom RecyclerView may not be the last row of the album. Therefore, as shown in FIG. 12D, the mobile phone does not need to perform second position correction on the custom RecyclerView, and D3=0.

After obtaining dy=-300, D1=0, and D3=0 in the foregoing steps, the mobile phone may obtain a final movement distance D=dy+D1+D3=-300, and refresh content displayed on the screen. From the perspective of the user, the user sees that an album interface shown in FIG. 12A is directly updated to that shown in FIG. 12E, that is, the album interface performs a finger-following slide-up by 300 pixels.

It should be noted that in the second determining steps in Example 1 to Example 8, if the mobile phone moves the custom RecyclerView downward, the mobile phone further needs to refresh the image corresponding to each ItemView in the custom RecyclerView, so that the user visually sees that the position of the image on the screen remains unchanged. This is equivalent to that the ItemView is not moved in the second determining step. Therefore, when the mobile phone determines the final movement distance D, D2 is not involved.

**Example 2**

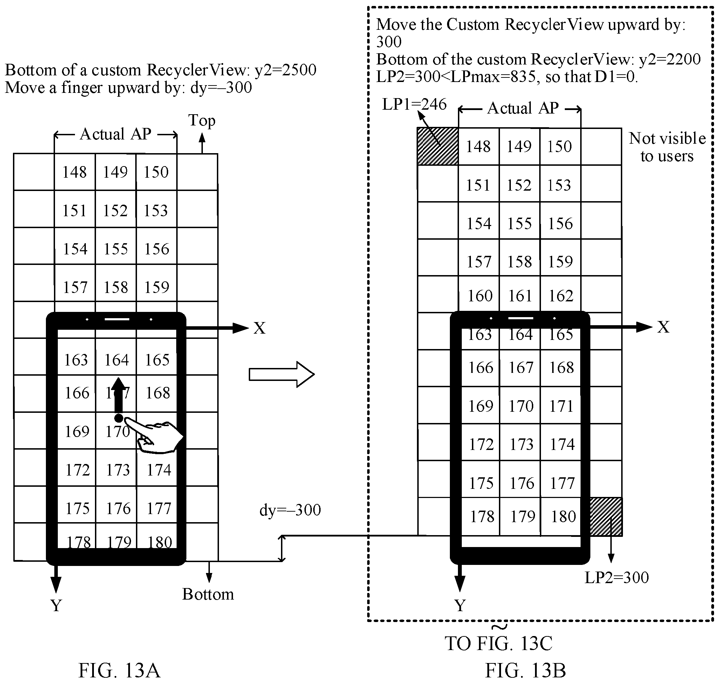

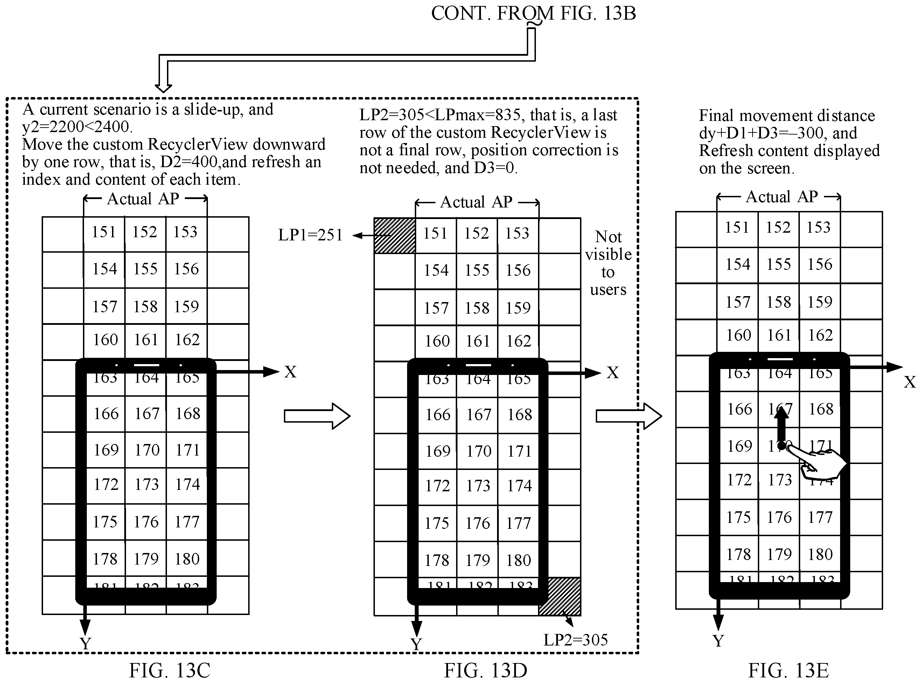

FIG. 13A, FIG. 13B, FIG. 13C, FIG. 13D, and FIG. 13E are diagrams of a scenario in which a single finger of a user slides up (which is also referred to as a first direction) relative to a screen, a bottom of a custom RecyclerView slides up into the screen with the single finger, and a last row of the custom RecyclerView is not a last row of an album.

Based on FIG. 12E, as shown in FIG. 13A, the mobile phone displays a first grid interface based on the custom RecyclerView. The user touches and holds a region corresponding to an actual adapter position index 170 with a single finger, and continues to slide up by a distance of 300 pixels (which is also referred to as a second distance). In this case, a distance between a bottom edge of the display screen and a bottom edge of the recycler view is a first distance. In an (N+1)$^{th}$ reporting cycle, the mobile phone detects a slide-up by the distance of 300 pixels, that is, dy=-300 pixels. In response to the single-finger slide-up operation (also referred to as a first operation) of the user, as shown in FIG. 13B, the mobile phone moves the custom RecyclerView upward by 300 pixels. In this case, a Y-axis coordinate of a top of the custom RecyclerView is updated to y1=-1900-300=-2200 pixels, and a Y-axis coordinate of the bottom of the custom RecyclerView is updated to y2=2500-300=2200 pixels.

Then, the mobile phone sequentially performs the following three determining steps.

First determining step

The mobile phone obtains an actual layout position index value of an ItemView of the custom RecyclerView. As shown in FIG. 13B, a first actual layout position index value in a first row and a first column of the custom RecyclerView is LP1=246, and a last actual layout position index value in a last row and a last column of the custom RecyclerView is LP2=300. LP1 and LP2 may be obtained through calculation based on an actual AP value of the custom RecyclerView and the foregoing relational expression (1). Details are not described herein again. Then, because the current scenario is a single-finger slide-up scenario, and the custom RecyclerView slides up with the single finger, the mobile phone only needs to determine values of the LP2=300 and an LPmax=835. Because the actual LP2<the actual LPmax, the mobile phone may determine that the last row of the custom RecyclerView is not the last row of the album, and the custom RecyclerView does not carry a last image in the album. If the finger of the user continues to slide up, an image corresponding to each ItemView in the custom RecyclerView may still be updated, so that the user can see another image that is not displayed in the album and that has a larger actual LP value. Therefore, the mobile phone does not need to perform first position correction on the custom RecyclerView, and D1=0.

Second determining step

The mobile phone compares values of the Y-axis coordinate y2=2200 pixels of the bottom of the RecyclerView and a Y-axis coordinate Y2=2400 pixels of the bottom of the screen. Because y2<Y2, the bottom of the custom RecyclerView has slid into the screen. To enable the custom RecyclerView to carry more images with larger actual LP values, the mobile phone needs to move the custom RecyclerView downward (which is also referred to as a second direction).

For example, the mobile phone may calculate, based on a relational expression, a quantity of rows to be moved downward:

$$\left\lceil \frac{2400-2200}{400} \right\rceil = 1.$$

Correspondingly, a downward movement distance (also referred to as a third distance) of the custom Recycler-View is 400 pixels* 1 row=400 pixels, that is, D2=400.

As shown in FIG. 13C, after the custom RecyclerView is moved downward by the distance of 400 pixels, the Y-axis coordinate of the bottom of the custom RecyclerView is updated to y2=2200+400=2600 pixels. In addition, the mobile phone updates an actual adapter position index value of each ItemView based on a relational expression of actual AP+1 row*3 columns, that is, adds a first value to an AP value corresponding to each item view. For example, a first row of actual AP values of the custom RecyclerView are updated from 148, 149, and 150 shown in FIG. 13B to 151, 152, and 153 shown in FIG. 13C; a second row of actual AP values of the custom RecyclerView are updated from 151, 152, and 153 shown in FIG. 13B to 154, 154, and 156 shown in FIG. 13C; ...; and a last row of actual AP values of the custom RecyclerView are updated from 178, 179, and 180 shown in FIG. 13B to 181, 182, and 183 shown in FIG. 13C.

It may be understood that in the second determining step, the mobile phone first moves the custom RecyclerView downward by one row, and then adds 3 to AP values corresponding to a second to a fifth columns of ItemViews of the custom RecyclerView, which is equivalent to that the ItemViews are not moved, so that the user visually sees that a position of each image on the screen remains unchanged.

Third determining step

The mobile phone obtains an actual layout position index value of a last ItemView of the current custom RecyclerView again. In the second determining step, the custom RecyclerView is moved downward by one row. Therefore, 5 (a quantity of columns of the custom RecyclerView) is added to the actual layout position index value of each ItemView in the custom RecyclerView. As shown in FIG. 13D, a first actual layout position index value of the custom RecyclerView is updated to LP1=246+5=251, and a last actual layout position index value is updated to LP2=300+5=305. Then, values of LP2=305 and LPmax=835 are determined. Because LP2<LPmax, the last row of the custom Recycler-View is not the last row of the album, and the custom RecyclerView does not carry the last image in the album. If the finger of the user continues to slide up, the image corresponding to each ItemView the custom RecyclerView may still be updated, so that the user can see another image that is not displayed in the album and that has a larger actual LP value. Therefore, the mobile phone does not need to perform second position correction on the custom RecyclerView, that is, D3=0.

After obtaining dy=-300, D1=0, and D3=0 in the foregoing steps, the mobile phone may obtain a final movement distance dy+D1+D3=-300, and refresh content displayed on the screen. From the perspective of the user, the user sees that an album interface shown in FIG. 13A is directly updated to that shown in FIG. 13E, that is, the album interface performs a finger-following slide-up by 300 pixels, and there is a new row of images at the bottom of the screen.

**Example 3**

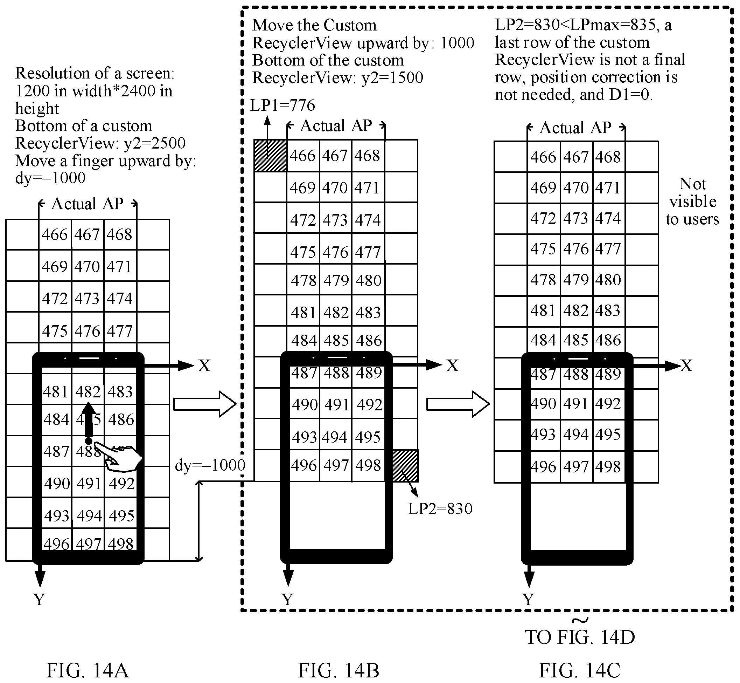

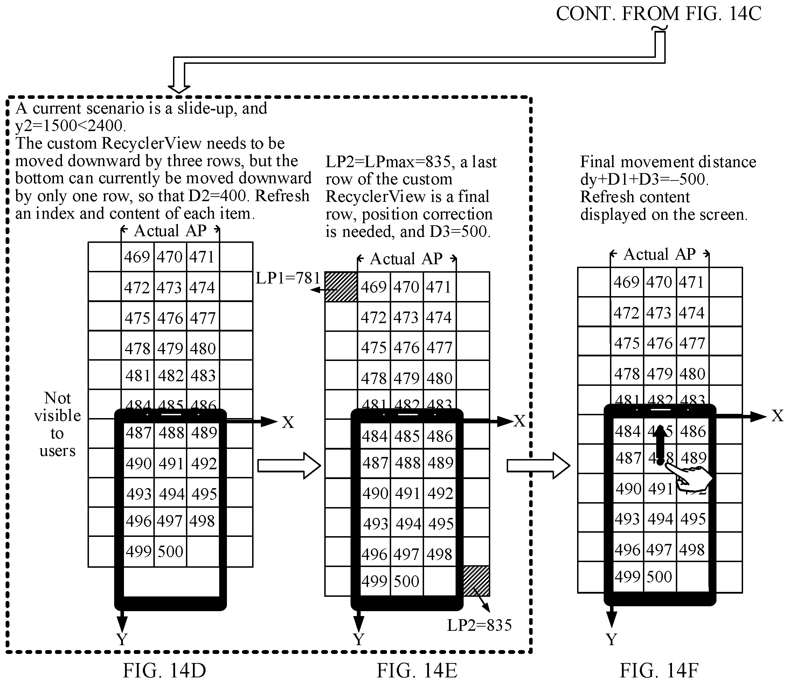

FIG. 14A, FIG. 14B, FIG. 14C, FIG. 14D, FIG. 14E, and FIG. 14F are diagrams of a scenario in which a single finger of a user slides up relative to a screen, a bottom of a custom RecyclerView slides up into the screen with the single finger, and a last row of the custom RecyclerView is a second-to-last row of an album.

As shown in FIG. 14A, at an initial moment, a Y-axis coordinate of a top of the custom RecyclerView is y1=-1900 pixels, and a Y-axis coordinate of the bottom of the custom RecyclerView is y2=2500 pixels. In this case, a distance between a bottom edge of the display screen and a bottom edge of the recycler view is a seventh distance. The user may touch and hold a region corresponding to an actual adapter position index 488 with a single finger, and slide up by a distance of 1000 pixels (which is also referred to as an eighth distance). In an (M1)th reporting cycle, the mobile phone detects a slide-up by the distance of 1000 pixels, that is, dy=-1000 pixels. In response to the single-finger slide-up operation (also referred to as a third operation) of the user, as shown in FIG. 14B, the mobile phone moves the custom RecyclerView upward by 1000 pixels. In this case, the Y-axis coordinate of the top of the custom RecyclerView is updated to y1=-1900-1000=-2900 pixels, and the Y-axis coordinate of the bottom of the custom RecyclerView is updated to y2=2500-1000=1500 pixels.

Then, the mobile phone sequentially performs the following three determining steps.

First determining step

The mobile phone obtains an actual layout position index value of an ItemView of the custom RecyclerView. As shown in FIG. 14B, a first actual layout position index value in a first row and a first column of the custom RecyclerView is LP1=776, and a last actual layout position index value in a last row and a last column of the custom RecyclerView is LP2=830. LP1 and LP2 may be obtained through calculation based on an actual AP value of the custom RecyclerView and the foregoing relational expression (1). Details are not described herein again. Then, the mobile phone determines values of LP2=830 and LPmax=835. Because LP2<LPmax, the mobile phone may determine that the last row of the custom RecyclerView is not a last row of the album, and the custom RecyclerView does not carry a last image in the album. If the finger of the user continues to slide up, an image corresponding to each ItemView in the custom RecyclerView may still be updated, so that the user can see another image that is not displayed in the album and that has a larger actual LP value. As shown in FIG. 14C, the mobile phone does not need to perform first position correction on the custom RecyclerView, and D1=0.

Second determining step

The mobile phone compares values of the Y-axis coordinate y2=1500 pixels of the bottom of the RecyclerView and a Y-axis coordinate Y2=2400 pixels of the bottom of the screen. Because y2<Y2, the bottom of the custom RecyclerView has slid into the screen. Therefore, to enable the custom RecyclerView to carry more images with larger actual LP values, the mobile phone needs to move the custom RecyclerView downward.

For example, the mobile phone may calculate, based on a relational expression, a quantity of rows to be moved downward:

$$\left\lceil \frac{2400-1500}{400} \right\rceil = 3 .$$

The current scenario is a single-finger slide-up, and the Y-axis coordinate y2 of the bottom of the custom RecyclerView=1500<2400. Theoretically, the custom RecyclerView needs to be moved downward by three rows. However, because the last row of the custom RecyclerView is the second-to-last row of the album, actually, the custom RecyclerView can be moved downward by only one row.

Correspondingly, a downward movement distance of the custom RecyclerView is 400 pixels*1 row=400 pixels, that is, D2=400.

As shown in FIG. 14D, after the custom RecyclerView is moved downward by the distance of 400 pixels, the Y-axis coordinate of the bottom of the custom RecyclerView is updated to y2=1500+400=1900 pixels. In an example, the mobile phone updates an actual adapter position index value of each ItemView based on a relational expression of actual AP+1 row*3 columns. For example, a first row of actual AP values of the custom RecyclerView are updated from 466, 467, and 468 shown in FIG. 14C to 469, 470, and 471 shown in FIG. 14D; ...; and a last row of actual AP values of the custom RecyclerView are updated from 496 and 497 shown in FIG. 14C to 499 and 500 shown in FIG. 14D. Because a photo to which 500 points is the last image in the album, original 498 may be updated to 500 or vacant. In another example, the mobile phone updates an actual adapter position index value of each ItemView based on a relational expression of actual AP+1 row*3 columns+1, ensuring that a last ItemView is not blank.

It may be understood that in the second determining step, the mobile phone first moves the custom RecyclerView downward by one row, and then adds 3 to AP values corresponding to a second to a fifth columns of ItemViews of the custom RecyclerView, which is equivalent to that the ItemViews are not moved, so that the user visually sees that a position of each image on the screen remains unchanged.

Third determining step

The mobile phone obtains an actual layout position index value of the last ItemView of the current custom RecyclerView again. As shown in FIG. 14D, the first actual layout position index value of the current custom RecyclerView is LP1=776+5=781, and the last actual layout position index value is LP2=830+5=835. Then, values of LP2=835 and LPmax=835 are determined. Because LP2=LPmax, the last row of the current custom RecyclerView is the last row of the album. To avoid a blank region between the bottom of the custom RecyclerView and the bottom of the screen, the mobile phone needs to perform second position correction on the custom RecyclerView. As shown in FIG. 14E, the mobile phone may move the custom RecyclerView downward by (2400-1900)=500 pixels, that is, D3=500. In this case, the Y-axis coordinate of the bottom of the custom RecyclerView is updated to y2=2400 pixels, and the bottom of the custom RecyclerView is aligned with the bottom of the screen. D2 and D3 are referred to as a ninth distance.

After obtaining dy=-1000, D1=0, D2=400, and D3=500 in the foregoing steps, the mobile phone may obtain a final movement distance dy+D1+D3=-500, and refresh content displayed on the screen. From the perspective of the user, the user sees that an album interface shown in FIG. 14A is directly updated to that shown in FIG. 14F, that is, the album interface performs a finger-following slide-up by 500 pixels, and there is a new row of images at the bottom of the screen.

**Example 4**

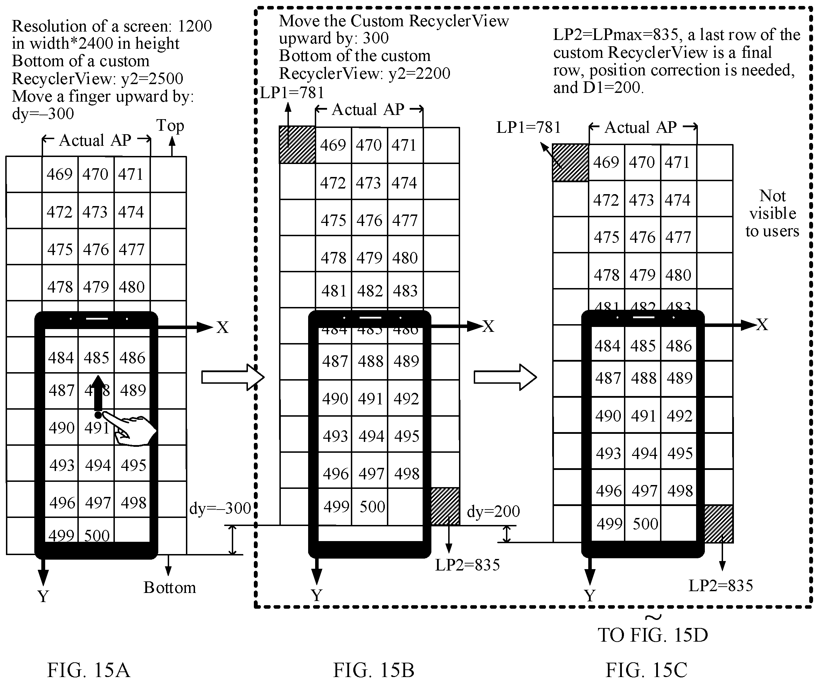

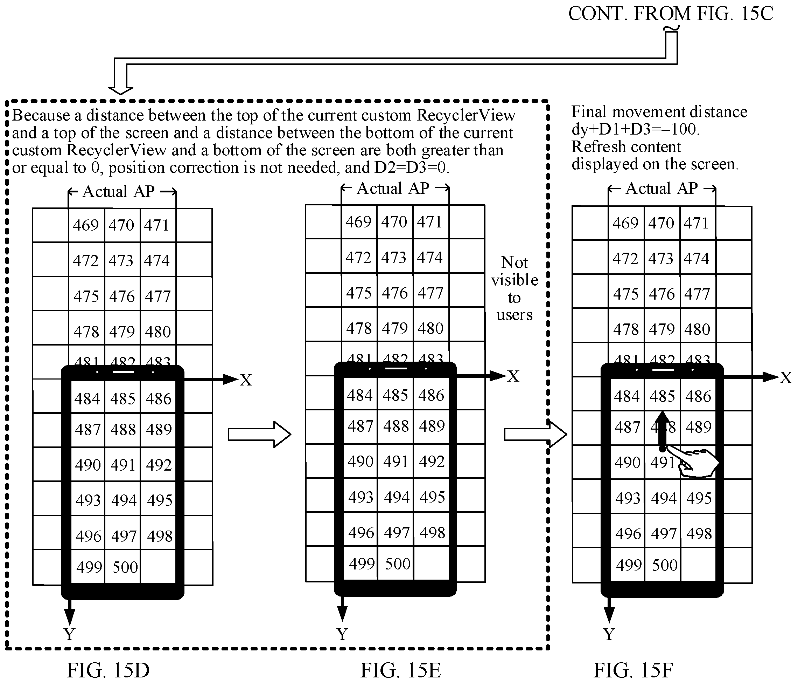

FIG. 15A, FIG. 15B, FIG. 15C, FIG. 15D, FIG. 15E, and FIG. 15F are diagrams of a scenario in which a single finger of a user slides up relative to a screen, a bottom of a custom RecyclerView slides up into the screen with the single finger, and a last row of the custom RecyclerView is a last row of an album.

As shown in FIG. 15A, at a moment, a Y-axis coordinate of a top of the custom RecyclerView is y1=-1900 pixels, and a Y-axis coordinate of the bottom of the custom RecyclerView is y2=2500 pixels. In this case, a distance between a bottom edge of the display screen and a bottom edge of the recycler view is a fourth distance. The user may touch and hold a region corresponding to an actual adapter position index 491 with a single finger, and slide up by a distance of 300 pixels. In an $(M2)^{th}$ reporting cycle, the mobile phone detects a slide-up by the distance of 300 pixels, that is, dy=-300 pixels. In response to the single-finger slide-up operation (also referred to as a second operation) of the user, as shown in FIG. 15B, the mobile phone moves the custom RecyclerView upward by 300 pixels (which is also referred to as a fifth distance). In this case, the Y-axis coordinate of the top of the custom RecyclerView is updated to y1=-1900-300=-2200 pixels, and the Y-axis coordinate of the bottom of the custom RecyclerView is updated to y2=2500-300=2200 pixels.

Then, the mobile phone sequentially performs the following three determining steps.

First determining step

The mobile phone obtains an actual layout position index value of an ItemView of the custom RecyclerView. As shown in FIG. 15B, a first actual layout position index value in a first row and a first column of the custom RecyclerView is LP1=781, and a last actual layout position index value in a last row and a last column of the custom RecyclerView is LP2=835. LP1 and LP2 may be obtained through calculation based on an actual AP value of the custom RecyclerView and the foregoing relational expression (1). Then, the mobile phone determines values of LP2=837 and LPmax=835. Because LP2=LPmax, the last row of the custom RecyclerView is the last row of the album. With reference to the descriptions of Example 1 in the foregoing embodiment, when the last row of the custom RecyclerView is the last row of the album, it indicates that the custom RecyclerView cannot be updated with more images with larger actual AP values. To avoid a blank region between the bottom of the custom RecyclerView and a bottom of the screen, the mobile phone needs to correct a position of the custom RecyclerView, that is, perform first position correction on the custom RecyclerView. As shown in FIG. 15C, the mobile phone may move the custom RecyclerView downward by (2400-2200)=200 pixels, that is, D1=200. D1 is also referred to as a sixth distance. In this case, the Y-axis coordinate of the bottom of the custom RecyclerView is updated to y2=2400 pixels, and the bottom of the custom RecyclerView is aligned with the bottom of the screen.

Second determining step

The mobile phone compares values of the Y-axis coordinate y2=2400 pixels of the bottom of the RecyclerView and a Y-axis coordinate Y2=2400 pixels of the bottom of the screen. Because y2=Y2, the bottom of the custom RecyclerView has not slid into the screen yet. Therefore, as shown in FIG. 15D, the mobile phone does not need to move the custom RecyclerView downward, and D2=0.

Third determining step

With reference to the descriptions of Example 1 in the foregoing embodiment, in the second determining step, the custom RecyclerView is not moved downward, that is, the position of the custom RecyclerView remains unchanged, the distance between the bottom of the custom RecyclerView and the bottom of the screen is still 0, and the last row of the custom RecyclerView may not be the last row of the album. Therefore, as shown in FIG. 15E, the mobile phone does not need to perform second position correction on the custom RecyclerView, and D3=0.

After obtaining dy=-300, D1=200, and D3=0 in the foregoing steps, the mobile phone may obtain a final movement distance dy+D1+D3=-100, and refresh content displayed on the screen. From the perspective of the user, the user sees that an album interface shown in FIG. 15A is directly updated to that shown in FIG. 15F, that is, the album interface performs a finger-following slide-up by 100 pixels, and there is not one or more new rows of images at the bottom of the screen.

**Example 5**

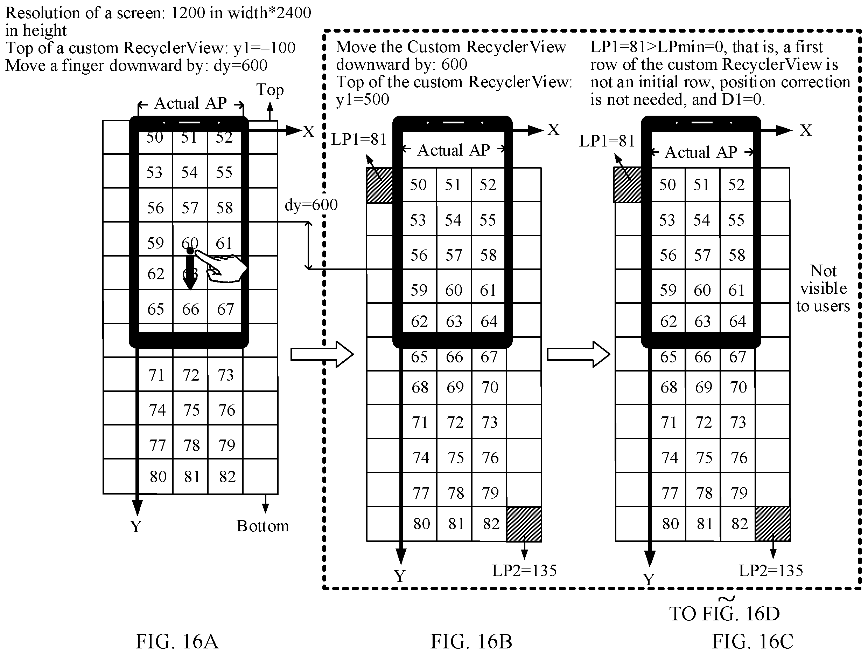

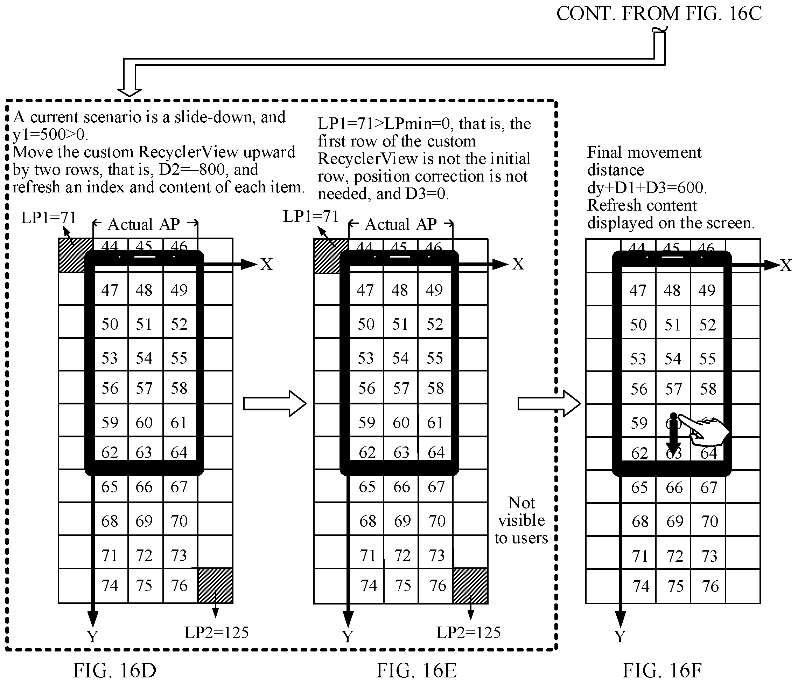

FIG. 16A, FIG. 16B, FIG. 16C, FIG. 16D, FIG. 16E, and FIG. 16F are diagrams of a scenario in which a single finger of a user slides down relative to a screen, a top of a custom RecyclerView slides down into the screen with the single finger, and a first row of the custom RecyclerView is not a first row of an album.

As shown in FIG. 16A, at an initial moment, a Y-axis coordinate of the top of the custom RecyclerView is y1=-100 pixels, and a Y-axis coordinate of a bottom of the custom RecyclerView is y2=4300 pixels. The user may touch and hold a region corresponding to an actual adapter position index 60 with a single finger, and slide down by a distance of 600 pixels. In this case, a distance between a bottom edge of the display screen and a bottom edge of the recycler view is a 10th distance. In an $(M3)^{th}$ reporting cycle, the mobile phone detects a slide-down by the distance of 600 pixels, that is, dy=600 pixels, which is also referred to as an 11th distance. In response to the single-finger slide-down operation (also referred to as a fourth operation) of the user, as shown in FIG. 16B, the mobile phone moves the custom RecyclerView downward by 600 pixels. In this case, the Y-axis coordinate of the top of the custom RecyclerView is updated to y1=-100+600=500 pixels, and the Y-axis coordinate of the bottom of the custom RecyclerView is updated to y2=4300+600=4900 pixels.

Then, the mobile phone sequentially performs the following three determining steps.

First determining step

The mobile phone obtains an actual layout position index value of an ItemView of the custom RecyclerView. As shown in FIG. 16B, a first actual layout position index value in a first row and a first column of the custom RecyclerView is actual LP1=81, and a last actual layout position index value in a last row and a last column of the custom RecyclerView is actual LP2=135. LP1 and LP2 may be obtained through calculation based on an actual AP value of the custom RecyclerView and the foregoing relational expression (1). Details are not described herein again. Then, the mobile phone determines values of LP1=81 and LPmin=0, to determine whether the first row of the custom RecyclerView is the first row of the album. When the first row of the custom RecyclerView is the first row of the album, it indicates that a top ItemView of the custom RecyclerView cannot be updated with more images with smaller actual AP values. When the custom RecyclerView is moved downward, if the top of the custom RecyclerView is moved into the screen, to avoid a blank region between the top of the custom RecyclerView and a top of the screen, the mobile phone needs to correct a position of the custom RecyclerView, that is, perform first position correction on the custom RecyclerView, to align the top of the custom RecyclerView with the top of the screen.

Because LP1>LPmin, the first row of the custom RecyclerView is not the first row of the album. The custom RecyclerView does not carry a first image in the album. If the finger of the user continues to slide down, an image corresponding to each ItemView in the custom RecyclerView may still be updated, so that the user can see another image that is not displayed in the album and that has a smaller actual LP value. Therefore, as shown in FIG. 16C, the mobile phone does not need to perform first position correction on the custom RecyclerView, and D1=0.

Second determining step

The mobile phone compares values of the Y-axis coordinate y1=500 pixels of the top of the RecyclerView and a Y-axis coordinate Y1=0 pixels of the top of the screen. Because y1>Y1, the top of the custom RecyclerView has slid into the screen. Therefore, to enable the custom RecyclerView to carry more images with smaller actual LP values, the mobile phone needs to move the custom RecyclerView upward.

For example, the mobile phone may calculate, based on a relational expression, a quantity of rows to be moved downward:

$$\left\lceil \frac{500-0}{400} \right\rceil = 2 .$$

Correspondingly, an upward movement distance of the custom RecyclerView is 400 pixels*2 rows=800 pixels, that is, D2=-800, which is also referred to as a 12th distance.

As shown in FIG. 16D, after the custom RecyclerView is moved upward by a distance of 800 pixels, the Y-axis coordinate of the top of the custom RecyclerView is updated to y1=500-800=-300 pixels. In addition, the mobile phone may update an actual adapter position index value of each ItemView based on a relational expression of actual AP-2 rows*3 columns, that is, subtract a second value from an AP value corresponding to each item view. For example, a first row of actual AP values of the custom RecyclerView are updated from 50, 51, and 52 shown in FIG. 16C to 44, 45, and 46 shown in FIG. 16D; ...; and a last row of actual AP values of the custom RecyclerView are updated from 80, 81, and 82 shown in FIG. 16C to 74, 75, and 76 shown in FIG. 16D.

It may be understood that in the second determining step, the mobile phone first moves the custom RecyclerView upward by two rows, and then subtracts 6 from AP values corresponding to a second to a fifth columns of ItemViews of the custom RecyclerView, which is equivalent to that the ItemViews are not moved, so that the user visually sees that a position of each image on the screen remains unchanged.

Third determining step

The mobile phone obtains an actual layout position index value of a first ItemView of the custom RecyclerView again. In the second determining step, the custom RecyclerView is moved upward by two rows. Therefore, 10 is subtracted from the actual layout position index value of each ItemView in the custom RecyclerView. As shown in FIG. 16E, the first actual layout position index value of the custom RecyclerView is actual LP1=81-10=71, and the last actual layout position index value is actual LP2=135-10=125. Then, the mobile phone determines values of LP1=71 and LPmin=0. Because LP1>LPmin, the first row of the custom RecyclerView is not the first row of the album, and the custom RecyclerView does not carry the first image in the album. If the finger of the user continues to slide down, the image corresponding to each ItemView the custom RecyclerView may still be updated, so that the user can see another image that is not displayed in the album and that has a smaller actual LP value. Therefore, the mobile phone does not need to perform second position correction on the custom RecyclerView, and D3=0.

After obtaining dy=600, D1=0, and D3=0 in the foregoing steps, the mobile phone may obtain a final movement distance D=dy+D1+D3=600, and refresh content displayed on the screen. From the perspective of the user, the user sees that an album interface shown in FIG. 16A is directly updated to that shown in FIG. 16F, that is, the album interface performs a finger-following slide-down by 600 pixels, and there are two new rows of images at the top of the screen.

**Example 6**

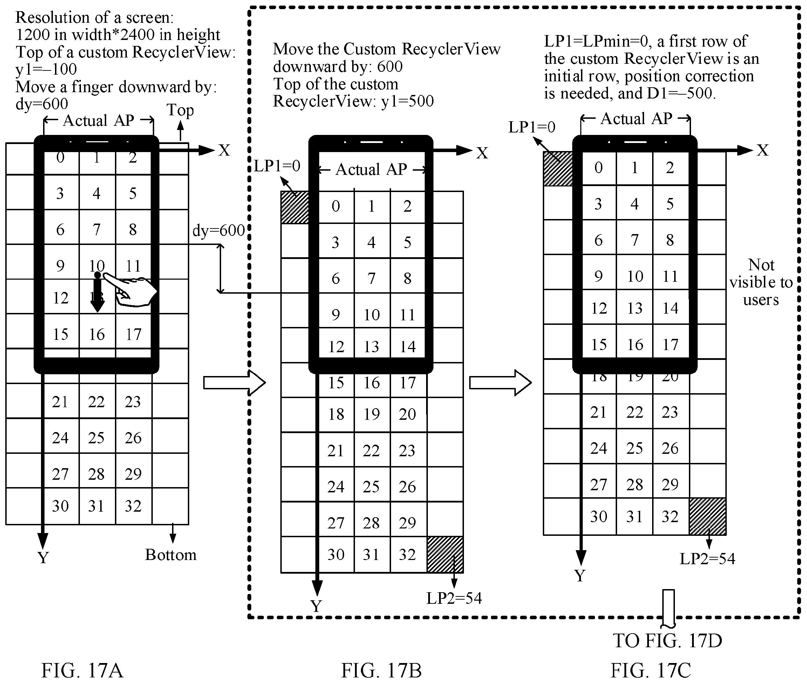

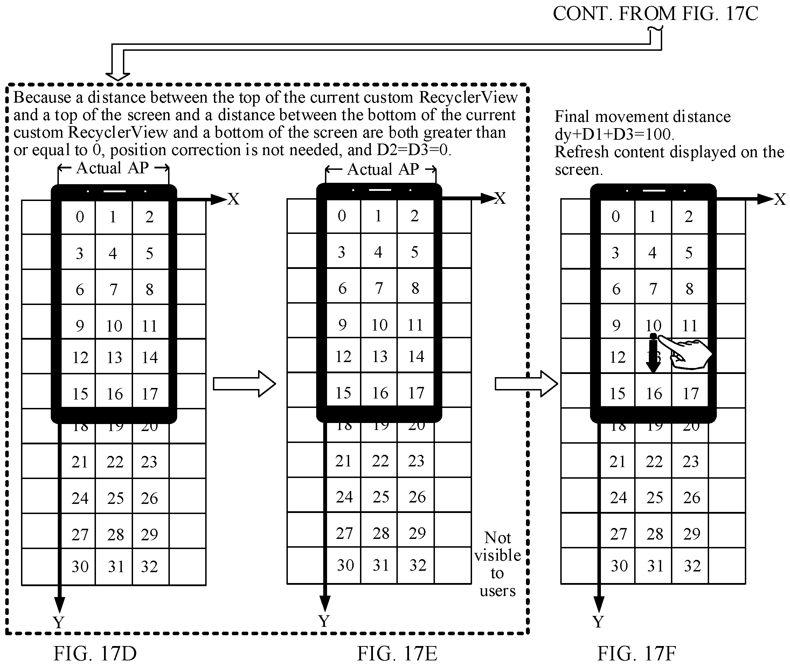

FIG. 17A, FIG. 17B, FIG. 17C, FIG. 17D, FIG. 17E, and FIG. 17F are diagrams of a scenario in which a single finger of a user slides down relative to a screen, a top of a custom RecyclerView slides down (which is also referred to as a second direction) into the screen with the single finger, and a first row of the custom RecyclerView is a first row of an album.

As shown in FIG. 17A, at an initial moment, a Y-axis coordinate of the top of the custom RecyclerView is y1=-100 pixels, and a Y-axis coordinate of the top of the custom RecyclerView is y2=4300 pixels. The user may touch and hold a region corresponding to an actual adapter position index 10 with a single finger, and slide down by a distance of 600 pixels. In this case, a distance between a bottom edge of the display screen and a bottom edge of the recycler view is a 13th distance. In an (M4)th reporting cycle, the mobile phone detects a slide-down by the distance of 600 pixels, that is, dy=600 pixels, which is also referred to as a 14th distance. In response to the single-finger slide-down operation (also referred to as a fifth operation) of the user, as shown in FIG. 17B, the mobile phone moves the custom RecyclerView downward by 600 pixels. In this case, the Y-axis coordinate of the top of the custom RecyclerView is updated to y1=-100+600=500 pixels, and the Y-axis coordinate of the bottom of the custom RecyclerView is updated to y2=4300+600=4900 pixels.

Then, the mobile phone sequentially performs the following three determining steps.

First determining step

The mobile phone obtains an actual layout position index value of an ItemView of the custom RecyclerView. As shown in FIG. 17B, a first actual layout position index value in a first row and a first column of the custom RecyclerView is LP1=0, and a last actual layout position index value in a last row and a last column of the custom RecyclerView is LP2=54. LP1 and LP2 may be obtained through calculation based on an actual AP value of the custom RecyclerView and the foregoing relational expression (1). Details are not described herein again. Then, the mobile phone determines values of LP1=0 and LPmin=0, to determine whether the first row of the custom RecyclerView is the first row of the album. Because LP1=LPmin, when the first row of the custom RecyclerView is the first row of the album, it indicates that a top ItemView of the custom RecyclerView cannot be updated with more images with smaller actual AP values. When the custom RecyclerView is moved downward, if the top of the custom RecyclerView is moved into the screen, to avoid a blank region between the top of the custom RecyclerView and a top of the screen, first position correction needs to be performed on the custom RecyclerView. As shown in FIG. 17C, the mobile phone may move the custom RecyclerView upward by (500-0)=500 pixels (which is also referred to as a 15th distance), that is, D1=-500. The Y-axis coordinate of the top of the custom RecyclerView is updated to y1=0 pixels. The top of the custom RecyclerView is aligned with the top of the screen.

Second determining step

The mobile phone compares values of the Y-axis coordinate y1=0 pixels of the top of the RecyclerView and a Y-axis coordinate Y1=0 pixels of the top of the screen. Because y1=Y1, the top of the custom RecyclerView has not slid into the screen yet. Therefore, as shown in FIG. 17D, the mobile phone does not need to move the custom RecyclerView upward to load a new image, that is, a position of the custom RecyclerView remains unchanged, and D2=0.

Third determining step

In the second determining step, the custom RecyclerView is not moved upward, that is, the position of the custom RecyclerView remains unchanged, and there is no blank region between the top of the custom RecyclerView and the top of the screen. Therefore, as shown in FIG. 17E, second position correction does not need to be performed on the custom RecyclerView, and D3=0.
After obtaining dy=600, D1=-500, and D3=0 in the foregoing steps, the mobile phone may obtain a final movement distance D=dy+D1+D3=100, and refresh content displayed on the screen. From the perspective of the user, the user sees that an album interface shown in FIG. 17A is directly updated to that shown in FIG. 17F, that is, the album interface performs a finger-following slide-down by 100 pixels, and there is not one or more new rows of images at the top of the screen.

**Example 7**

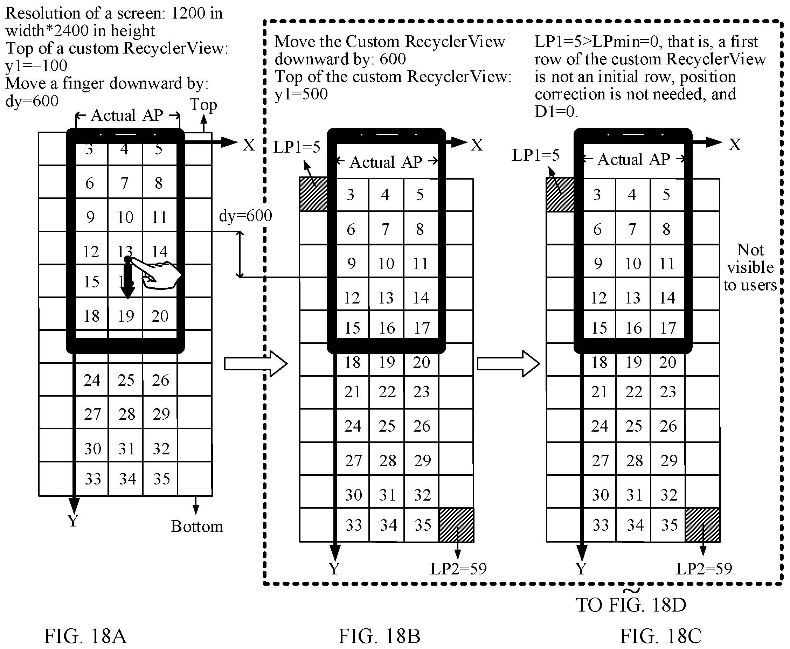

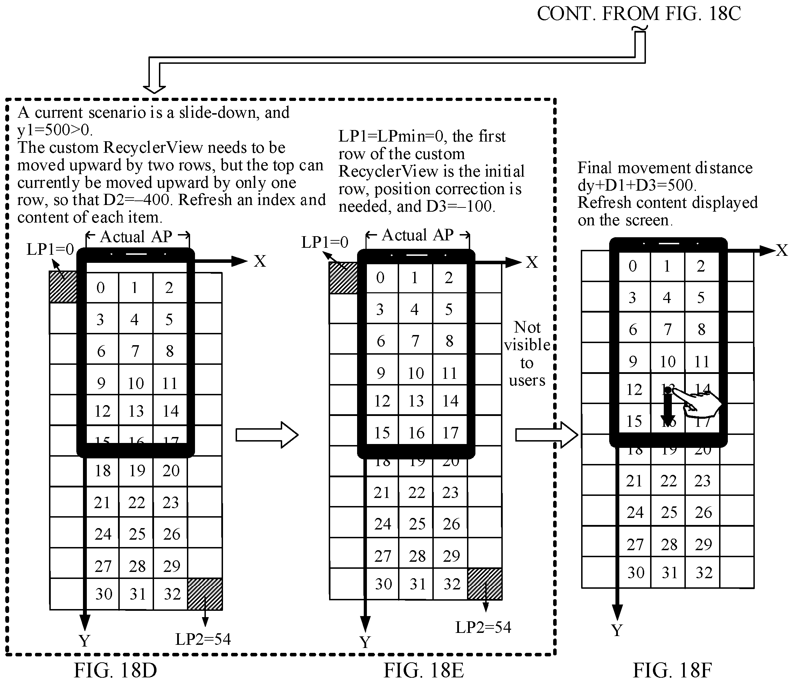

FIG. 18A, FIG. 18B, FIG. 18C, FIG. 18D, FIG. 18E, and FIG. 18F are diagrams of a scenario in which a single finger of a user slides down relative to a screen, a top of a custom RecyclerView slides down into the screen with the single finger, and a first row of the custom RecyclerView is a second row of an album.
As shown in FIG. 18A, at an initial moment, a Y-axis coordinate of the top of the custom RecyclerView is y1=-100 pixels, and a Y-axis coordinate of a bottom of the custom RecyclerView is y2=4300 pixels. The user may touch and hold a region corresponding to an actual adapter position index 13 with a single finger, and slide down by a distance of 600 pixels. In this case, a distance between a bottom edge of the display screen and a bottom edge of the recycler view is a 16th distance. In an (M5)th reporting cycle, the mobile phone detects a slide-down by the distance of 600 pixels, that is, dy=600 pixels, which is also referred to as a 17th distance. In response to the single-finger slide-down operation (also referred to as a sixth operation) of the user, as shown in FIG. 18B, the mobile phone moves the custom RecyclerView downward by 600 pixels. In this case, the Y-axis coordinate of the top of the custom RecyclerView is updated to y1=-100+600=500 pixels, and the Y-axis coordinate of the bottom of the custom RecyclerView is updated to y2=4300+600=4900 pixels.
Then, the mobile phone sequentially performs the following three determining steps.

First determining step

The mobile phone obtains an actual layout position index value of an ItemView of the custom RecyclerView. As shown in FIG. 18B, a first actual layout position index value in a first row and a first column of the custom RecyclerView is LP1=5, and a last actual layout position index value in a last row and a last column of the custom RecyclerView is LP2=59. Then, values of LP1=5 and LPmin=0 are determined, to determine whether the first row of the custom RecyclerView is a first row of the album. Because LP1>LPmin, the first row of the custom RecyclerView is not the first row of the album, and a top ItemView of the custom RecyclerView may be updated with more images with smaller actual AP values. Therefore, as shown in FIG. 18C, first position correction does not need to be performed on the custom RecyclerView, and D1=0.

Second determining step

The mobile phone compares values of the Y-axis coordinate y1=500 pixels of the top of the RecyclerView and a Y-axis coordinate Y1=0 pixels of the top of the screen. Because y1>Y1, the top of the custom RecyclerView has slid into the screen. Therefore, to enable the custom RecyclerView to carry more images with smaller actual LP values, the mobile phone needs to move the custom RecyclerView upward.

For example, the mobile phone may calculate, based on a relational expression, a quantity of rows to be moved downward:

$$\left\lceil \frac{500-0}{400} \right\rceil = 2 \ .$$

The current scenario is a single-finger slide-down, and the Y-axis coordinate y1 of the top of the custom RecyclerView=500>0. Theoretically, the custom RecyclerView needs to be moved upward by two rows. However, because the first row of the custom RecyclerView is the second row of the album, actually, the custom RecyclerView can be moved upward by only one row.

Correspondingly, an upward movement distance of the custom RecyclerView is 400 pixels*1 row=400 pixels, that is, D2=-400.

As shown in FIG. 18D, after the custom RecyclerView is moved upward by a distance of 400 pixels, the Y-axis coordinate of the top of the custom RecyclerView is updated to y2=500-400=100 pixels. In addition, the mobile phone may update an actual adapter position index value of each ItemView based on a relational expression of actual AP-1 row*3 columns. For example, a first row of actual AP values of the custom RecyclerView are updated from 3, 4, and 5 shown in FIG. 18C to 0, 1, and 2 shown in FIG. 18D; ...; and a last row of actual AP values of the custom RecyclerView are updated from 33, 34, and 35 shown in FIG. 18C to 30, 31, and 32 shown in FIG. 18D.

It may be understood that in the second determining step, the mobile phone first moves the custom RecyclerView upward by one row, and then subtracts 3 from AP values corresponding to a second to a fifth columns of ItemViews of the custom RecyclerView, which is equivalent to that the ItemViews are not moved, so that the user visually sees that a position of each image on the screen remains unchanged.

Third determining step

The mobile phone obtains the first actual layout position index value of the custom RecyclerView again. In the second determining step, the custom RecyclerView is moved upward by one row. Therefore, 5 (a quantity of columns of the custom RecyclerView) is subtracted from the actual layout position index value of each ItemView in the custom RecyclerView. As shown in FIG. 18D, the first actual layout position index value of the custom RecyclerView is LP1=5-5=0, and the last actual layout position index value is LP2=59-5=54. Then, values of LP1=0 and LPmin=0 are determined. Because LP1=LPmin, when the first row of the custom RecyclerView is the first row of the album, a top ItemView of the custom RecyclerView cannot be updated with more images with smaller actual AP values. When the custom RecyclerView is moved downward, if the top of the custom RecyclerView is moved into the screen, to avoid a blank region between the top of the custom RecyclerView and a top of the screen, second position correction needs to be performed on the custom RecyclerView. As shown in FIG. 18E, the mobile phone may move the custom RecyclerView upward by (100-0)=100 pixels, that is, D3=-100. In this case, the Y-axis coordinate of the top of the custom RecyclerView is updated to y1=0 pixels, and the top of the custom RecyclerView is aligned with the top of the screen. D2 and D3 are referred to as an 18th distance.

After obtaining dy=600, D1=0, and D3=-100 in the foregoing steps, the mobile phone may obtain a final movement distance D=dy+D1+D3=500, and refresh content displayed on the screen. From the perspective of the user, the user sees that an album interface shown in FIG. 18A is directly updated to that shown in FIG. 18F, that is, the album interface performs a finger-following slide-down by 500 pixels, and there is a new row of images at the top of the screen.

**Example 8**

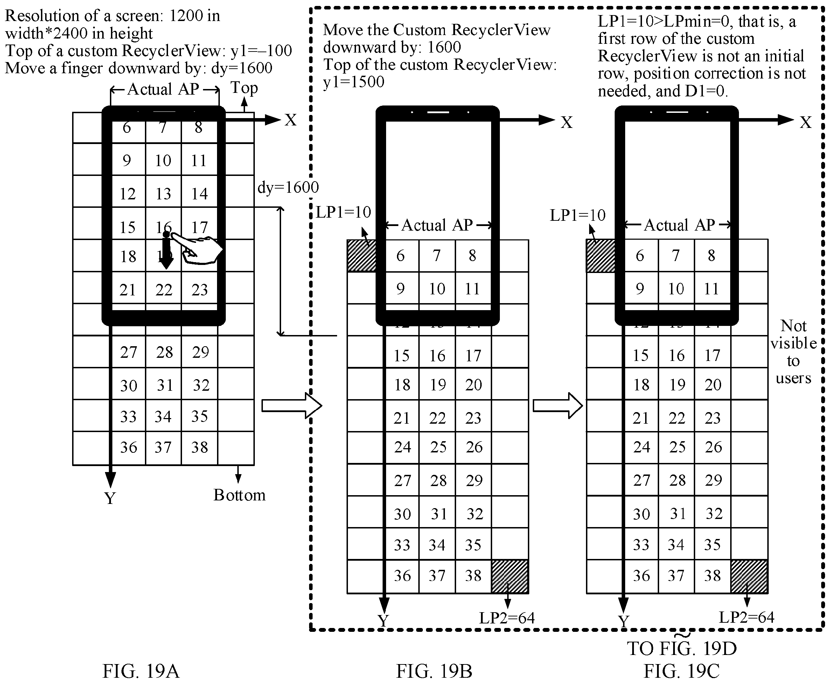

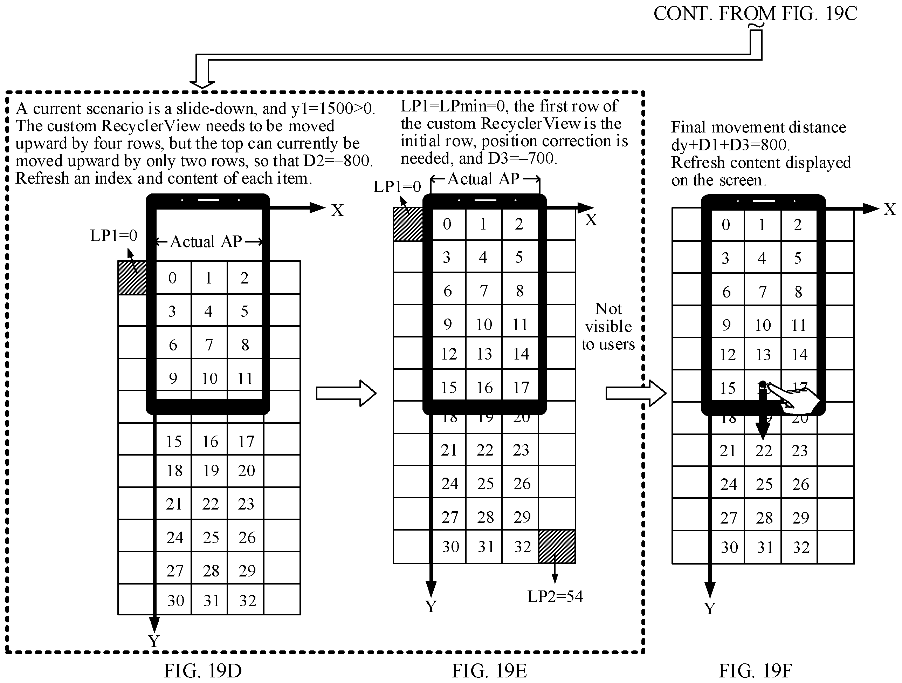

FIG. 19A, FIG. 19B, FIG. 19C, FIG. 19D, FIG. 19E, and FIG. 19F are diagrams of a scenario in which a single finger of a user slides down relative to a screen, a top of a custom RecyclerView slides down into the screen with the single finger, and a first row of the custom RecyclerView is a third row of an album.

As shown in FIG. 19A, at an initial moment, a Y-axis coordinate of the top of the custom RecyclerView is y1=-100 pixels, and a Y-axis coordinate of a bottom of the custom RecyclerView is y2=4300 pixels. The user may touch and hold a region corresponding to an actual adapter position index 16 with a single finger, and slide down by a distance of 1600 pixels. In this case, a distance between a bottom edge of the display screen and a bottom edge of the recycler view is a 16th distance. In an (M6)th reporting cycle, the mobile phone detects a slide-down by the distance of 1600 pixels, that is, dy=1600 pixels, which is also referred to as a 17th distance. In response to the single-finger slide-down operation (also referred to as a sixth operation) of the user, as shown in FIG. 19B, the mobile phone moves the custom RecyclerView downward by 1600 pixels. In this case, the Y-axis coordinate of the top of the custom RecyclerView is updated to y1=-100+1600=1500 pixels, and the Y-axis coordinate of the bottom of the custom RecyclerView is updated to y2=4300+1600=5900 pixels.

Then, the mobile phone sequentially performs the following three determining steps.

First determining step

The mobile phone obtains an actual layout position index value of an ItemView of the custom RecyclerView. As shown in FIG. 19B, a first actual layout position index value in a first row and a first column of the custom RecyclerView is LP1=10, and a last actual layout position index value in a last row and a last column of the custom RecyclerView is LP2=64. LP1 and LP2 may be obtained through calculation based on an actual AP value of the custom RecyclerView and the foregoing relational expression (1). Details are not described herein again. Then, values of LP1=10 and LPmin=0 are determined, to determine whether the first row of the custom RecyclerView is a first row of the album. Because LP1>LPmin, the first row of the custom RecyclerView is not the first row of the album. The custom RecyclerView does not carry a first image in the album. If the finger of the user continues to slide down, an image corresponding to each ItemView in the custom RecyclerView may still be updated, so that the user can see another image that is not displayed in the album and that has a smaller actual LP value. Therefore, as shown in FIG. 19C, the mobile phone does not need to perform first position correction on the custom RecyclerView, and D1=0.

Second determining step

The mobile phone compares values of the Y-axis coordinate y1=1500 pixels of the top of the RecyclerView and a Y-axis coordinate Y1=0 pixels of the top of the screen. Because y1>Y1, the top of the custom RecyclerView has slid into the screen. Therefore, to enable the custom RecyclerView to carry more images with smaller actual LP values, the mobile phone needs to move the custom RecyclerView upward.

For example, the mobile phone may calculate, based on a relational expression, a quantity of rows to be moved downward:

$$\left\lceil \frac{1500 - 0}{400} \right\rceil = 4 \, .$$

The current scenario is a slide-down, and the Y-axis coordinate y1 of the top of the custom Recycler-View=1500>0. Theoretically, the custom RecyclerView needs to be moved upward by four rows. However, because the first row of the custom RecyclerView is the third row of the album, actually, the custom RecyclerView can be moved upward by only two rows.

Correspondingly, an upward movement distance of the custom RecyclerView is 400 pixels*2 rows=800 pixels, that is, D2=-800.

As shown in FIG. 19D, after the custom RecyclerView is moved upward by a distance of 800 pixels, the Y-axis coordinate of the top of the custom RecyclerView is updated to y1=1500-800=700 pixels. In addition, the mobile phone may update an actual adapter position index value of each ItemView based on a relational expression of actual AP-2 rows*3 columns. For example, a first row of actual AP values of the custom RecyclerView are updated from 6, 7, and 9 shown in FIG. 19C to 0, 1, and 2 shown in FIG. 19D; ...; and a last row of actual AP values of the custom RecyclerView are updated from 36, 37, and 38 shown in FIG. 19C to 30, 31, and 32 shown in FIG. 19D.

It may be understood that in the second determining step, the mobile phone first moves the custom RecyclerView upward by two rows, and then subtracts 6 from AP values corresponding to a second to a fifth columns of Item Views of the custom RecyclerView, which is equivalent to that the Item Views are not moved, so that the user visually sees that a position of each image on the screen remains unchanged.

Third determining step

The mobile phone obtains an actual layout position index value of a first ItemView of the custom RecyclerView again. As shown in FIG. 19D, the first actual layout position index value of the custom RecyclerView is LP1=10-5*2=0, and the last actual layout position index value is LP2=64-5*2=54. Then, values of LP1=0 and LPmin=0 are determined. Because LP1=LPmin, when the first row of the custom RecyclerView is the first row of the album, it indicates that a top ItemView of the custom RecyclerView cannot be updated with more images with smaller actual AP values. When the custom RecyclerView is moved downward, if the top of the custom RecyclerView is moved into the screen, to avoid a blank region between the top of the custom RecyclerView and a top of the screen, the mobile phone needs to correct a position of the custom RecyclerView, that is, perform second position correction on the custom RecyclerView. As shown in FIG. 19E, the mobile phone may move the custom RecyclerView upward by (700-0)=700 pixels, that is, D3=-700. In this case, the Y-axis coordinate of the top of the custom RecyclerView is updated to y1=0 pixels, and the top of the custom RecyclerView is aligned with the top of the screen. D2 and D3 are referred to as an 18th distance.

After obtaining dy=1600, D1=0, and D3=-700 in the foregoing steps, the mobile phone may obtain a final movement distance D=dy+D1+D3=900, and refresh content displayed on the screen. From the perspective of the user, the user sees that an album interface shown in FIG. 19A is directly updated to that shown in FIG. 19F, that is, the album interface performs a finger-following slide-down by 900 pixels, and there are two new rows of images at the top of the screen.

It should be noted that an example in which the custom RecyclerView is at the level 3 is used in the foregoing eight examples, some common image scrolling scenarios are listed, and this application is not limited thereto. It should be understood that during actual implementation, the user may trigger, through a scale operation on the screen, the mobile phone to change the level of the custom RecyclerView, and change the quantity of columns of images displayed on the screen, to change the actual adapter position index value in the custom RecyclerView.

In addition, the foregoing eight examples are described by using an example in which an image is displayed in the scrolling manner based on the custom RecyclerView. During actual implementation, a list may be displayed in the scrolling manner based on the custom RecyclerView with reference to the foregoing examples. In addition, a scroll direction of the custom RecyclerView is not specifically limited in this application. For example, the custom RecyclerView scrolls to the left in response to a slide-left operation of the user, and when a right edge of the RecyclerView is reached through scrolling, the electronic device moves the entire RecyclerView to the right, and fills the RecyclerView with content again. For another example, the custom RecyclerView scrolls to the right in response to a slide-right operation of the user, and when a left edge of the RecyclerView is reached through scrolling, the electronic device moves the entire RecyclerView to the left, and fills the RecyclerView with content again.

Based on the foregoing eight examples, this application further provides a diagram of a software architecture of an improved electronic device and a general flowchart corresponding to a custom RecyclerView-based image scrolling solution.

Based on the touch event receiving layer, the custom RecyclerView, the grid form layout manager, and the custom layout manager shown in FIG. 4, the following specifically describes a specific interaction process between functional modules in a process of implementing a custom RecyclerView-based image scrolling method.

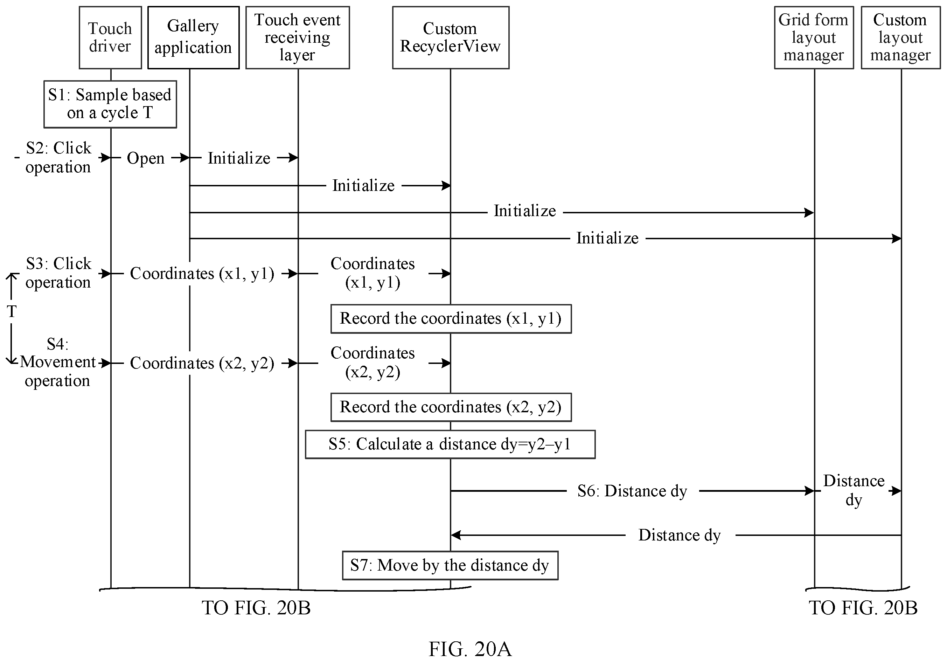

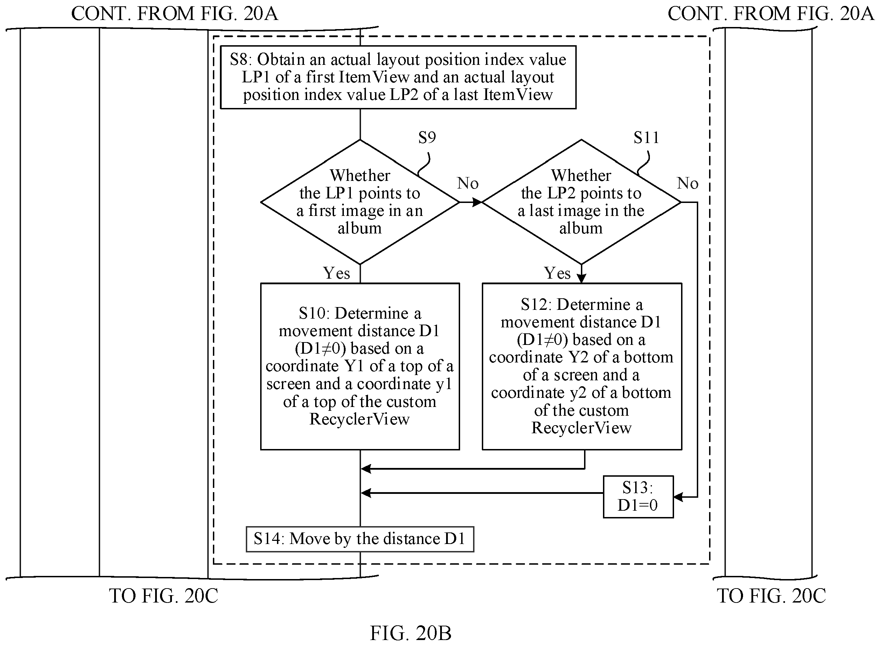

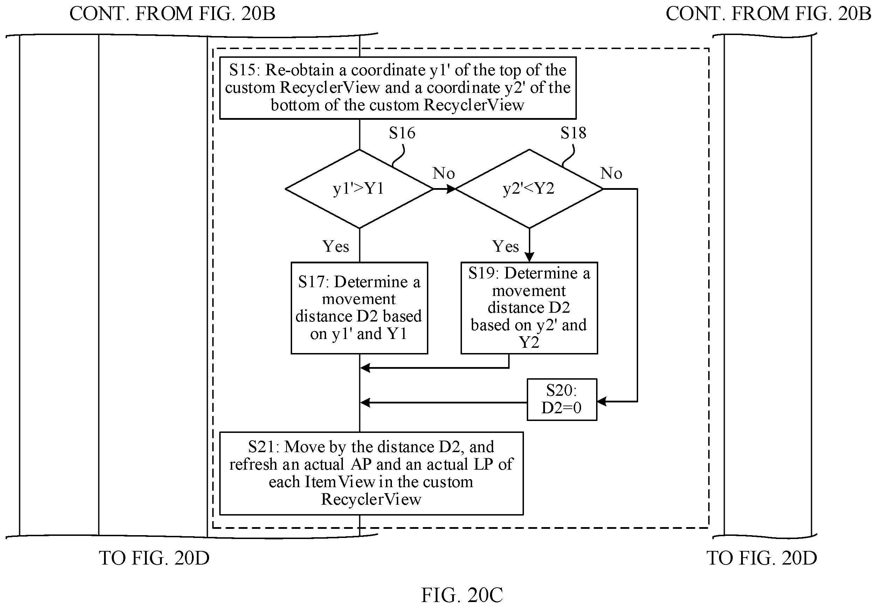

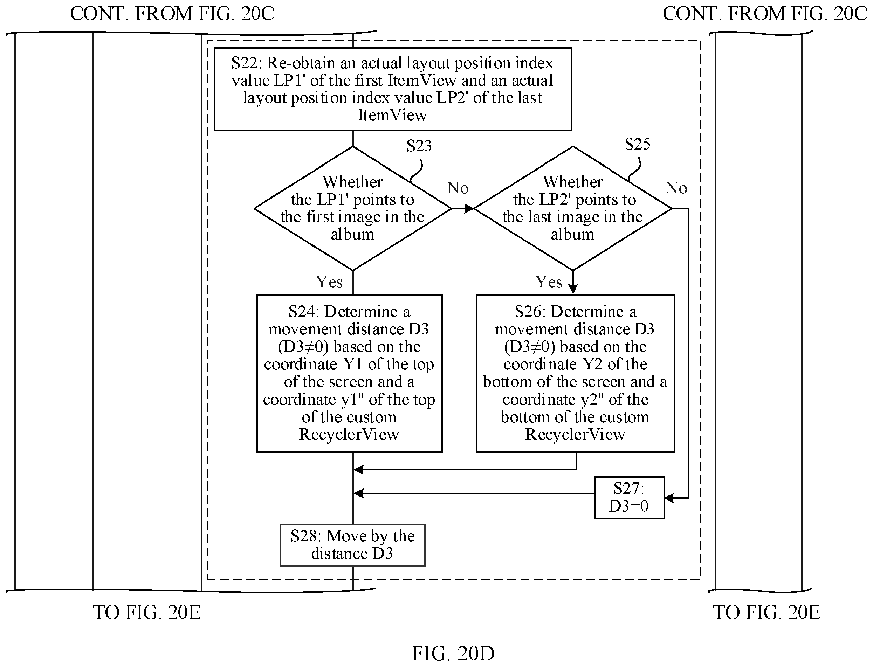

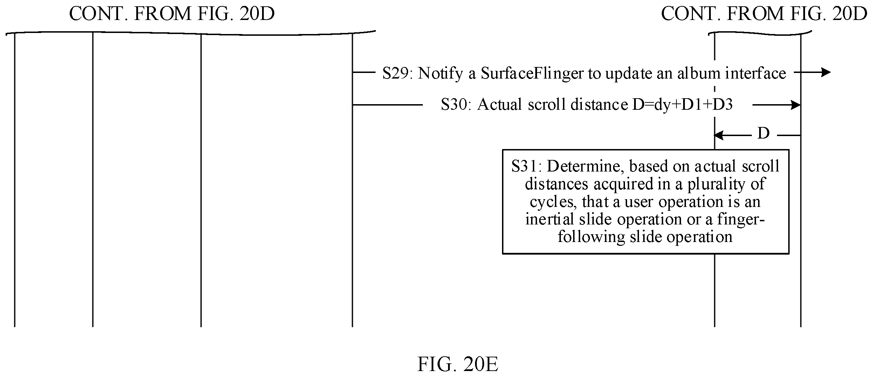

For example, FIG. 20A, FIG. 20B, FIG. 20C, FIG. 20D, FIG. 20E, and FIG. 20F are flowcharts of a custom RecyclerView-based image scrolling method. As shown in FIG. 20A, FIG. 20B, FIG. 20C, FIG. 20D, FIG. 20E, and FIG. 20F, the method may include the following S1 to S21.

S1: The touch driver samples a touch operation of a user based on a cycle T.

The cycle is also referred to as a deployment cycle and a reporting cycle, and is a cycle in which the touch driver acquires the touch operation of the user.

An example in which the touch driver performs sampling for 240 times per second is used. The cycle T=1/240=4.16 ms. In other words, the touch driver samples touch data every 4.16 ms. If the user presses the touchscreen with a single finger or two fingers in a cycle, the touch driver may determine a touch position of the single finger or the two fingers based on a voltage change and the like.

S2: The touch driver receives a click operation of the user on an icon of the gallery application, and starts to run the gallery application.

For example, when the user wants to view an image, the user may click the icon of Gallery shown in FIG. 8A. The touch driver receives a click operation of the user on the icon of Gallery, and transfers the click operation to the application processor. The application processor runs the gallery application. Then, the gallery application initializes the touch event receiving layer, the custom RecyclerView, the grid form layout manager, and the custom layout manager. After creation and initialization are completed, the mobile phone displays the gallery interface shown in FIG. 8B. Then, the user may select one of the album cards. For example, as shown in FIG. 8B, the user may click the "Camera" card. In response to the click operation of the user on the "Camera" card, the mobile phone displays the camera album interface shown in FIG. 8C.

S3: The touchscreen receives a single-finger click operation of the user on an album interface at a moment t1, and sends coordinates (x1, y1) corresponding to the click operation to the touch event receiving layer. The touch event receiving layer forwards the coordinates (x1, y1) to the custom RecyclerView. The recycler view control records the coordinates (x1, y1).

It should be noted that a size of the touch event receiving layer is the same as the size of the screen. In a scaling scenario, the ReceiveTouchView may directly transfer coordinates of a touch point to a scale gesture detector without multiplying the coordinates by a scale factor less than 1.

S4: The touchscreen receives a single-finger movement operation of the user on the album interface at a moment t1+T, and sends coordinates (x2, y2) corresponding to the single-finger movement operation to the touch event receiving layer. The touch event receiving layer forwards the coordinates (x2, y2) to the custom RecyclerView. The recycler view control records the coordinates (x2, y2).

With reference to the descriptions of Example 1 to Example 8, if the coordinate system is established by using the top-left corner of the touch event receiving layer as the origin, with the X axis running horizontally to the right and the Y axis running vertically downward, the coordinates (x1, y1) in S3 and the coordinates (x2, y2) in S4 are both determined with reference to the coordinate system.

S5: The custom RecyclerView calculates a movement distance in a Y-axis direction based on the coordinates (x2, y2) recorded in this cycle and the coordinates (x1, y1) recorded in a previous cycle: dy=y2-y1.

S6: The custom RecyclerView transfers the movement distance dy to the grid form layout manager, the grid form layout manager transfers the movement distance dy to the custom layout manager, and the custom layout manager returns the movement distance dy to the custom RecyclerView.

The grid form layout manager is a native manager of the Android system, and is used to manage a position and a size of an ItemView component in the custom RecyclerView. In a native procedure of the Android system, the custom RecyclerView needs to first send the movement distance dy to the grid form layout manager. However, the grid form layout manager does not have a function of directly returning data to the custom RecyclerView. Therefore, this application provides the custom layout manager. The custom layout manager is used as a bridge between the grid form layout manager and the custom RecyclerView, and plays a role of returning data. In the solution of this application, the grid form layout manager may first transfer the movement distance dy to the custom layout manager, and then the custom layout manager returns the movement distance dy to the custom RecyclerView.

It should be noted that S6 is an optional implementation, and does not limit this application. During actual implementation, the following S7 may be directly performed after S5.

S7: Move the custom RecyclerView by the distance dy.

The custom RecyclerView in S7 is a grid list created during initialization, for example, with a quantity of grid columns shown in FIG. 5. The grid list may be used to display images in an album.

Refer to the descriptions of Example 1 to Example 4. When a single finger of the user slides up on the screen, dy<0, and the custom RecyclerView moves the custom RecyclerView upward by a distance -dy. For example, when a single finger of the user slides up by 300 pixels on the screen, the custom RecyclerView is moved upward by 300 pixels.

Refer to the descriptions of Example 5 to Example 8. When a single finger of the user slides down on the screen, dy>0, and the custom RecyclerView moves the custom RecyclerView downward by the distance dy. For example, when a single finger of the user slides down by 600 pixels on the screen, the custom RecyclerView is moved downward by 600 pixels.

S8: The custom RecyclerView obtains an actual layout position index value LP1 of a first ItemView and an actual layout position index value LP2 of a last ItemView.

Refer to the descriptions of the foregoing embodiment. The movement of the custom RecyclerView by the distance dy may cause a movement of a top edge or a bottom edge of the custom RecyclerView into the screen, resulting in a blank region within the screen. To avoid a blank region between the bottom of the custom RecyclerView and the bottom of the screen or a blank region between the top of the custom RecyclerView and the top of the screen, S8 to S14 need to be performed, to determine whether position correction needs to be performed on the custom RecyclerView.

S9: The custom RecyclerView determines whether the actual layout position index value LP1 points to a first image in the album.

For example, the custom RecyclerView may determine values of the actual layout position index value LP1 of the first ItemView and LPmin=0, to determine whether the actual layout position index value LP1 points to the first image in the album.

If LP1=LPmin, it may be determined that the actual layout position index value LP1 points to the first image in the album, the first row of the album has been reached through sliding, and a top ItemView of the custom RecyclerView cannot be updated with more images with smaller actual AP values. When the custom RecyclerView is moved downward, if the top of the custom RecyclerView is moved into the screen, there may be a blank region between the top of the custom RecyclerView and the top of the screen. To avoid the blank region, the custom RecyclerView performs the following S10, to obtain a movement distance D1 for first position correction through calculation.

If LP1>LPmin, it may be determined that the actual layout position index value LP1 does not point to the first image in the album, the first row of the album has not been reached through sliding, and a top ItemView of the custom RecyclerView may be further updated with more images with smaller actual AP values. The custom RecyclerView performs the following S11.

S10: The custom RecyclerView determines the movement distance D1 based on a coordinate Y1 of the top of the screen and a coordinate y1 of the top of the custom RecyclerView.

The "coordinate y1 of the top of the custom RecyclerView" in S10 is a coordinate of the top of the custom RecyclerView after the movement by the distance dy.

When the single finger slides down, and the actual layout position index value LP1 points to the first image in the album, the custom RecyclerView may calculate the movement distance by using the following relational expression:

D1=Y1-y1, where Y1 represents the coordinate of the top of the screen, and y1 represents the coordinate of the top of the custom RecyclerView.

For example, FIG. 17A, FIG. 17B, FIG. 17C, FIG. 17D, FIG. 17E, and FIG. 17F are used as an example. The coordinate Y1 of the top of the screen=0, the coordinate y1 of the top of the custom RecyclerView=500, and D1=-500. Then, the custom RecyclerView is moved upward by a distance of 500, and a coordinate of the top of the custom RecyclerView is updated to y1'=500-500=0.

S11: The custom RecyclerView determines whether the actual layout position index value LP2 points to a last image in the album.

For example, the custom RecyclerView may determine values of the actual layout position index value LP2 of the last ItemView and LPmax, to determine whether the actual layout position index value LP2 points to the last image in the album.

If LP2=LPmax, it may be determined that the actual layout position index value LP2 points to the last image in the album, a last row of the album has been reached through sliding, and a bottom ItemView of the custom RecyclerView cannot be updated with more images with larger actual AP values. When the custom RecyclerView is moved upward, if the bottom of the custom RecyclerView is moved into the screen, there may be a blank region between the bottom of the custom RecyclerView and the bottom of the screen. To avoid the blank region, the custom RecyclerView performs the following S12, to obtain a movement distance D1 for first position correction through calculation.

If LP2<LPmax, it may be determined that the actual layout position index value LP2 does not point to the last image in the album, the last row of the album has not been reached through sliding, and the bottom ItemView of the custom RecyclerView may be further updated with more images with larger actual AP values. Therefore, first position correction does not need to be performed on the custom RecyclerView, that is, the following S13 is performed.

S12: The custom RecyclerView determines the movement distance D1 based on a coordinate Y2 of the bottom of the screen and a coordinate y2 of the bottom of the custom RecyclerView.

The "coordinate y1 of the bottom of the custom RecyclerView" in S10 is a coordinate of the bottom of the custom RecyclerView after the movement by the distance dy.

When the single finger slides up, and the actual layout position index value LP2 points to the last image in the album, the custom RecyclerView may calculate the movement distance by using the following relational expression: D1=Y2-y2, where Y2 represents the coordinate of the bottom of the screen, and y2 represents the coordinate of the bottom of the custom RecyclerView.

For example, FIG. 14A, FIG. 14B, FIG. 14C, FIG. 14D, FIG. 14E, and FIG. 14F are used as an example. The coordinate Y2 of the bottom of the screen=2400, the coordinate y2 of the bottom of the custom RecyclerView=2200, and D1=200. Then, the custom RecyclerView is moved downward by a distance of 200, and a coordinate of the bottom of the custom RecyclerView is updated to y2'=2200+200=2400.

S13: The custom RecyclerView determines that the movement distance D1=0.

When the actual layout position index value LP1 does not point to the first image in the album, and the actual layout position index value LP2 does not point to the last image in the album, the custom RecyclerView does not need to be moved upward or moved downward. Therefore, the custom RecyclerView determines that the movement distance D1=0.

It should be noted that the foregoing embodiment is described by using an example in which S9 is performed before S11 is performed, but does not constitute a limitation on this application. In an example, S9 may be performed after S11 is performed. In still another example, if dy<0, it indicates that the single finger slides up, and the last image in the album may be reached through sliding, so that it may be determined only whether the actual layout position index value LP2 points to the last image in the album; or if dy>0, it indicates that the single finger slides down, and the first image in the album may be reached through sliding, so that it may be determined only whether the actual layout position index value LP1 points to the first image in the album.

One of S10, S12, and S13 is performed. The movement distance D1 may be obtained through calculation based on S10, S12, or S13. After S10, S12, or S13, the following S14 may be further included.

S14: Move the custom RecyclerView by the movement distance D1 based on the movement distance D1.

It may be understood that if the movement distance D1 is obtained in S10, the current scenario is a single-finger slide-down scenario, D1=Y1-y1<0, and the custom RecyclerView needs to be moved upward. If the movement distance D1 is obtained in S12, the current scenario is a single-finger slide-up scenario, D1=Y2-y2>0, and the custom RecyclerView needs to be moved downward. If the movement distance D1 is obtained in S13, it is equivalent to that first position correction is not performed on the custom RecyclerView.

S15: The custom RecyclerView re-obtains the coordinate y1' of the top of the custom RecyclerView and the coordinate y2' of the bottom of the custom RecyclerView.

It may be understood that if the movement distance D1 is obtained in S10 or S12, the coordinate y1' of the top of the custom RecyclerView and the coordinate y2' of the bottom of the custom RecyclerView are updated, so that y1'#y1, and y2'#y2. If the movement distance D1 is obtained in S13, the coordinate y1' of the top of the custom RecyclerView and the coordinate y2' of the bottom of the custom RecyclerView are not updated, so that y1'=y1, and y2'=y2.

S16: The custom RecyclerView determines whether the coordinate y1' of the top of the custom RecyclerView is greater than the coordinate Y1 of the top of the screen.

If y1'>Y1, it indicates that the top of the custom RecyclerView has slid into the screen. To enable the custom RecyclerView to carry more images with smaller actual LP values, the custom RecyclerView needs to be moved upward, and the following S17 is performed.

If y1'≤Y1, it indicates that the top of the custom RecyclerView has not slid into the screen. Therefore, the custom RecyclerView does not need to be moved upward, and the following S18 is performed.

S17: The custom RecyclerView determines a movement distance D2 based on the coordinate y1' of the top of the custom RecyclerView and the coordinate Y1 of the top of the screen.

For the single-finger slide-down scenario, if y1'>Y1, the custom RecyclerView may calculate, according to a relational expression, a quantity of rows of the custom RecyclerView to be moved upward:

$$s1' = \left\lceil \frac{y1' - Y1}{m} \right\rceil.$$

s1' represents a quantity of rows of the custom RecyclerView planned to be moved upward, m represents a side length of a single ItemView in the custom RecyclerView, Y1 represents the coordinate of the top of the screen, and y1' represents the coordinate of the top of the custom RecyclerView.

Refer to the descriptions of FIG. 16A, FIG. 16B, FIG. 16C, FIG. 16D, FIG. 16E, and FIG. 16F. The first row of the custom RecyclerView may be a middle row of the album. When a single finger of the user slides down, a probability of sliding to the first row of the album is low, so that the quantity s1' of rows does not exceed a quantity of actual movable rows, and the quantity s1' of rows does not need to be corrected. Refer to the descriptions of FIG. 18A, FIG. 18B, FIG. 18C, FIG. 18D, FIG. 18E, FIG. 18F, FIG. 19A, FIG. 19B, FIG. 19C, FIG. 19D, FIG. 19E, and FIG. 19F. The first row of the custom RecyclerView may be a second-to-last row or a third-to-last row of the album. When a single finger of the user slides up, a probability of sliding to the first row of the album is high, so that the quantity s1' of rows exceeds a quantity of actual movable rows, and the quantity s1' of rows may need to be corrected. The quantity of actual movable rows may be determined based on a total quantity of images in the album and an actual AP value of the custom RecyclerView, and is a maximum quantity of rows of Item Views allowed to be added at the top of the custom RecyclerView.

In view of the foregoing problem, an embodiment of this application further provides a solution for correcting the quantity s1' of rows:

$$s2' = \left\lceil \frac{LP1}{g\max} \right\rceil - \left\lceil \frac{LP\min}{g\max} \right\rceil.$$

s2' represents a maximum quantity of rows of the custom RecyclerViews allowed to be moved upward, LPmin points to the first image in the album (for example, LPmin=0), LP1 is a first image to which the custom RecyclerView points, and gmax represents a maximum level of the custom RecyclerView.

The custom RecyclerView may calculate, according to a relational expression, a quantity of rows of the custom RecyclerView finally to be moved upward:

$$s' = \min(s1', s2').$$

s' represents the quantity of rows of the custom RecyclerView finally to be moved upward, and min() is a function for taking a minimum value.

Correspondingly, the custom RecyclerView may determine the movement distance: D2=s'*m = min(s1',s2')*m , where s' represents the quantity of rows of the custom RecyclerView finally to be moved upward, and m represents the side length of a single ItemView in the custom RecyclerView.

In addition, the custom RecyclerView may update the actual adapter position index value of each ItemView according to a relational expression: AP-s'*g, where AP represents an actual adapter position index value of an ItemView, s' represents the quantity of rows of the custom RecyclerView finally to be moved upward, and g represents the level of the custom RecyclerView.

For example, as shown in FIG. 16A, FIG. 16B, FIG. 16C, FIG. 16D, FIG. 16E, and FIG. 16F, y1=500>Y1=0,

$$s1' = \left\lceil \frac{y1 - Y1}{m} \right\rceil = \left\lceil \frac{500 - 0}{400} \right\rceil = 2, \quad s2' = \left\lceil \frac{LP1}{g\max} \right\rceil - \left\lceil \frac{LP\min}{g\max} \right\rceil = \left\lceil \frac{81}{5} \right\rceil - \left\lceil \frac{0}{5} \right\rceil = 17$$ , and s' = min(s1',s2') = min(2,17)=2 . Correspondingly, an upward movement distance of the custom RecyclerView is 400 pixels*2 rows=800 pixels, that is, D2=-800. In addition, the actual adapter position index value of each ItemView may be updated according to the actual AP-6. For example, a first row of actual adapter position index values of the custom RecyclerView are updated from 50, 51, and 52 to 44, 45, and 46.

For another example, as shown in FIG. 18A, FIG. 18B, FIG. 18C, FIG. 18D, FIG. 18E, and FIG. 18F, y1=500>Y1=0, $s1' = \left\lceil \dfrac{y1-Y1}{m} \right\rceil = \left\lceil \dfrac{500-0}{400} \right\rceil = 2$ , $s2' = \left\lceil \dfrac{LP1}{g\,max} \right\rceil - \left\lceil \dfrac{LP\,min}{g\,max} \right\rceil = \left\lceil \dfrac{5}{5} \right\rceil - \left\lceil \dfrac{0}{5} \right\rceil = 1$ , and s'=

min(s1', s2') = min(2,1)=1 . Correspondingly, an upward movement distance of the custom RecyclerView is 400 pixels*1 row=400 pixels, that is, D2=-400. In addition, the actual adapter position index value of each ItemView may be updated according to the actual AP-3. For example, a first row of actual adapter position index values of the custom RecyclerView are updated from 3, 4, and 5 to 0, 1, and 2.

For another example, as shown in FIG. 19A, FIG. 19B, FIG. 19C, FIG. 19D, FIG. 19E, and FIG. 19F, y1=1500>Y1=0, $s1' = \left\lceil \dfrac{y1-Y1}{m} \right\rceil = \left\lceil \dfrac{1500-0}{400} \right\rceil = 4$ , $s2' = \left\lceil \dfrac{LP1}{g\,max} \right\rceil - \left\lceil \dfrac{LP\,min}{g\,max} \right\rceil = \left\lceil \dfrac{10}{5} \right\rceil - \left\lceil \dfrac{0}{5} \right\rceil = 2$ , and s'

= min(s1', s2') = min(4, 2)=2 . Correspondingly, an upward movement distance of the custom RecyclerView is 400 pixels*2 rows=800 pixels, that is, D2=-800. In addition, the actual adapter position index value of each ItemView may be updated according to the actual AP-6. For example, a first row of actual adapter position index values of the custom RecyclerView are updated from 6, 7, and 9 to 0, 1, and 2.

S18: The custom RecyclerView determines whether the coordinate y2' of the bottom of the custom RecyclerView is less than the coordinate Y2 of the bottom of the screen.

If y2'<Y2, it indicates that the bottom of the custom RecyclerView has slid into the screen. To enable the custom RecyclerView to carry more images with larger actual LP values, the custom RecyclerView needs to be moved downward, and the following S 19 is performed.

If y2'≥Y2, it indicates that the bottom of the custom RecyclerView has not slid into the screen. Therefore, the custom RecyclerView does not need to be moved downward, and the following S20 is performed.

S19: The custom RecyclerView determines a movement distance D2 based on the coordinate y2' of the bottom of the custom RecyclerView and the coordinate Y2 of the bottom of the screen.

For the single-finger slide-up scenario, if y2'<Y2, the custom RecyclerView may calculate, according to a relational expression, a quantity of rows of the custom RecyclerView to be moved downward:

$$s1 = \left\lceil \frac{Y2-y2'}{m} \right\rceil .$$

s1 represents a quantity of rows of the custom RecyclerView planned to be moved downward, m represents a side length of a single ItemView in the custom RecyclerView, Y2 represents the coordinate of the bottom of the screen, and y2 represents the coordinate of the bottom of the custom RecyclerView.

Refer to the descriptions of FIG. 13A, FIG. 13B, FIG. 13C, FIG. 13D, and FIG. 13E. A last row of the custom RecyclerView may be a middle row of the album. When a single finger of the user slides up, a probability of sliding to the last row of the album is low, so that the quantity s1 of rows does not exceed a quantity of actual movable rows, and the quantity s1 of rows does not need to be corrected. Refer to the descriptions of FIG. 16A, FIG. 16B, FIG. 16C, FIG. 16D, FIG. 16E, and FIG. 16F. A last row of the custom RecyclerView may be the second-to-last row of the album. When a single finger of the user slides up, a probability of sliding to the last row of the album is high, so that the quantity s 1 of rows exceeds a quantity of actual movable rows, and the quantity s1 of rows may need to be corrected. The quantity of actual movable rows may be determined based on a total quantity of images in the album and an actual AP value of the custom RecyclerView, and is a maximum quantity of rows of Item Views allowed to be added at the bottom of the custom RecyclerView.

In view of the foregoing problem, an embodiment of this application further provides a solution for correcting the quantity s1 of rows:

$$s2 = \left\lceil \frac{LP\,max}{g\,max} \right\rceil - \left\lceil \frac{LP2}{g\,max} \right\rceil .$$

s2 represents a maximum quantity of rows of the custom RecyclerViews allowed to be moved downward, LP2 points to a last image in the album, LPmax is a last image to which the custom RecyclerView points, and gmax represents a maximum level of the custom RecyclerView.

The custom RecyclerView may calculate, according to a relational expression, a quantity of rows of the custom RecyclerView finally to be moved downward:

$$s = \min(s1, s2).$$

s represents the quantity of rows of the custom RecyclerView finally to be moved downward, and min() is a function for taking a minimum value.

Correspondingly, the custom RecyclerView may determine the movement distance: D2=s'*m = min(s1,s2)*m, where s represents the quantity of rows of the custom RecyclerView finally to be moved upward, and m represents the side length of a single ItemView in the custom RecyclerView.

In addition, the custom RecyclerView may update the actual adapter position index value of each ItemView according to a relational expression: AP+s'*g, where s represents the quantity of rows of the custom RecyclerView finally to be moved downward, and g represents a current level of the custom RecyclerView.

For example, as shown in FIG. 13A, FIG. 13B, FIG. 13C, FIG. 13D, and FIG. 13E, y2=2200<Y2=2400,

$$s1 = \left\lceil \frac{Y2 - y2}{m} \right\rceil = \left\lceil \frac{2400 - 2200}{400} \right\rceil = 1, \quad s2 = \left\lceil \frac{LP\,max}{g\,max} \right\rceil - \left\lceil \frac{LP2}{g\,max} \right\rceil = \left\lceil \frac{835}{5} \right\rceil - \left\lceil \frac{305}{5} \right\rceil = 106, \text{ and } s =$$

min(s1, s2) = min(1,106)=1 . Correspondingly, a downward movement distance of the custom RecyclerView is 400 pixels*1 row=400 pixels, that is, D2=400. In addition, the actual adapter position index value of each ItemView may be updated according to the actual AP+3. For example, a first row of actual adapter position index values of the custom RecyclerView are updated from 148, 149, and 150 to 151, 152, and 153.

For another example, as shown in FIG. 15A, FIG. 15B, FIG. 15C, FIG. 15D, FIG. 15E, and FIG. 15F, y2=2200<Y2=2400, $$s1 = \left\lceil \frac{Y2 - y2}{m} \right\rceil = \left\lceil \frac{2400 - 1500}{400} \right\rceil = 3$$

$$s2 = \left\lceil \frac{LP\,max}{g\,max} \right\rceil - \left\lceil \frac{LP2}{g\,max} \right\rceil = \left\lceil \frac{835}{5} \right\rceil - \left\lceil \frac{830}{5} \right\rceil = 1, \text{ and } s = \min(s1, s2) = \min(3,1)=1 .$$ Correspondingly, a downward movement distance of the custom RecyclerView is 400 pixels*1 row=400 pixels, that is, D2=400. In addition, the actual adapter position index value of each ItemView may be updated according to the actual AP+3. For example, a first row of actual adapter position index values of the custom RecyclerView are updated from 466, 467, and 468 to 469, 470, and 471.

S20: The custom RecyclerView determines that a movement distance D2=0.

One of S17, S19, and S20 is performed. The movement distance D2 may be obtained through calculation based on S17, S19, or S20. After S17, S19, or S20, the following S21 may be further included.

S21: Move the custom RecyclerView by the movement distance D2 based on the movement distance D2, and refresh an actual AP and an actual LP of each ItemView in the custom RecyclerView.

If the movement distance D2 is obtained in S17, the current scenario is a single-finger slide-down scenario, and the custom RecyclerView needs to be moved upward. For a calculation manner for the movement distance D2 and a method for refreshing the actual AP and the actual LP, refer to the descriptions of the foregoing S17, and details are not described herein again.

If the movement distance D2 is obtained in S19, the current scenario is a single-finger slide-up scenario, and the custom RecyclerView needs to be moved downward. For a calculation manner for the movement distance D2 and a method for refreshing the actual AP and the actual LP, refer to the descriptions of the foregoing S19, and details are not described herein again.

If the movement distance D2 is obtained in S20, it is equivalent to that the custom RecyclerView is not moved and the actual AP and the actual LP of each ItemView in the custom RecyclerView are not refreshed.

S22: The custom RecyclerView re-obtains an actual layout position index value LP1' of the first ItemView and an actual layout position index value LP2' of the last Item View.

Refer to the descriptions of the foregoing embodiment. If the mobile phone moves the custom RecyclerView downward or upward in S15 to S21, an image corresponding to each ItemView in the custom RecyclerView needs to be refreshed, so that the user visually sees that a position of the image on the screen remains unchanged. Consequently, a last row of a refreshed custom RecyclerView may be the last row of the album, and the top edge or the bottom edge of the custom RecyclerView is located within the screen. To avoid a blank region between the bottom of the custom RecyclerView and the bottom of the screen, S22 to S28 need to be performed, to determine whether position correction needs to be performed again on the custom RecyclerView.

S23: The custom RecyclerView determines whether the actual layout position index value LP1' points to the first image in the album.

If LP1'=LPmin, it may be determined that the actual layout position index value LP1' points to the first image in the album, and the custom RecyclerView performs the following S24, to obtain a movement distance D3 for second position correction through calculation.

If LP1'>LPmin, it may be determined that the actual layout position index value LP1' does not point to the first image in the album, and the custom RecyclerView performs the following S25.

S24: The custom RecyclerView determines the movement distance D3 based on the coordinate Y1 of the top of the screen and a coordinate y1" of the top of the custom RecyclerView.

The coordinate y1" of the top of the custom RecyclerView in S24 is a coordinate of the top of the custom RecyclerView after the movement by the distance D2.

When the single finger slides down, and the actual layout position index value LP1' points to the first image in the album, the custom RecyclerView may calculate the movement distance by using the following relational expression: D3=Y1-y1", where Y1 represents the coordinate of the top of the screen, and y1" represents the coordinate of the top of the custom RecyclerView.

S25: The custom RecyclerView determines whether the actual layout position index value LP2' points to the last image in the album.

If LP2'=LPmax, it may be determined that the actual layout position index value LP2' points to the last image in the album, and the custom RecyclerView performs the following S26, to obtain the movement distance D3 for second position correction through calculation.

If LP2'<LPmax, it may be determined that the actual layout position index value LP2' does not point to the last image in the album, and second position correction does not need to be performed on the custom RecyclerView, that is, the following S27 is performed.

S26: The custom RecyclerView determines the movement distance D3 based on the coordinate Y2 of the bottom of the screen and a coordinate y2" of the bottom of the custom RecyclerView.

The coordinate y1" of the bottom of the custom RecyclerView in S26 is a coordinate of the bottom of the custom RecyclerView after the movement by the distance D2.

When the single finger slides up, and the actual layout position index value LP2' points to the last image in the album, the custom RecyclerView may calculate the movement distance by using the following relational expression: D3=Y2-y2", where Y2 represents the coordinate of the bottom of the screen, and y2 represents the coordinate of the bottom of the custom RecyclerView.

S27: The custom RecyclerView determines that the movement distance D3=0.

One of S24, S26, and S27 is performed. The movement distance D3 may be obtained through calculation based on S24, S26, or S27. After S24, S26, or S27, the following S28 may be further included.

S28: Move the custom RecyclerView by the movement distance D3 based on the movement distance D3.

For a specific implementation of S22 to S28, refer to the descriptions of the foregoing S8 to S14. Details are not described herein again.

S29: The custom RecyclerView notifies a SurfaceFlinger to update an album interface, and then the Surface-Flinger sends the album interface to the display screen for display.

It should be noted that S4 to S29 may be completed within one vertical synchronization (vertical synchronization, Vsync) signal cycle. An example in which a screen refresh rate is 120 Hz is used. The display driver sends a Vsync signal to the SurfaceFlinger every 8.3 milliseconds. When a Vsync signal arrives, if movements, refreshments, and rendering compositions of the recycler view are completed in S4 to S29, a recycler view (that is, a to-be-displayed frame of image) obtained after all the movements and the refreshments are completed may be transferred to the display driver, so that a display updates picture content. When a Vsync signal arrives, if the recycler view has yet not been moved and refreshed, the display continues to display previous picture content.

S30: The custom RecyclerView returns an actual scroll distance D acquired in a cycle T to the custom layout manager, where D=dy+D1+D3. The definition layout manager forwards the actual scroll distance D=dy+D1+D3 acquired in the cycle T to the grid form layout manager.

S31: The grid form layout manager determines, based on actual scroll distances acquired in a plurality of cycles T, that the user operation is an inertial slide operation or a finger-following slide operation.

In an example, the grid form layout manager may send the actual scroll distances acquired in the plurality of cycles T to a native recycler view control. Then, the native recycler view control determines, based on the actual scroll distances acquired in the plurality of cycles T, that the user operation is an inertial slide operation or a finger-following slide operation.

If the actual scroll distances acquired in the plurality of periods T are less than or equal to a preset scroll distance, it indicates that a single-finger slide speed is slow, and the user operation is a finger-following slide operation. Therefore, scrolling display of a large quantity of images does not need to be triggered.

If the actual scroll distances acquired in the plurality of periods T are greater than or equal to a preset scroll distance, it indicates that a single-finger slide speed is high, and the user operation is an inertial slide operation. Therefore, scrolling display of a large quantity of images needs to be triggered. Specifically, the native recycler view control may cause the custom RecyclerView to scroll in a same direction as a single-finger slide direction by a first distance, where the first distance is directly proportional to the actual scroll distances acquired in the plurality of cycles T. In this way, after the user ends the single-finger inertial slide operation, the album interface continues to scroll down by a distance like inertia exists, implementing update of a large quantity of images.

In the foregoing solution, when a single finger of the user slides up and down in the gallery, the custom RecyclerView scrolls in the same direction as the single-finger slide direction. When the top or the bottom of the custom RecyclerView is reached through scrolling, the electronic device moves the entire custom RecyclerView in a direction opposite to the single-finger slide direction, and fills the custom RecyclerView with content again. In this way, the electronic device only needs to fill the moved custom RecyclerView with content, and does not need to create a new row of Item Views at the top or the bottom of the custom RecyclerView and perform size measurement and position calculation again on each ItemView of the custom RecyclerView. Therefore, a data processing procedure is optimized, data processing time during image scrolling in the gallery is shortened, and a frame drop problem is resolved.

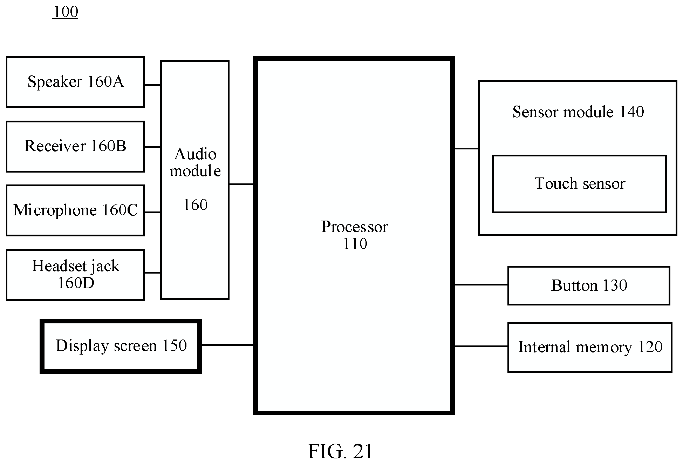

For example, FIG. 21 is a diagram of a hardware structure of an electronic device according to an embodiment of this application.

As shown in FIG. 21, the electronic device 100 may include a processor 110, an internal memory 120, a button 130, a sensor module 140, a display screen 150, an audio module 160, a speaker 160A, a receiver 160B, a microphone 160C, a headset jack 160D, and the like. The sensor module may include a touch sensor.

The processor 110 may be configured to perform the scrolling display method in the foregoing embodiments. The processor 110 may include one or more processing units. For example, the processor 110 may include a central processing unit (central processing unit, CPU), a graphics processing unit (graphics processing unit, GPU), an application processor (application processor, AP), and an image signal processor (image signal processor, ISP).

The internal memory 120 may be configured to store computer-executable program code, and the computer-executable program code includes instructions. The processor 110 runs the instructions stored in the internal memory 120, to perform various functional applications and data processing of the electronic device 100. The internal memory 120 may include a program storage region and a data storage region. The program storage region may store an operating system, an application (application, APP) required by at least one function, for example, a gallery application, and the like. The data storage region may store a configuration file of each APP and data created in a use process of the electronic device 100.

The display screen 150 includes a display panel, and is configured to display each image in the gallery application.

The touch sensor is also referred to as a "touch panel". The touch sensor may be disposed on the display screen 150. The touch sensor and the display screen 150 constitute a touchscreen, also referred to as a "touch control screen". The touch sensor may be configured to detect a touch operation acting on or near the touch sensor. The touch sensor may transfer the detected touch operation to the application processor, to determine a touch event type and provide, via the display screen 150, a visual output related to the touch operation. In some other embodiments, the touch sensor may alternatively be disposed on a surface of the electronic device 100, and is located at a position different from that of the display screen 150.

An embodiment of this application further provides a computer-readable storage medium. The computer-readable storage medium stores computer instructions. When the computer-readable storage medium is run on an electronic device, the electronic device is enabled to perform the method described in the foregoing embodiment. The computer instructions may be stored in the computer-readable storage medium, or transmitted from one computer-readable storage medium to another computer-readable storage medium. The computer-readable storage medium may be any usable medium accessible by a computer, or a data storage device, such as a server or a data center, integrating one or more usable media. The usable medium may be a magnetic medium, an optical medium, a semiconductor medium, or the like.

An embodiment of this application further provides a computer program product. The computer program product includes computer program code. When the computer program code is run on an electronic device, the electronic device is enabled to perform the method in the foregoing embodiments.

The electronic device, the computer-readable storage medium, and the computer program product provided in embodiments of this application are all configured to perform the method provided in the foregoing embodiments. Therefore, for beneficial effects that can be achieved by the electronic device, the computer-readable storage medium, and the computer program product, refer to the beneficial effects corresponding to the method provided above. Details are not described herein again.

In the descriptions of this application, "/" means "or". For example, A/B may indicate A or B. In the descriptions of embodiments of this application, "and/or" is merely used to describe an association relationship between associated objects, and represents that three relationships may exist. For example, A and/or B may represent the following three cases: Only A exists, both A and B exist, and only B exists.

In the specification and the claims of this application, the terms "first", "second", and the like are intended to distinguish between different objects or distinguish between different processing on a same object, and are not used to describe a specific sequence of the objects. For example, a first operation, a second operation, and the like are intended to distinguish between different operations, but do not indicate a specific sequence of the operations. In embodiments of this application, "a plurality of" means two or more.

Through the descriptions of the foregoing implementations, a person skilled in the art may clearly understand that for the purpose of convenient and brief description, only division into the foregoing functional modules is used as an example for description. During actual application, the functions may be allocated to and completed by different functional modules based on a requirement. In other words, an internal structure of the apparatus is divided into different functional modules, to complete all or a part of the functions described above. In addition, functional units in embodiments of this application may be integrated into one processing unit, each of the units may exist alone physically, or two or more units are integrated into one unit. The integrated unit may be implemented in a form of hardware, or may be implemented in a form of a software functional unit.

The foregoing content is merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

**Claims**

1.   A scrolling display method, applied to an electronic device having a display screen, the method comprising:

   displaying, within the display screen, first content that is based on a recycler view, wherein a size of the recycler view is greater than a size of the display screen, a distance between a bottom edge of the display screen and a bottom edge of the recycler view is a first distance, and edges of the recycler view are located outside the display screen;

   receiving, from a user, a first operation of sliding on the display screen by a second distance along a first direction, wherein the first direction is a direction from the bottom edge of the display screen to a top edge of the display screen, and the second distance is greater than the first distance; and

   moving the recycler view by a third distance along a second direction in response to the first operation, and displaying, within the display screen, second content that is based on the recycler view, wherein the second direction is opposite to the first direction, and the third distance is greater than or equal to a difference between the second distance and the first distance.

2.   The method according to claim 1, wherein the recycler view comprises M rows and N columns of item views, and each item view is used to display one image or one table; and
   the first content is a first grid interface, the second content is a second grid interface, and quantities of columns of images in the first grid interface and the second grid interface are the same; or the first content is a first list, the second content is a second list, and quantities of table columns of the first list and the second list are the same.

3.   The method according to claim 2, wherein the item view of the recycler view is used to display an image in an album; and before the recycler view is moved in response to the first operation, and after the recycler view is moved in response to the first operation, a last row of images in the recycler view does not comprise a last image in the album.

4.   The method according to claim 1, wherein before the moving the recycler view by the third distance along the second direction, the method further comprises:
   determining the third distance based on the bottom edge of the recycler view, the bottom edge of the display screen, the second distance, and a side length of an item view in the recycler view.

5.   The method according to any one of claims 1 to 4, wherein the first content is the first grid interface; and before the displaying, within the display screen, the second content that is based on the recycler view, the method further comprises:

   adding a first value to an adapter position AP index value corresponding to each item view in the recycler view, wherein
   the AP value represents a serial number of the image displayed in the item view, and the first value is determined based on the bottom edge of the recycler view, the bottom edge of the display screen, the second distance, the side length of the item view in the recycler view, and a quantity of columns of the first grid interface.

6.  The method according to any one of claims 1 to 5, wherein the distance between the bottom edge of the display screen and the bottom edge of the recycler view is a fourth distance, and the edges of the recycler view are located outside the display screen; and
    the method further comprises:

    receiving, from the user, a second operation of sliding on the display screen by a fifth distance along the first direction, wherein the fifth distance is greater than the fourth distance; and
    moving the recycler view by a sixth distance along the first direction in response to the second operation, and displaying, within the display screen, third content that is based on the recycler view, wherein the sixth distance is equal to the difference between the second distance and the first distance, and the distance between the bottom edge of the display screen and the bottom edge of the recycler view is 0, wherein
    before the recycler view is moved in response to the second operation, and after the recycler view is moved in response to the second operation, the last row of images in the recycler view comprises the last image in the album.

7.  The method according to any one of claims 1 to 5, wherein the distance between the bottom edge of the display screen and the bottom edge of the recycler view is a seventh distance, and the edges of the recycler view are located outside the display screen; and
    the method further comprises:

    receiving, from the user, a third operation of sliding on the display screen by an eighth distance along the first direction, wherein the eighth distance is greater than the seventh distance; and
    moving the recycler view by a ninth distance along the first direction in response to the third operation, and displaying, within the display screen, fourth content that is based on the recycler view, wherein the ninth distance is less than a difference between the eighth distance and the seventh distance, and the distance between the bottom edge of the display screen and the bottom edge of the recycler view is 0, wherein
    before the recycler view is moved in response to the third operation, the last row of images in the recycler view does not comprise the last image in the album; and after the recycler view is moved in response to the third operation, the last row of images in the recycler view comprises the last image in the album.

8.  The method according to claim 7, wherein before the moving the recycler view by the sixth distance along the first direction, the method further comprises:

    determining the sixth distance based on an actual layout position LP value of a last item view of the recycler view, an LP value of the last image in the album, the side length of the item view in the recycler view, and a quantity of columns of the recycler view, wherein
    the LP value represents a position of the item view in the recycler view.

9.  The method according to any one of claims 1 to 5, wherein a distance between the top edge of the display screen and a top edge of the recycler view is a $10^{th}$ distance, and the edges of the recycler view are located outside the display screen; and
    the method further comprises:

    receiving, from the user, a fourth operation of sliding on the display screen by an $11^{th}$ distance along the second direction, wherein the $11^{th}$ distance is greater than the $10^{th}$ distance; and
    moving the recycler view by a $12^{th}$ distance along the first direction in response to the fourth operation, and displaying, within the display screen, fifth content that is based on the recycler view, wherein the $12^{th}$ distance is greater than or equal to a difference between the $11^{th}$ distance and the $10^{th}$ distance, wherein
    before the recycler view is moved in response to the fourth operation, and after the recycler view is moved in response to the fourth operation, a first row of images in the recycler view does not comprise a first image in the album.

10. The method according to claim 9, wherein before the moving the recycler view by the $12^{th}$ distance along the first direction, the method further comprises:
    determining the $12^{th}$ distance based on the top edge of the recycler view, the top edge of the display screen, the $11^{th}$

distance, and the side length of the item view in the recycler view.

11. The method according to claim 9, wherein the fifth content is a third grid interface; and before the displaying, within the display screen, the second content that is based on the recycler view, the method further comprises:

subtracting a second value from the adapter position AP index value corresponding to each item view in the recycler view, wherein
the AP value represents the serial number of the image displayed in the item view, and the second value is determined based on the top edge of the recycler view, the top edge of the display screen, the 11$^{th}$ distance, the side length of the item view in the recycler view, and a quantity of columns of the third grid interface.

12. The method according to any one of claims 1 to 6, wherein a distance between the top edge of the display screen and a top edge of the recycler view is a 13$^{th}$ distance, and the edges of the recycler view are located outside the display screen; and
the method further comprises:

receiving, from the user, a fifth operation of sliding on the display screen by a 14$^{th}$ distance along the second direction, wherein the 14$^{th}$ distance is greater than the 13$^{th}$ distance; and
moving the recycler view by a 15$^{th}$ distance along the second direction in response to the fifth operation, and displaying, within the display screen, sixth content that is based on the recycler view, wherein the 15$^{th}$ distance is equal to a difference between the 14$^{th}$ distance and the 13$^{th}$ distance, and the distance between the top edge of the display screen and the top edge of the recycler view is 0, wherein
before the recycler view is moved in response to the fifth operation, and after the recycler view is moved in response to the fifth operation, a first row of images in the recycler view comprises a first image in the album.

13. The method according to any one of claims 1 to 6, wherein a distance between the top edge of the display screen and a top edge of the recycler view is a 16$^{th}$ distance, and the edges of the recycler view are located outside the display screen; and
the method further comprises:

receiving, from the user, a sixth operation of sliding on the display screen by a 17$^{th}$ distance along the second direction, wherein the 17$^{th}$ distance is greater than the 16$^{th}$ distance; and
moving the recycler view by an 18$^{th}$ distance along the second direction in response to the sixth operation, and displaying, within the display screen, seventh content that is based on the recycler view, wherein the 18$^{th}$ distance is less than a difference between the 17$^{th}$ distance and the 16$^{th}$ distance, and the distance between the top edge of the display screen and the top edge of the recycler view is 0, wherein
before the recycler view is moved in response to the sixth operation, a first row of images in the recycler view does not comprise a first image in the album; and after the recycler view is moved in response to the sixth operation, the first row of images in the recycler view comprises the first image in the album.

14. The method according to claim 13, wherein before the moving the recycler view by the 18$^{th}$ distance along the second direction, the method further comprises:
determining the 18$^{th}$ distance based on an actual layout position LP value of a first item view of the recycler view, an LP value of the first image in the album, the side length of the item view in the recycler view, and a quantity of columns of the recycler view, wherein the LP value represents a position of the item view in the recycler view.

15. An electronic device, wherein the electronic device comprises one or more processors and a memory; and
the memory is coupled to the one or more processors, the memory is configured to store computer program code, the computer program code comprises computer instructions, and the one or more processors invoke the computer instructions to enable the electronic device to perform the method according to any one of claims 1 to 14.

16. A chip system, wherein the chip system is used in an electronic device, the chip system comprises one or more processors, and the one or more processors are configured to invoke computer instructions to enable the electronic device to perform the method according to any one of claims 1 to 14.

17. A computer-readable storage medium, wherein the computer-readable storage medium comprises instructions, and when the instructions are run on an electronic device, the electronic device is enabled to perform the method according to any one of claims 1 to 14.

Application layer

| Camera | Gallery | Native RecyclerView |

| Grid form layout manager | Scale gesture detection interface |

Application framework layer

| WMS | AMS | MediaCodec |

| SurfaceFlinger | Screen management service | Resource manager |

System library

| Surface manager | Media Library | Image processing library | Android runtime |

| Two-dimensional graphics engine | Three-dimensional graphics processing library |

Kernel layer

| Display driver | Touch driver | Audio driver |

FIG. 1

| Touch driver | Native RecyclerView | Grid form layout manager |
|---|---|---|

Sample based on a cycle T

— Slide operation →

— Coordinates →

Calculate a movement distance and a movement direction

Determine whether the recycler view can continue scrolling

Yes

Transfer a scroll parameter →

Perform size measurement, content filling, and position calculation on each image view from a first row to a last row created

Calculate an actual scroll distance

← Scroll distance —

← Return a result (the scroll distance and the movement direction)

FIG. 2

FIG. 3

Application
layer

| Gallery | Camera | Screen manager | Touch event receiving layer control |

| Recycler view control | Scale gesture detection interface | Custom layout manager |

| Grid form layout manager | Custom RecyclerView |

Application
framework
layer

| WMS | AMS | MediaCodec |

| SurfaceFlinger | Screen management service | Resource manager |

System
library

| Surface manager | Media Library | Image processing library | Android runtime |

| Two-dimensional graphics engine | Three-dimensional graphics processing library |

Kernel layer

| Display driver | Touch driver | Audio driver |

FIG. 4

21 columns

Three columns

Seven rows

Display region

50 rows

Custom RecyclerView

400

Enenlarged view of a display region

| Item view | Item view | Item view |
|---|---|---|
| Item view | Item view | Item view |
| Item view | Item view | Item view |
| Item view | Item view | Item view |
| Item view | Item view | Item view |
| Item view | Item view | Item view |
| Item view | Item view | Item view |

| Image view | Image view | Image view |
|---|---|---|
| Image view | Image view | Image view |
| Image view | Image view | Image view |
| Image view | Image view | Image view |
| Image view | Image view | Image view |
| Image view | Image view | Image view |
| Image view | Image view | Image view |

One item view includes one image view

One image view is used to display one image

FIG. 5

FIG. 6

FIG. 7

Status bar

08:00
Thursday, October 1
Sunny,
5°C

Videos   Sports and health   Weather   Browser

Settings   AI life   Travel   Gallery

Camera   Contacts   Phone   Messages

FIG. 8A

Action bar

Album   +   ⋮

🔍 Photo, people, places...

Camera

All photos   Videos

Photos   Album   Memories   Creations

FIG. 8B   Foot bar

‹ Camera

One grid

FIG. 8C

TO FIG. 8D

43

CONT. FROM FIG. 8C

FIG. 8D

FIG. 8E

FIG. 8F

FIG. 9A

Slide with inertia to update an interface

FIG. 9B

Continue updating the interface

FIG. 9C

TO FIG. 9D

5G 5G

< Camera

5G 5G

< Camera

5G 5G

< Camera

Finger-
following
slide-up

Finger-
following
slide-up

d5

350

d4

350

350

FIG. 9D

FIG. 9E

FIG. 9F

EP 4 756 595 A1

FIG. 10

FIG. 11

EP 4 756 595 A1

Resolution of a screen: 1200 in
width*2400 in height
Bottom of a custom RecyclerView:
y2=2800
Move a finger upward by: dy= −300

← Actual AP →

Top

| | | | |
|---|---|---|---|
| 148 | 149 | 150 | |
| 151 | 152 | 153 | |
| 154 | 155 | 156 | |
| 157 | 158 | 159 | |
| 160 | 161 | 162 | |
| 163 | 164 | 165 | |
| 166 | 167 | 168 | |
| 169 | 170 | | |
| 172 | 173 | 174 | |
| 175 | 176 | 177 | |
| 178 | 179 | 180 | |

X

Y        Bottom

dy=−300

FIG. 12A

Move the Custom RecyclerView upward
by: 300
Bottom of the custom RecyclerView:
y2=2500
LP2=300<LPmax=835, so that D1=0
  LP1=246

← Actual AP →

| | | | |
|---|---|---|---|
| | 148 | 149 | 150 |
| | 151 | 152 | 153 |
| | 154 | 155 | 156 |
| | 157 | 158 | 159 |
| | 163 | 164 | 165 |
| | 166 | 167 | 168 |
| | 169 | 170 | 171 |
| | 172 | 173 | 174 |
| | 175 | 176 | 177 |
| | 178 | 179 | 180 |

Not
visible
to
users

X

Y        LP2=300

TO FIG. 12C

FIG. 12B

Because a distance between the top of the custom RecyclerView and a top of the screen and a distance between the bottom of the custom RecyclerView and a bottom of the screen are both greater than or equal to 0, position correction is not needed, and D2=D3=0.

Not visible to users

Final movement distance dy+D1+D3= −300.
Refresh content displayed on the screen.

← Actual AP →

| | 148 | 149 | 150 | |
| | 151 | 152 | 153 | |
| | 154 | 155 | 156 | |
| | 157 | 158 | 159 | |

X

| | 163 | 164 | 165 | |
| | 166 | 167 | 168 | |
| | 169 | 170 | 171 | |
| | 172 | 173 | 174 | |
| | 175 | 176 | 177 | |
| | 178 | 179 | 180 | |

Y

FIG. 12C

← Actual AP →

| | 148 | 149 | 150 | |
| | 151 | 152 | 153 | |
| | 154 | 155 | 156 | |
| | 157 | 158 | 159 | |

X

| | 163 | 164 | 165 | |
| | 166 | 167 | 168 | |
| | 169 | 170 | 171 | |
| | 172 | 173 | 174 | |
| | 175 | 176 | 177 | |
| | 178 | 179 | 180 | |

Y

FIG. 12D

← Actual AP →

| | 148 | 149 | 150 | |
| | 151 | 152 | 153 | |
| | 154 | 155 | 156 | |
| | 157 | 158 | 159 | |

| | 163 | 164 | 165 | |
| | 166 | 167 | 168 | |
| | 169 | 170 | 171 | |
| | 172 | 173 | 174 | |
| | 175 | 176 | 177 | |
| | 178 | 179 | 180 | |

Y

FIG. 12E

EP 4 756 595 A1

Bottom of a custom RecyclerView: y2=2500
Move a finger upward by: dy=−300

← Actual AP →

Top

| | | | |
|---|---|---|---|
| 148 | 149 | 150 | |
| 151 | 152 | 153 | |
| 154 | 155 | 156 | |
| 157 | 158 | 159 | |
| | | | |
| 163 | 164 | 165 | |
| 166 | 1⁊7 | 168 | |
| 169 | 170 | | |
| 172 | 173 | 174 | |
| 175 | 176 | 177 | |
| 178 | 179 | 180 | |

X

Y

Bottom

dy=−300

FIG. 13A

Move the Custom RecyclerView upward by: 300
Bottom of the custom RecyclerView: y2=2200
LP2=300<LPmax=835, so that D1=0.

LP1=246   ← Actual AP →

| | | | | |
|---|---|---|---|---|
| ▨ | 148 | 149 | 150 | | Not visible to users |
| | 151 | 152 | 153 | |
| | 154 | 155 | 156 | |
| | 157 | 158 | 159 | |
| | 160 | 161 | 162 | |
| | 163 | 164 | 165 | |
| | 166 | 167 | 168 | |
| | 169 | 170 | 171 | |
| | 172 | 173 | 174 | |
| | 175 | 176 | 177 | |
| | 178 | 179 | 180 | ▨ |

X

Y

LP2=300

TO FIG. 13C

FIG. 13B

A current scenario is a slide-up, and y2=2200<2400.
Move the custom RecyclerView downward by one row, that is, D2=400,and refresh an index and content of each item.

LP2=305<LPmax=835, that is, a last row of the custom RecyclerView is not a final row, position correction is not needed, and D3=0.

Final movement distance dy+D1+D3=−300, and Refresh content displayed on the screen.

← Actual AP →

| | 151 | 152 | 153 | |
| | 154 | 155 | 156 | |
| | 157 | 158 | 159 | |
| | 160 | 161 | 162 | |
| | 163 | 164 | 165 | → X |
| | 166 | 167 | 168 | |
| | 169 | 170 | 171 | |
| | 172 | 173 | 174 | |
| | 175 | 176 | 177 | |
| | 178 | 179 | 180 | |
| | 181 | 182 | 183 | |

Y

FIG. 13C

LP1=251 ←

← Actual AP →

Not visible to users

| | 151 | 152 | 153 | |
| | 154 | 155 | 156 | |
| | 157 | 158 | 159 | |
| | 160 | 161 | 162 | |
| | 163 | 164 | 165 | → X |
| | 166 | 167 | 168 | |
| | 169 | 170 | 171 | |
| | 172 | 173 | 174 | |
| | 175 | 176 | 177 | |
| | 178 | 179 | 180 | |
| | 181 | 182 | 183 | |

Y          LP2=305

FIG. 13D

← Actual AP →

| | 151 | 152 | 153 | |
| | 154 | 155 | 156 | |
| | 157 | 158 | 159 | |
| | 160 | 161 | 162 | |
| | 163 | 164 | 165 | → X |
| | 166 | 167 | 168 | |
| | 169 | 170 | 171 | |
| | 172 | 173 | 174 | |
| | 175 | 176 | 177 | |
| | 178 | 179 | 180 | |
| | 181 | 182 | 183 | |

Y

FIG. 13E

EP 4 756 595 A1

EP 4 756 595 A1

Resolution of a screen: 1200 in width*2400 in height
Bottom of a custom RecyclerView: y2=2500
Move a finger upward by: dy=−1000

← Actual AP →

| | 466 | 467 | 468 | |
| | 469 | 470 | 471 | |
| | 472 | 473 | 474 | |
| | 475 | 476 | 477 | |
| | 481 | 482 | 483 | |
| | 484 | 485 | 486 | |
| | 487 | 488 | | |
| | 490 | 491 | 492 | |
| | 493 | 494 | 495 | |
| | 496 | 497 | 498 | |

X

Y

dy=−1000

**FIG. 14A**

Move the Custom RecyclerView upward by: 1000
Bottom of the custom RecyclerView: y2=1500

LP1=776

← Actual AP →

| | 466 | 467 | 468 | |
| | 469 | 470 | 471 | |
| | 472 | 473 | 474 | |
| | 475 | 476 | 477 | |
| | 478 | 479 | 480 | |
| | 481 | 482 | 483 | |
| | 484 | 485 | 486 | |
| | 487 | 488 | 489 | |
| | 490 | 491 | 492 | |
| | 493 | 494 | 495 | |
| | 496 | 497 | 498 | |

X

Y

LP2=830

**FIG. 14B**

LP2=830<LPmax=835, a last row of the custom RecyclerView is not a final row, position correction is not needed, and D1=0.

← Actual AP →

| | 466 | 467 | 468 | | |
| | 469 | 470 | 471 | | Not |
| | 472 | 473 | 474 | | visible |
| | 475 | 476 | 477 | | to users |
| | 478 | 479 | 480 | | |
| | 481 | 482 | 483 | | |
| | 484 | 485 | 486 | | |
| | 487 | 488 | 489 | | |
| | 490 | 491 | 492 | | |
| | 493 | 494 | 495 | | |
| | 496 | 497 | 498 | | |

X

Y

~
TO FIG. 14D

**FIG. 14C**

A current scenario is a slide-up, and
y2=1500<2400.
The custom RecyclerView needs to be
moved downward by three rows, but the
bottom can currently be moved downward
by only one row, so that D2=400. Refresh
an index and content of each item.

LP2=LPmax=835, a last
row of the custom
RecyclerView is a final
row, position correction
is needed, and D3=500.

Final movement distance
dy+D1+D3=−500.
Refresh content
displayed on the screen.

← Actual AP →

| | 469 | 470 | 471 | |
| | 472 | 473 | 474 | |
| | 475 | 476 | 477 | |
| | 478 | 479 | 480 | |
| | 481 | 482 | 483 | |
| | 484 | 485 | 486 | |
| | 487 | 488 | 489 | |
| | 490 | 491 | 492 | |
| | 493 | 494 | 495 | |
| | 496 | 497 | 498 | |
| | 499 | 500 | | |

Not
visible
to
users

X

Y

FIG. 14D

LP1=781

← Actual AP →

| | 469 | 470 | 471 | |
| | 472 | 473 | 474 | |
| | 475 | 476 | 477 | |
| | 478 | 479 | 480 | |
| | 481 | 482 | 483 | |
| | 484 | 485 | 486 | |
| | 487 | 488 | 489 | |
| | 490 | 491 | 492 | |
| | 493 | 494 | 495 | |
| | 496 | 497 | 498 | |
| | 499 | 500 | | |

X

Y

LP2=835

FIG. 14E

← Actual AP →

| | 469 | 470 | 471 | |
| | 472 | 473 | 474 | |
| | 475 | 476 | 477 | |
| | 478 | 479 | 480 | |
| | 481 | 482 | 483 | |
| | 484 | 485 | 486 | |
| | 487 | 488 | 489 | |
| | 490 | 491 | 492 | |
| | 493 | 494 | 495 | |
| | 496 | 497 | 498 | |
| | 499 | 500 | | |

X

Y

FIG. 14F

EP 4 756 595 A1

**FIG. 15A**

Resolution of a screen: 1200 in width*2400 in height
Bottom of a custom RecyclerView: y2=2500
Move a finger upward by: dy=−300

Actual AP — Top

| 469 | 470 | 471 |
| 472 | 473 | 474 |
| 475 | 476 | 477 |
| 478 | 479 | 480 |

X

| 484 | 485 | 486 |
| 487 | 488 | 489 |
| 490 | 491 | |
| 493 | 494 | 495 |
| 496 | 497 | 498 |
| 499 | 500 | |

Y   Bottom   dy=−300

**FIG. 15B**

Move the Custom RecyclerView upward by: 300
Bottom of the custom RecyclerView: y2=2200
$LP1=781$

Actual AP

| 469 | 470 | 471 |
| 472 | 473 | 474 |
| 475 | 476 | 477 |
| 478 | 479 | 480 |
| 481 | 482 | 483 |
| 484 | 485 | 486 |

X

| 487 | 488 | 489 |
| 490 | 491 | 492 |
| 493 | 494 | 495 |
| 496 | 497 | 498 |
| 499 | 500 | |

dy=200

Y   $LP2=835$

**FIG. 15C**

$LP2=LPmax=835$, a last row of the custom RecyclerView is a final row, position correction is needed, and $D1=200$.

$LP1=781$   Actual AP

| 469 | 470 | 471 |
| 472 | 473 | 474 |
| 475 | 476 | 477 |
| 478 | 479 | 480 |
| 481 | 482 | 483 |

Not visible to users

X

| 484 | 485 | 486 |
| 487 | 488 | 489 |
| 490 | 491 | 492 |
| 493 | 494 | 495 |
| 496 | 497 | 498 |
| 499 | 500 | |

Y   $LP2=835$

TO FIG. 15D

Because a distance between the top of the current custom RecyclerView and a top of the screen and a distance between the bottom of the current custom RecyclerView and a bottom of the screen are both greater than or equal to 0, position correction is not needed, and D2=D3=0.

Final movement distance dy+D1+D3=−100.
Refresh content displayed on the screen.

← Actual AP →

| | 469 | 470 | 471 | |
| | 472 | 473 | 474 | |
| | 475 | 476 | 477 | |
| | 478 | 479 | 480 | |
| | 481 | 482 | 483 | |
| | 484 | 485 | 486 | |
| | 487 | 488 | 489 | |
| | 490 | 491 | 492 | |
| | 493 | 494 | 495 | |
| | 496 | 497 | 498 | |
| | 499 | 500 | | |

X

Y

FIG. 15D

Not visible to users

← Actual AP →

| | 469 | 470 | 471 | |
| | 472 | 473 | 474 | |
| | 475 | 476 | 477 | |
| | 478 | 479 | 480 | |
| | 481 | 482 | 483 | |
| | 484 | 485 | 486 | |
| | 487 | 488 | 489 | |
| | 490 | 491 | 492 | |
| | 493 | 494 | 495 | |
| | 496 | 497 | 498 | |
| | 499 | 500 | | |

X

Y

FIG. 15E

← Actual AP →

| | 469 | 470 | 471 | |
| | 472 | 473 | 474 | |
| | 475 | 476 | 477 | |
| | 478 | 479 | 480 | |
| | 481 | 482 | 483 | |
| | 484 | 485 | 486 | |
| | 487 | 488 | 489 | |
| | 490 | 491 | | |
| | 493 | 494 | 495 | |
| | 496 | 497 | 498 | |
| | 499 | 500 | | |

X

Y

FIG. 15F

EP 4 756 595 A1

Resolution of a screen: 1200 in width*2400 in height
Top of a custom RecyclerView: y1=−100
Move a finger downward by: dy=600

Move the Custom RecyclerView downward by: 600
Top of the custom RecyclerView: y1=500

LP1=81>LPmin=0, that is, a first row of the custom RecyclerView is not an initial row, position correction is not needed, and D1=0.

Top
← Actual AP →
X
dy=600
Y
Bottom

| 50 | 51 | 52 |
| 53 | 54 | 55 |
| 56 | 57 | 58 |
| 59 | 60 | 61 |
| 62 | 63 | |
| 65 | 66 | 67 |
| 71 | 72 | 73 |
| 74 | 75 | 76 |
| 77 | 78 | 79 |
| 80 | 81 | 82 |

FIG. 16A

LP1=81
← Actual AP →
X
Y
LP2=135

| 50 | 51 | 52 |
| 53 | 54 | 55 |
| 56 | 57 | 58 |
| 59 | 60 | 61 |
| 62 | 63 | 64 |
| 65 | 66 | 67 |
| 68 | 69 | 70 |
| 71 | 72 | 73 |
| 74 | 75 | 76 |
| 77 | 78 | 79 |
| 80 | 81 | 82 |

FIG. 16B

LP1=81
← Actual AP →
X
Y
Not visible to users
LP2=135

| 50 | 51 | 52 |
| 53 | 54 | 55 |
| 56 | 57 | 58 |
| 59 | 60 | 61 |
| 62 | 63 | 64 |
| 65 | 66 | 67 |
| 68 | 69 | 70 |
| 71 | 72 | 73 |
| 74 | 75 | 76 |
| 77 | 78 | 79 |
| 80 | 81 | 82 |

TO FIG. 16D

FIG. 16C

A current scenario is a slide-down, and y1=500>0.
Move the custom RecyclerView upward by two rows, that is, D2=−800, and refresh an index and content of each item.

LP1=71>LPmin=0, that is, the first row of the custom RecyclerView is not the initial row, position correction is not needed, and D3=0.

Final movement distance dy+D1+D3=600.
Refresh content displayed on the screen.

LP1=71

← Actual AP →

| 44 | 45 | 46 |
| 47 | 48 | 49 |
| 50 | 51 | 52 |
| 53 | 54 | 55 |
| 56 | 57 | 58 |
| 59 | 60 | 61 |
| 62 | 63 | 64 |
| 65 | 66 | 67 |
| 68 | 69 | 70 |
| 71 | 72 | 73 |
| 74 | 75 | 76 |

X

Y

LP2=125

LP1=71

← Actual AP →

| 44 | 45 | 46 |
| 47 | 48 | 49 |
| 50 | 51 | 52 |
| 53 | 54 | 55 |
| 56 | 57 | 58 |
| 59 | 60 | 61 |
| 62 | 63 | 64 |
| 65 | 66 | 67 |
| 68 | 69 | 70 |
| 71 | 72 | 73 |
| 74 | 75 | 76 |

X

Y

LP2=125

Not visible to users

| 44 | 45 | 46 |
| 47 | 48 | 49 |
| 50 | 51 | 52 |
| 53 | 54 | 55 |
| 56 | 57 | 58 |
| 59 | 60 | 61 |
| 62 | 63 | 64 |
| 65 | 66 | 67 |
| 68 | 69 | 70 |
| 71 | 72 | 73 |
| 74 | 75 | 76 |

X

Y

FIG. 16D

FIG. 16E

FIG. 16F

EP 4 756 595 A1

Resolution of a screen:
1200 in width*2400 in height
Top of a custom RecyclerView:
y1=−100
Move a finger downward by:
dy=600

Move the Custom RecyclerView
downward by: 600
Top of the custom
RecyclerView: y1=500

LP1=LPmin=0, a first row of
the custom RecyclerView is an
initial row, position correction
is needed, and D1=−500.

FIG. 17A

FIG. 17B

FIG. 17C

TO FIG. 17D

EP 4 756 595 A1

Because a distance between the top of the current custom RecyclerView and a top of the screen and a distance between the bottom of the current custom RecyclerView and a bottom of the screen are both greater than or equal to 0, position correction is not needed, and D2=D3=0.

Final movement distance dy+D1+D3=100.
Refresh content displayed on the screen.

← Actual AP →

← Actual AP →

| 0 | 1 | 2 |
| 3 | 4 | 5 |
| 6 | 7 | 8 |
| 9 | 10 | 11 |
| 12 | 13 | 14 |
| 15 | 16 | 17 |
| 18 | 19 | 20 |
| 21 | 22 | 23 |
| 24 | 25 | 26 |
| 27 | 28 | 29 |
| 30 | 31 | 32 |

| 0 | 1 | 2 |
| 3 | 4 | 5 |
| 6 | 7 | 8 |
| 9 | 10 | 11 |
| 12 | 13 | 14 |
| 15 | 16 | 17 |
| 18 | 19 | 20 |
| 21 | 22 | 23 |
| 24 | 25 | 26 |
| 27 | 28 | 29 |
| 30 | 31 | 32 |

Not visible to users

| 0 | 1 | 2 |
| 3 | 4 | 5 |
| 6 | 7 | 8 |
| 9 | 10 | 11 |
| 12 | 13 | 14 |
| 15 | 16 | 17 |
| 18 | 19 | 20 |
| 21 | 22 | 23 |
| 24 | 25 | 26 |
| 27 | 28 | 29 |
| 30 | 31 | 32 |

X
Y

FIG. 17D

FIG. 17E

FIG. 17F

EP 4 756 595 A1

Resolution of a screen: 1200 in width*2400 in height
Top of a custom RecyclerView: y1=−100
Move a finger downward by: dy=600

← Actual AP →  Top

X

| 3 | 4 | 5 |
| 6 | 7 | 8 |
| 9 | 10 | 11 |
| 12 | 13 | 14 |
| 15 | 16 | 17 |
| 18 | 19 | 20 |

| 24 | 25 | 26 |
| 27 | 28 | 29 |
| 30 | 31 | 32 |
| 33 | 34 | 35 |

dy=600

Y   Bottom

FIG. 18A

Move the Custom RecyclerView downward by: 600
Top of the custom RecyclerView: y1=500

LP1=5

← Actual AP →   X

| 3 | 4 | 5 |
| 6 | 7 | 8 |
| 9 | 10 | 11 |
| 12 | 13 | 14 |
| 15 | 16 | 17 |
| 18 | 19 | 20 |
| 21 | 22 | 23 |
| 24 | 25 | 26 |
| 27 | 28 | 29 |
| 30 | 31 | 32 |
| 33 | 34 | 35 |

Y   LP2=59

FIG. 18B

LP1=5>LPmin=0, that is, a first row of the custom RecyclerView is not an initial row, position correction is not needed, and D1=0.

LP1=5

← Actual AP →   X

| 3 | 4 | 5 |
| 6 | 7 | 8 |
| 9 | 10 | 11 |
| 12 | 13 | 14 |
| 15 | 16 | 17 |
| 18 | 19 | 20 |
| 21 | 22 | 23 |
| 24 | 25 | 26 |
| 27 | 28 | 29 |
| 30 | 31 | 32 |
| 33 | 34 | 35 |

Not visible to users

Y   LP2=59

TO FIG. 18D

FIG. 18C

A current scenario is a slide-down, and y1=500>0.
The custom RecyclerView needs to be moved upward by two rows, but the top can currently be moved upward by only one row, so that D2=−400. Refresh an index and content of each item.

LP1=LPmin=0, the first row of the custom RecyclerView is the initial row, position correction is needed, and D3=−100.

Final movement distance dy+D1+D3=500.
Refresh content displayed on the screen.

← Actual AP →

LP1=0

X

| 0 | 1 | 2 |
| 3 | 4 | 5 |
| 6 | 7 | 8 |
| 9 | 10 | 11 |
| 12 | 13 | 14 |
| 15 | 16 | 17 |
| 18 | 19 | 20 |
| 21 | 22 | 23 |
| 24 | 25 | 26 |
| 27 | 28 | 29 |
| 30 | 31 | 32 |

Y

LP2=54

FIG. 18D

← Actual AP →

LP1=0

X

Not visible to users

| 0 | 1 | 2 |
| 3 | 4 | 5 |
| 6 | 7 | 8 |
| 9 | 10 | 11 |
| 12 | 13 | 14 |
| 15 | 16 | 17 |
| 18 | 19 | 20 |
| 21 | 22 | 23 |
| 24 | 25 | 26 |
| 27 | 28 | 29 |
| 30 | 31 | 32 |

Y

LP2=54

FIG. 18E

X

| 0 | 1 | 2 |
| 3 | 4 | 5 |
| 6 | 7 | 8 |
| 9 | 10 | 11 |
| 12 | 13 | 14 |
| 15 | 16 | 17 |
| 18 | 19 | 20 |
| 21 | 22 | 23 |
| 24 | 25 | 26 |
| 27 | 28 | 29 |
| 30 | 31 | 32 |

Y

FIG. 18F

EP 4 756 595 A1

62

Resolution of a screen: 1200 in width*2400 in height
Top of a custom RecyclerView: y1=−100
Move a finger downward by: dy=1600

Move the Custom RecyclerView downward by: 1600
Top of the custom RecyclerView: y1=1500

LP1=10>LPmin=0, that is, a first row of the custom RecyclerView is not an initial row, position correction is not needed, and D1=0.

FIG. 19A

FIG. 19B

TO FIG. 19D
FIG. 19C

CONT. FROM FIG. 19C

A current scenario is a slide-down, and $y1=1500>0$. The custom RecyclerView needs to be moved upward by four rows, but the top can currently be moved upward by only two rows, so that $D2=-800$. Refresh an index and content of each item.

$LP1=0$

←Actual AP→

| 0 | 1 | 2 |
| 3 | 4 | 5 |
| 6 | 7 | 8 |
| 9 | 10 | 11 |
| 15 | 16 | 17 |
| 18 | 19 | 20 |
| 21 | 22 | 23 |
| 24 | 25 | 26 |
| 27 | 28 | 29 |
| 30 | 31 | 32 |

X

Y

FIG. 19D

$LP1=LPmin=0$, the first row of the custom RecyclerView is the initial row, position correction is needed, and $D3=-700$.

$LP1=0$ ←Actual AP→

| 0 | 1 | 2 |
| 3 | 4 | 5 |
| 6 | 7 | 8 |
| 9 | 10 | 11 |
| 12 | 13 | 14 |
| 15 | 16 | 17 |
| 18 | 19 | 20 |
| 21 | 22 | 23 |
| 24 | 25 | 26 |
| 27 | 28 | 29 |
| 30 | 31 | 32 |

X

Not visible to users

$LP2=54$

Y

FIG. 19E

Final movement distance $dy+D1+D3=800$. Refresh content displayed on the screen.

| 0 | 1 | 2 |
| 3 | 4 | 5 |
| 6 | 7 | 8 |
| 9 | 10 | 11 |
| 12 | 13 | 14 |
| 15 | | 17 |
| 18 | 19 | 20 |
| 21 | 22 | 23 |
| 24 | 25 | 26 |
| 27 | 28 | 29 |
| 30 | 31 | 32 |

X

Y

FIG. 19F

EP 4 756 595 A1

FIG. 20A

Touch driver · Gallery application · Touch event receiving layer · Custom RecyclerView · Grid form layout manager · Custom layout manager

S1: Sample based on a cycle T

S2: Click operation — Open — Initialize — Initialize — Initialize — Initialize

S3: Click operation — Coordinates (x1, y1) — Coordinates (x1, y1) — Record the coordinates (x1, y1)

T

S4: Movement operation — Coordinates (x2, y2) — Coordinates (x2, y2) — Record the coordinates (x2, y2)

S5: Calculate a distance dy=y2−y1

S6: Distance dy — Distance dy — Distance dy

S7: Move by the distance dy

TO FIG. 20B

S8: Obtain an actual layout position index value LP1 of a first ItemView and an actual layout position index value LP2 of a last ItemView

S9

Whether the LP1 points to a first image in an album

No

S11

Whether the LP2 points to a last image in the album

No

Yes

S10: Determine a movement distance D1 ($D1 \neq 0$) based on a coordinate Y1 of a top of a screen and a coordinate y1 of a top of the custom RecyclerView

Yes

S12: Determine a movement distance D1 ($D1 \neq 0$) based on a coordinate Y2 of a bottom of a screen and a coordinate y2 of a bottom of the custom RecyclerView

S13: D1=0

S14: Move by the distance D1

FIG. 20B

EP 4 756 595 A1

S15: Re-obtain a coordinate y1' of the top of the custom RecyclerView and a coordinate y2' of the bottom of the custom RecyclerView

S16

S18

y1'>Y1   No   y2'<Y2   No

Yes              Yes

S17: Determine a movement distance D2 based on y1' and Y1

S19: Determine a movement distance D2 based on y2' and Y2

S20: D2=0

S21: Move by the distance D2, and refresh an actual AP and an actual LP of each ItemView in the custom RecyclerView

FIG. 20C

EP 4 756 595 A1

S22: Re-obtain an actual layout position index value LP1' of the first ItemView and an actual layout position index value LP2' of the last ItemView

S23

Whether the LP1' points to the first image in the album

No

S25

Whether the LP2' points to the last image in the album

No

Yes

Yes

S24: Determine a movement distance D3 (D3≠0) based on the coordinate Y1 of the top of the screen and a coordinate y1" of the top of the custom RecyclerView

S26: Determine a movement distance D3 (D3≠0) based on the coordinate Y2 of the bottom of the screen and a coordinate y2" of the bottom of the custom RecyclerView

S27: D3=0

S28: Move by the distance D3

FIG. 20D

EP 4 756 595 A1

S29: Notify a SurfaceFlinger to update an album interface

S30: Actual scroll distance D=dy+D1+D3

D

S31: Determine, based on actual scroll distances acquired in a plurality of cycles, that a user operation is an inertial slide operation or a finger-following slide operation

FIG. 20E

EP 4 756 595 A1

100

```
┌─────────────────┐
│  Speaker 160A   │───┐
└─────────────────┘   │
┌─────────────────┐   │ ┌──────────┐      ┌─────────────┐    ┌──────────────────────────┐
│  Receiver 160B  │───┤ │  Audio   │      │             │    │  Sensor module 140       │
└─────────────────┘   ├─│ module   │──────│             │────│  ┌────────────────────┐  │
┌─────────────────┐   │ │          │      │             │    │  │   Touch sensor     │  │
│ Microphone 160C │───┤ │   160    │      │  Processor  │    │  └────────────────────┘  │
└─────────────────┘   │ └──────────┘      │     110     │    └──────────────────────────┘
┌─────────────────┐   │                   │             │    ┌──────────────────────────┐
│  Headset jack   │───┘                   │             │────│     Button 130           │
│     160D        │                       │             │    └──────────────────────────┘
└─────────────────┘                       │             │    ┌──────────────────────────┐
┌─────────────────┐                       │             │────│   Internal memory 120    │
│ Display screen  │───────────────────────│             │    └──────────────────────────┘
│      150        │                       └─────────────┘
└─────────────────┘
```

FIG. 21

## INTERNATIONAL SEARCH REPORT

| International application No. |
|---|
| **PCT/CN2024/109301** |

| A. | CLASSIFICATION OF SUBJECT MATTER |
|---|---|

G06F 3/0488(2022.01)i

According to International Patent Classification (IPC) or to both national classification and IPC

| B. | FIELDS SEARCHED |
|---|---|

Minimum documentation searched (classification system followed by classification symbols)

IPC: G06F

Documentation searched other than minimum documentation to the extent that such documents are included in the fields searched

Electronic data base consulted during the international search (name of data base and, where practicable, search terms used)

CNABS, CNTXT, WOTXT, EPTXT, USTXT, CNKI, IEEE, VEN: 布局容器, 滑动, 滚动, 回收器视图, 拖动, 显示, 显示屏, 边缘, 方向, 距离, 移动, 差值, 表项, 宫格, 位置, 编号, 列, 行, Layout container, slide, scroll, RecyclerView, drag, display, screen, edge, direction, distance, movement, difference, entry, uterine, location, number, column, row

| C. | DOCUMENTS CONSIDERED TO BE RELEVANT |
|---|---|

| Category* | Citation of document, with indication, where appropriate, of the relevant passages | Relevant to claim No. |
|---|---|---|
| A | CN 109976609 A (NUBIA TECHNOLOGY CO., LTD.) 05 July 2019 (2019-07-05) description, paragraphs [0045]-[0156], and figures 1-6 | 1-17 |
| A | CN 115421641 A (CHONGQING CHANG'AN AUTOMOBILE CO., LTD.) 02 December 2022 (2022-12-02) entire document | 1-17 |
| A | US 2022035491 A1 (BOE TECHNOLOGY GROUP CO., LTD.) 03 February 2022 (2022-02-03) entire document | 1-17 |
| A | WO 2022151934 A1 (HUAWEI TECHNOLOGIES CO., LTD.) 21 July 2022 (2022-07-21) entire document | 1-17 |

☐ Further documents are listed in the continuation of Box C.     ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **20 October 2024** | **24 October 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2024/109301**

| Patent document cited in search report | | | Publication date (day/month/year) | Patent family member(s) | | | Publication date (day/month/year) |
|---|---|---|---|---|---|---|---|
| CN | 109976609 | A | 05 July 2019 | None | | | |
| CN | 115421641 | A | 02 December 2022 | None | | | |
| US | 2022035491 | A1 | 03 February 2022 | WO | 2020228765 | A1 | 19 November 2020 |
| | | | | US | 11675479 | B2 | 13 June 2023 |
| WO | 2022151934 | A1 | 21 July 2022 | EP | 4258111 | A1 | 11 October 2023 |
| | | | | EP | 4258111 | A4 | 12 June 2024 |
| | | | | US | 2024061569 | A1 | 22 February 2024 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311873935